(19) 

Europäisches Patentamt
European Patent Office
Office européen des brevets

(11) **EP 4 571 990 A1**

(12) **EUROPEAN PATENT APPLICATION**
published in accordance with Art. 153(4) EPC

(43) Date of publication:
**18.06.2025 Bulletin 2025/25**

(21) Application number: **23852610.7**

(22) Date of filing: **09.08.2023**

(51) International Patent Classification (IPC):
*H01M 50/449* (2021.01)  *H01G 9/00* (2006.01)
*H01G 9/02* (2006.01)  *H01G 9/035* (2006.01)
*H01G 9/145* (2006.01)  *H01G 11/52* (2013.01)
*H01G 11/58* (2013.01)  *H01G 11/84* (2013.01)
*H01M 10/0566* (2010.01)  *H01M 50/403* (2021.01)
*H01M 50/414* (2021.01)  *H01M 50/42* (2021.01)
*H01M 50/434* (2021.01)  *H01M 50/443* (2021.01)
*H01M 50/451* (2021.01)  *H01M 50/457* (2021.01)
*H01M 50/46* (2021.01)  *H01M 50/463* (2021.01)
*H01M 50/489* (2021.01)  *H01M 50/494* (2021.01)

(52) Cooperative Patent Classification (CPC):
**H01G 9/00; H01G 9/02; H01G 9/035; H01G 9/145;
H01G 11/52; H01G 11/58; H01G 11/84;
H01M 10/0566; H01M 50/403; H01M 50/414;
H01M 50/42; H01M 50/434; H01M 50/443;
H01M 50/449; H01M 50/451;** (Cont.)

(86) International application number:
**PCT/JP2023/029167**

(87) International publication number:
**WO 2024/034648 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 JP 2022128526**

(71) Applicant: **Asahi Kasei Battery Separator
Corporation
Tokyo 100-0006 (JP)**

(72) Inventors:
• **KIDENA, Mayu
Tokyo 100-0006 (JP)**

• **NAKAGAWA, Yoshitaka
Tokyo 100-0006 (JP)**
• **OKADA, Masaaki
Tokyo 100-0006 (JP)**
• **MURATA, Yasuhiro
Tokyo 100-0006 (JP)**
• **UCHIDA, Yuki
Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **SEPARATOR FOR POWER STORAGE DEVICE, PRODUCTION METHOD THEREFOR, AND
POWER STORAGE DEVICE**

(57)  The present invention provides a separator for a power storage device having a porous substrate and a thermoplastic polymer-containing layer, wherein the thermoplastic polymer-containing layer has a dot-like pattern structure, and 50% or more of all the dots are dots having voids at two or more locations within the plane of one dot.

Fig. 1

**(Cont. next page)**

(52) Cooperative Patent Classification (CPC): (Cont.)
**H01M 50/457; H01M 50/46; H01M 50/463;
H01M 50/489; H01M 50/494;** Y02E 60/10

**Description**

FIELD

The present invention relates to a separator for an electricity storage device, a method for producing the same, and an electricity storage device.

BACKGROUND

An electricity storage devices such as non-aqueous electrolyte solution batteries have been undergoing active development in recent years. Non-aqueous electrolyte solution batteries such as lithium ion batteries usually have a microporous membrane provided as a separator between positive and negative electrodes. Such separators have the function of preventing direct contact between the positive and negative electrodes, while also allowing ions to pass through the electrolyte solution that is held in the microporous membrane.

A separator must exhibit conventionally required safety features including rapid termination of battery reaction upon abnormal heating (fuse characteristics), and shape maintenance even at high temperatures to prevent the danger of the positive electrode substance and negative electrode substance undergoing direct reaction (short circuit characteristics), as well as increased adhesiveness with the electrodes from the viewpoint of obtaining uniform charge-discharge current and inhibiting lithium dendrites.

In addition to safety and adhesiveness with the electrodes, coating patterns such as coated or stacked functional layers to the microporous membrane, and dots have been investigated to impart various functions to the separators.

For example, PTL 1 describes dots as coating patterns, but does not describe voids inside the dots.

[CITATION LIST]

[PATENT LITERATURE]

[PTL 1] WO 2014/017651 A

SUMMARY

[TECHNICAL PROBLEM]

When a separator that includes a microporous membrane as the separator substrate and an adhesive layer coated or stacked on at least one side of the microporous membrane is used for cell assembly of an electricity storage device, the injection property may become impaired during the electrolyte injection step.

To improve the injectability of the electrolyte solution, preferred is a conventional separator for an electricity storage device, including a microporous membrane as a substrate and an adhesive layer formed in a dot-shaped pattern on the substrate. However, in a conventional separator for an electricity storage device, comprising a microporous membrane as the substrate and an adhesive layer formed in a dot-shaped pattern on the substrate, improvement in the adhesive force with the electrodes and ion permeability are in a trade-off relationship, making it difficult to achieve both.

In view of the above problems, it is an object of the present invention to provide a separator that improves ion permeability while satisfactorily maintaining electrode adhesion in dry and wet states.

Each electrode adhesion in dry and wet states of the separator refers to the adhesion between the separator and the electrode in the absence and presence of an electrolyte solution.

[SOLUTION TO PROBLEM]

The present inventors have intensively studied and found that the above problems can be solved by using a separator for an electricity storage device with the following configuration, thereby completing the present invention.

Thus, the present invention is as follows.

[Item 1]

A separator for an electricity storage device, comprising:

a porous substrate, and
a thermoplastic polymer-containing layer, wherein

the thermoplastic polymer-containing layer has a dot-shaped pattern structure, and
dots with two or more points of voids inside the plane of one dot account for 50% or more of all dots.

[Item 2]

The separator for an electricity storage device according to item 1, comprising:

the porous substrate,
an inorganic filler-containing layer formed on at least one surface of the porous substrate, and
the thermoplastic polymer-containing layer formed on the surface of the inorganic filler-containing layer.

[Item 3]

The separator for an electricity storage device according to item 1, comprising:

the porous substrate,
an inorganic filler-containing layer formed on both surfaces of the porous substrate, and
the thermoplastic polymer-containing layer formed on the surface of the inorganic filler-containing layer.

[Item 4]

The separator for an electricity storage device according to any one of items 1 to 3, wherein when an average particle size $D_{50}$ of the thermoplastic polymer contained in the thermoplastic polymer-containing layer is $D_P$ , and an average particle size $D_{50}$ of the inorganic filler contained in the inorganic filler-containing layer is $D_F$ , $0.6 \leq D_P /D_F \leq 2$.

[Item 5]

The separator for an electricity storage device according to any one of items 1 to 4, wherein the thermoplastic polymer does not penetrate into the inside of the inorganic filler-containing layer.

[Item 6]

The separator for an electricity storage device according to any one of items 1 to 5, wherein the adhesive strength D1 as measured after stacking the thermoplastic polymer-containing layer with a positive electrode and pressing under 1 MPa at 100°C for 30 seconds is 0.1 N/m or more and 20 N/m or less, and
the adhesive strength D2 as measured after stacking the thermoplastic polymer-containing layer with a negative electrode and pressing under 1 MPa at 100°C for 30 seconds is 0.1 N/m or more and 20 N/m or less.

[Item 7]

The separator for an electricity storage device according to any one of items 1 to 6, wherein the adhesive strength W1 as measured after stacking the thermoplastic polymer-containing layer with a positive electrode in the presence of an electrolyte solution, leaving to stand for 12 hours, and pressing under 0.5 MPa at 45°C for 30 minutes is 0.1 N/m or more and 20 N/m or less, and
the adhesive strength W2 as measured after stacking the thermoplastic polymer-containing layer with a negative electrode in the presence of an electrolyte solution, leaving to stand for 12 hours, and pressing under 0.5 MPa at 45°C for 30 minutes is 0.1 N/m or more and 20 N/m or less.

[Item 8]

The separator for an electricity storage device according to any one of items 1 to 7, wherein the adhesive strength W3 as measured after stacking the thermoplastic polymer-containing layer with a positive electrode in the presence of an electrolyte solution, leaving to stand for 12 hours, and pressing under 1 MPa at 90°C for 1 minute is 0.1 N/m or more and 20 N/m or less, and
the adhesive strength W4 as measured after stacking the thermoplastic polymer-containing layer with a negative electrode in the presence of an electrolyte solution, leaving to stand for 12 hours, and pressing 1 MPa at 90°C for 1 minute is 0.1 N/m or more and 20 N/m or less.

[Item 9]

The separator for an electricity storage device according to any one of items 1 to 8, wherein the thermoplastic polymer constituting the thermoplastic polymer-containing layer has at least two glass transition temperatures,

at least one of the glass transition temperatures is within a range of 20°C or lower, and
at least one of the glass transition temperatures is within a range of 30°C or higher.

[Item 10]

The separator for an electricity storage device according to any one of items 1 to 9, wherein the thermoplastic polymer-containing layer contains a copolymer including a monomer unit of a (meth)acrylic acid ester monomer.

[Item 11]

The separator for an electricity storage device according to any one of any one of items 1 to 10, which forms a symmetrical layer structure with respect to the porous substrate.

[Item 12]

A method for producing a separator for an electricity storage device, comprising the steps of:

preparing a porous substrate, and
applying a slurry containing a thermoplastic polymer onto at least one surface of the porous substrate to form a thermoplastic polymer-containing layer,
a contact angle of the slurry with respect to the coated surface of the thermoplastic polymer being 20° or more and 80° or less, and
drying the slurry while applying a tension of 0.008 N/mm or more and 0.150 N/mm or less after applying the slurry containing the thermoplastic polymer onto at least one surface of the porous substrate.

[Item 13]

An electricity storage device comprising a positive electrode, a negative electrode, the separator for an electricity storage device according to any one of items 1 to 11, and a non-aqueous electrolyte solution.

[Item 14]

The electricity storage device according to item 13, wherein when the adhesive force between the separator for an electricity storage device and the positive electrode is Ad1, and the adhesive force between the separator for an electricity storage device and the negative electrode is Ad2, $0.1 \leq Ad1/Ad2 \leq 15$.

[ADVANTAGEOUS EFFECTS OF INVENTION]

According to the present invention, it is possible to provide a separator that improves ion permeability while satisfactorily maintaining electrode adhesion in dry and wet states.
According to the present invention, it is also possible to provide a separator with excellent handleability.
Further, a battery including the separator of the present invention has excellent cycle characteristics and rate characteristics.

BRIEF DESCRIPTION OF DRAWINGS

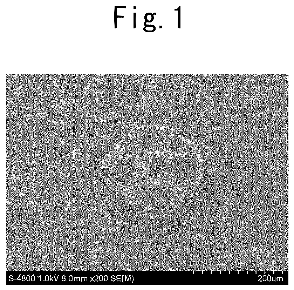

FIG. 1 is an example showing the inside the plane of one dot of a thermoplastic polymer-containing layer of a separator for an electricity storage device of the present invention.
FIG. 2a is a diagram showing a layer structure of a cross-section of the separator for an electricity storage device of the present invention.
FIG. 2b is a diagram showing a layer structure of a cross-section of the separator for an electricity storage device of the present invention.

FIG. 3 is an example showing a selected area of a porous layer for carrying out binarization processing with respect to an inorganic filler-containing layer (porous layer) in the present embodiment.

FIG. 4 is an example showing a visual field area U of the selected area of FIG. 3 with respect to the inorganic filler-containing layer in the present embodiment.

FIG. 5 is an example showing an image after Gusian Blur processing with respect to the inorganic filler-containing layer in the present embodiment.

FIG. 6 is an example showing a luminance histogram of the image in FIG. 5 and a method for determining a threshold when carrying out binarization processing with respect to the inorganic filler-containing layer in the present embodiment.

FIG. 7 is an example showing an image after binarization processing with respect to the inorganic filler-containing layer in the present embodiment.

DESCRIPTION OF EMBODIMENTS

Hereinafter, embodiments for carrying out the invention (hereinafter referred to as "present embodiment") will be described in detail. It is to be understood, incidentally, that the invention is not limited to the embodiment described below and may incorporate various modifications within the scope of the gist thereof.

The characteristic values mentioned in the present embodiment are, unless otherwise noted, values measured in a manner understood by those skilled in the art to be mentioned in or equivalent to those mentioned in the item of [EXAMPLES].

In the following description, the upper limit or lower limit of a numerical range described in stages may be replaced with the upper limit or lower limit of another numerical range described in stages. In the following description, the upper or lower limit of a certain numerical range may be replaced with a value mentioned in Examples. Further, with regard to the term "step" in the following description, not only an independent step but also a step that cannot be clearly distinguished from other steps can be included in this term as long as the function of that "step" is achieved.

<Separator for Electricity Storage Device>

The separator for an electricity storage device according to the present embodiment (hereinafter also referred to simply as "separator") comprises: a porous substrate (hereinafter also referred to simply as "substrate"), and

a thermoplastic polymer-containing layer, wherein
the thermoplastic polymer-containing layer has a dot-shaped pattern structure, and
dots with two or more points of voids inside the plane of one dot account for 50% or more of all dots.

(Dot-Shaped Pattern of Thermoplastic Polymer-Containing Layer)

The thermoplastic polymer-containing layer according to the present embodiment has a dot-shaped pattern structure.

The term "dot-shaped" means that there are portions including the thermoplastic polymer and portions including no thermoplastic polymer on the substrate, the portions including the thermoplastic polymer being present as islands. The dot-shaped pattern structure means that the dots are arranged regularly.

The thermoplastic polymer-containing portions of the thermoplastic polymer-containing layer may also be independent.

In the present embodiment, the dot-shaped pattern of the thermoplastic polymer-containing layer was optimized so as to satisfy that dots with two or more points of voids (exposed portions) inside the plane of one dot account for 50% or more of all dots, thereby improving adhesion efficiency with the electrodes, resulting in a separator having adhesive force in dry and wet states (adhesive force with the electrodes) at a higher level than before while suppressing inhibition of the permeability of the electrolyte solution and also having improved wettability of the electrolyte solution to the dot surface (electrolyte injectability in one aspect), and thus both adhesion and injectability were achieved.

Since the separator exhibits both adhesion and injectability, it also contributes to productivity of electricity storage devices including the separator.

Having two or more points of voids inside the plane of one dot means that there are portions the thermoplastic polymer and portions including no thermoplastic polymer on the substrate, and there are two or more portions including the thermoplastic polymer inside where the portions including the thermoplastic polymer are present as islands.

It is preferable that the coated surface of the thermoplastic polymer is exposed in the voids present inside the plane of the dot according to the present embodiment, and in a cross-section perpendicular to the coated surface, the difference in height between the voids present inside the plane of the dot and the height of the portion outside the plane of the dot where no thermoplastic polymer-containing layer is present (the coated surface of the thermoplastic polymer in one aspect) is 100 nm or less. In this case, in the aspect in which the thermoplastic polymer-containing layer is formed on a porous substrate, the "coated surface of the thermoplastic polymer" refers to the surface of the porous substrate on which the thermoplastic polymer-containing layer is formed. In the aspect in which an inorganic filler-containing layer is provided on the surface of a porous substrate mentioned later and a thermoplastic polymer-containing layer is provided on the surface of the inorganic filler-containing layer, the "coated surface of the thermoplastic polymer" refers to the surface of the inorganic filler-containing layer on which the thermoplastic polymer-containing layer is formed.

The height of the void portion in the present disclosure is the length in the direction perpendicular to the coated surface of the thermoplastic polymer.

In one aspect, in a height profile measured by a laser microscope with respect to the plane of the thermoplastic polymer-containing layer, it is preferable that the difference between the height of the void portion and the height of the portion (the coated surface of the thermoplastic polymer) outside the plane of the dot where the thermoplastic polymer-containing layer is not present is 100 nm or less.

The difference in height between the voids present inside the plane of the dots and the portions (the coated surface of the thermoplastic polymer) where no thermoplastic polymer-containing layer is present outside the plane of the dots is calculated by the following method.

When the thermoplastic polymer-containing layer plane is observed from the top using a confocal laser microscope (OLS5000 SA F, manufactured by Olympus Corporation), the portion is selected to include the voids present inside the plane of the dots and the areas outside the plane of the dots where the thermoplastic polymer-containing layer does not exist (the coated surface of the thermoplastic polymer), and the height profiles of the voids and the thermoplastic polymer coated surface are measured and calculated.

The length of the void present inside the plane of the dot in the present embodiment (the diameter of the void portion in one aspect) is the length in the direction horizontal to the coated surface of the thermoplastic polymer, and is calculated by the following method.

One dot is photographed using a microscope (model: VHX-7000, manufactured by Keyence Corporation) so that the entire dot is included in one field of view. The maximum area measurement in the measurement mode is selected to measure the area of each void that exists inside the plane of one dot. This measurement is carried out on five randomly selected dots, and the average area of all the measured voids is taken, and the void is approximately regarded as a circle, and the diameter of the void is calculated by applying the following formula.

$$\text{Length (μm) of void portion} = (\text{average area of void/pi})^{0.5} \times 2 \quad \cdots \text{Formula}$$

The diameter of the void portion according to the present embodiment is preferably 1 μm or more and 100 μm or less.

The presence of voids inside the plane of one dot allows the swelling of the thermoplastic polymer particles to be uniform inside the dot, which is preferable from the viewpoint of battery characteristics such as cycle characteristics, and it is more preferable that two or more points of voids are present.

By providing two or more points of voids inside the plane of each dot, a separator with an excellent balance between adhesion to the electrode and ion permeability is obtained.

It is preferable that the thermoplastic polymer particles are continuous inside each dot.

In the present disclosure, "continuous" refers to the presence of portions where particles are adjacent to each other and integrated.

By making the thermoplastic polymer particles continuous, the bondability between the binder particles is improved, and the anchor effect when the binder particles are bonded to an electrode is enhanced, which is preferable from the viewpoint of improving the adhesion. Even if a force is applied to peel the electrode from the separator, when the thermoplastic polymer particles are continuous, the force applied to the substrate during peeling is dispersed in the planar direction, making the electrode less likely to peel off, which is preferable from the viewpoint of improving the adhesion.

In one aspect, the separator for an electricity storage device according to the present embodiment is a separator for an electricity storage device, comprising:

a porous substrate,
an inorganic filler-containing layer formed on at least one surface of the porous substrate, and
a thermoplastic polymer-containing layer on the surface of the inorganic filler-containing layer.

In one aspect, the separator for an electricity storage device according to the present embodiment is a separator for an electricity storage device, comprising:

a porous substrate,
an inorganic filler-containing layer formed on both surfaces of the porous substrate, and
a thermoplastic polymer-containing layer on the surface of the inorganic filler-containing layer.

The separator according to the present embodiment may have an inorganic filler-containing layer on one or both surfaces of the porous substrate, and may optionally have a thermoplastic polymer-containing layer on one or both surfaces of the inorganic filler-containing layer.

In one aspect, the separator according to the present embodiment may have an inorganic filler-containing layer between the porous substrate and the thermoplastic polymer-containing layer.

In the separator according to the present embodiment, it is preferable that the inorganic filler-containing layer and the thermoplastic polymer-containing layer are present on at least one of the substrate surfaces, and it is more preferable that the inorganic filler-containing layer is present on both surfaces of the porous substrate, since this can prevent cell heat generation and inhibit deterioration of battery performance even when the separator is placed in a high-temperature environment (for example, about 60°C) for a long period of time (for example, about 6 weeks).

It is more preferable that the thermoplastic polymer-containing layer is provided on both surfaces of the substrate since this inhibits distortion of the cell and improves the cycle performance.

In one aspect, the separator for an electricity storage device according to the present embodiment is a separator for an electricity storage device that forms a symmetrical layer structure with respect to the substrate.

In this case, "symmetrical layer structure" refers to the case where a thermoplastic polymer-containing layer is present on both surfaces of a porous substrate, or an inorganic filler-containing layer and a thermoplastic polymer-containing layer are present on both surfaces of a porous substrate, and the structures, compositions or arrangements constituting the inorganic filler-containing layer and the thermoplastic polymer-containing layer are the same on both surfaces of the substrate. The arrangement of the thermoplastic polymer-containing layer includes a dot-shaped pattern structure.

When the separator has a symmetrical layer structure, the adhesion balance between both surfaces based on the substrate is satisfactory, which is preferable.

The separator according to the present embodiment may have an asymmetric layer structure on both sides with respect to the substrate, from the viewpoint of efficiently exerting the effects of the present embodiment. In other words, the separator according to the present embodiment only needs to have a thermoplastic polymer-containing layer having a predetermined dot-shaped pattern structure on at least one surface (one side) of both surfaces of the substrate, and on the other surface, the presence or absence and the structure, composition or arrangement of an inorganic filler-containing layer and a thermoplastic polymer-containing layer can be determined as long as the effects of the present embodiment are not impaired.

In one aspect, the separator for an electricity storage device according to the present embodiment is a separator for an electricity storage device in which the thermoplastic polymer does not penetrate into the inside of the inorganic filler-containing layer.

In the separator according to the present embodiment, it is preferable from the viewpoint of the battery resistance if the thermoplastic polymer does not penetrate into the inside of the inorganic filler-containing layer.

In this case, "the thermoplastic polymer does not penetrate into the inside of the inorganic filler-containing layer" means that the particle size of the thermoplastic polymer is larger than the pore size of the inorganic filler and the thermoplastic polymer cannot penetrate into the inorganic filler-containing layer, and the thermoplastic polymer is present only on the surface of the inorganic filler-containing layer.

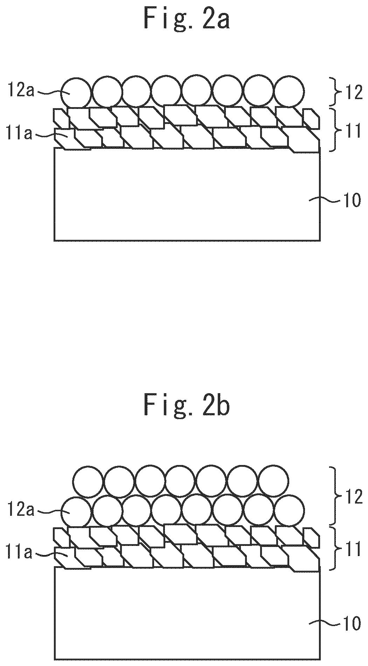

FIG. 2 is a diagram showing a layer structure of a cross-section of a separator in which a porous substrate 10 is disposed as a bottom surface, an inorganic filler-containing layer 11 is disposed thereon, and a thermoplastic polymer-containing layer 12 is disposed on the inorganic filler-containing layer 11. The inorganic filler-containing layer 11 and the thermoplastic polymer-containing layer 12 are formed by stacking an inorganic filler 11a and a thermoplastic polymer 12a, respectively.

FIG. 2a and FIG. 2b show a structure having one thermoplastic polymer-containing layer and a structure having two thermoplastic polymer-containing layers, respectively. Of course, the thermoplastic polymer-containing layer may be a single layer or multiple layers.

The state where the thermoplastic polymer is present only on the surface of the inorganic filler-containing layer means a state where the thermoplastic polymer is stacked with the surface of the inorganic filler-containing layer as the base, as shown in FIG. 2.

More preferably, "the thermoplastic polymer does not penetrated into the inside of the inorganic filler-containing layer" refers to a case where the proportion T of pores having an area within a range of 0.001 $\mu m^2$ to 0.05 $\mu m^2$ to the pores having an area of 0.001 $\mu m^2$ or more in the inorganic filler-containing layer is 80% or more, and the average particle size $D_{50}$ of the thermoplastic polymer having a higher glass transition temperature (a glass transition temperature of 30°C or higher in one aspect) among the thermoplastic polymers contained in the thermoplastic polymer-containing layer is 0.10

μm or more and 0.80 μm or less, and the SD value of the thermoplastic polymer as shown in the following formula is 20% or less of the average particle size $D_{50}$ of the thermoplastic polymer.

$$\text{SD value (nm)} = (D_{84} - D_{16})/2 \quad \cdots \text{Formula}$$

The particle size of the thermoplastic polymer with a cumulative frequency of 50% is defined as $D_{50}$, the particle size of the thermoplastic polymer with a cumulative frequency of 16% is defined as $D_{16}$, and the particle size of the thermoplastic polymer with a cumulative frequency of 84% is defined as $D_{84}$.

$D_{50}$, $D_{16}$ and $D_{84}$ are calculated by the following method.

The particle size distribution and median diameter of the thermoplastic polymer can be measured using a laser particle size distribution measuring device (Microtrac MT3300EX, manufactured by Nikkiso Co., Ltd.). If necessary, the particle size distribution of the thermoplastic polymer can be adjusted using the particle size distribution of water or a binder polymer as a baseline. The particle size of the thermoplastic polymer with a cumulative frequency of 50% is defined as $D_{50}$, the particle size of the thermoplastic polymer with a cumulative frequency of 16% is defined as $D_{16}$, and the particle size of the thermoplastic polymer with a cumulative frequency of 84% is defined as $D_{84}$. The area of the pores in the inorganic filler-containing layer and the ratio T of the pores having an area within a range of 0.001 $\mu m^2$ to 0.05 $\mu m^2$ can be determined by the method described in the Examples below.

(Swelling Degree of Thermoplastic Polymer with Electrolyte Solution)

In the present embodiment, it is preferable that the thermoplastic polymer has swellability with the electrolyte solution from the viewpoint of battery characteristics such as cycle characteristics, and from the viewpoint of wet electrode adhesion described above.

In order to enhance the ion permeability, increase the bulk strength in a state of intimate contact with the electrode surface, and improve the adhesion, the swelling degree of the thermoplastic polymer with the electrolyte solution is preferably 1.5 to 20 times, more preferably 2 to 15 times, still more preferably 6 to 12 times, and particularly preferably 7 to 10 times.

The swelling degree of the thermoplastic polymer with the electrolytic solution in the present embodiment can be adjusted, for example, by changing the monomer components to be polymerized and the charge ratio of each monomer.

<Measurement of Swelling Degree of Thermoplastic Polymer>

The material used in the thermoplastic polymer-containing layer is vacuum-dried at a temperature below its melting point for 12 hours to completely remove the solvent, thus obtaining a dried material for the uniform diffusion layer. The mass of about 0.5 g of the resulting dried product was weighed and defined as a pre-immersion mass (WA). This dried product was placed in a 50 mL vial together with 15 g of an electrolyte solution of ethylene carbonate (EC):ethyl methyl carbonate (EMC) = 1:2 (volume ratio) containing 1 mol/L $LiPF_6$ and 1% by weight vinylene carbonate at 25°C, and after immersion for 72 hours, the sample was removed and wiped with a towel paper, and immediately thereafter, the mass was measured and defined as the mass after immersion (WB).

The swelling degree of the thermoplastic polymer-containing layer in an electrolyte solution is calculated according to the following formula.

$$\text{Swelling degree (times)} = \text{WB/WA}$$

In the above formula, if the material of the uniform diffusion layer does not swell or dissolve in the electrolyte solution, the swelling degree will be 1 time.

In one aspect of the production process of the separator according to the present embodiment, when the thermoplastic polymer-containing layer provided as the adhesive layer has a dot-shaped pattern structure, the separator can have a plurality of voids of a certain size inside the dots. The number and ratio of voids inside one dot of the thermoplastic polymer-containing layer can be adjusted within an appropriate range by controlling the contact angle of the adhesive coating solution with the substrate or inorganic filler layer on which the adhesive layer is provided, and the drying tension in the drying step of the step of coating the adhesive coating solution onto the substrate or inorganic filler layer.

By controlling the contact angle of the adhesive coating solution with respect to the applied surface of the thermoplastic polymer and the tension during drying, two or more points of voids can be formed inside the plane of the dot, thereby improving the ion permeability while maintaining satisfactory adhesion.

The presence of voids inside the plane of the dots allows the swelling of the adhesive layer to be uniform inside the dots, inhibiting clogging of the separator and improving the cycle performance of the battery.

The lower limit of the number of voids inside the plane of the dot is preferably 2 or more, more preferably 3 or more, still more preferably 4 or more, and particularly preferably 5 or more. If the dots have a certain number of voids or more inside the plane, the battery resistance is lowered, gas can escape more easily, electrolyte can be easily injected, and heat is not easily trapped, thereby improving safety. The upper limit of the number of voids inside the plane of the dot is usually 10 or less, from the viewpoint of improving the adhesion to the electrode.

<Number of Voids (Exposed Portions) Inside Plane of Dots>

The number of exposed portions of the inorganic filler-containing layer or substrate surface contained inside the plane of each dot in the thermoplastic polymer-containing layer is measured using a scanning electron microscope (SEM) (model: S-4800, manufactured by Hitachi, Ltd.). After osmium is vapor-deposited onto a separator sample, the sample is observed under the conditions of an acceleration voltage of 1.0 kV and a magnification of 50 times. This observation is carried out multiple times, and 100 dots showing the entire image are randomly selected, and the number of voids (exposed portions) contained in each dot is counted.

In addition, 100 dots randomly selected from dots whose entire images are photographed using a scanning electron microscope (SEM) can be considered as total dots in the present disclosure, and the number of "total dots" can be determined using the above method.

From the viewpoint of improving the balance between improvement in adhesive force with the electrode and the ion permeability, it is preferable for the proportion of dots having two or more points of voids inside the plane of one dot to be 50% or more and 100% or less of all dots, more preferably 70% or more and 100% or less, and still more preferably 90% or more and 100% or less.

From the viewpoint of improving the balance between improvement in adhesive strength with the electrode and the ion permeability, it is preferable for the proportion of dots having three or more voids inside the plane of one dot to be 40% or more and 100% or less of all dots, more preferably 50% or more and 100% or less, and still more preferably 70% or more and 100% or less.

From the viewpoint of improving the balance between improvement in adhesive force with the electrode and the ion permeability, it is preferable for the proportion of dots having four or more voids inside the plane of one dot to be 10% or more and 100% or less of all dots, more preferably 30% or more and 100% or less, and still more preferably 50% or more and 100% or less.

From the viewpoint of improving the balance between improvement in adhesive force with the electrode and the ion permeability, it is preferable for the proportion of dots having five or more voids inside the plane of one dot to be 5% or more and 100% or less of all dots, more preferably 7% or more and 100% or less, and still more preferably 10% or more and 100% or less.

<Proportion of Dots with Multiple or More Voids>

The voids inside the plane of the 100 dots randomly selected as above are counted, and the number of dots with multiple or more voids (2 to 5 points) are counted. The proportion of the number of dots having multiple or more voids to 100 dots selected at random is determined.

When the substrate or inorganic filler-containing layer has a thermoplastic polymer-containing layer on one or both surfaces thereof, and the thermoplastic polymer layer has a dot-shaped pattern structure, the prescribed effect of the present embodiment can be obtained if the number and ratio of voids inside the dots of the thermoplastic polymer layer present on one surface satisfy the specific range.

In the present disclosure, the injectability is the ease of permeation of the electrolyte solution into the electrodes and separator in the electrolyte injection step during cell assembly of an electricity storage device using the separator, and it is represented as how short the period of time is from the start of injection until complete permeation.

From the viewpoints of lowering the resistance of the battery, facilitating gas escape, preventing heat retention and increasing safety, achieving both adhesion and injectability, and increasing the penetration distance as described above, the dot diameter in the thermoplastic polymer-containing layer is preferably 50 $\mu$m or more and 1,000 $\mu$m or less, more preferably 100 $\mu$m or more and 500 $\mu$m or less, particularly preferably 150 $\mu$m or more and 300 $\mu$m or less, and most preferably 200 $\mu$m or more and 300 $\mu$m or less.

From the viewpoint of ensuring permeation flow paths for the electrolyte solution by adequately ensuring gaps between multiple dots, and also providing satisfactory air leakage, the dot distance in the thermoplastic polymer-containing layer is preferably 50 $\mu$m or more and 3,000 $\mu$m or less, more preferably 100 $\mu$m or more and 2,500 $\mu$m or less, still more preferably 150 $\mu$m or more and 2,000 $\mu$m or less, and yet more preferably 200 $\mu$m or more and 500 $\mu$m or less.

From the viewpoint of obtaining an excellent balance between adhesive force with the electrodes and injectability of the electrolyte solution, the dot distance/dot diameter ratio in the thermoplastic polymer-containing layer is preferably 0.3 or more and 5 or less, more preferably 0.5 or more and 4 or less, still more preferably 0.7 or more and 3.8 or less, and particularly preferably 1 or more and 3.5 or less.

From the viewpoints of inhibiting an increase in battery resistance and deterioration of rate characteristics, and inhibiting an increase in cell temperature in a (heating) safety test caused by non-uniform current distribution due to non-uniformity in the distance between the separator and the electrode interface, the lower limit of the average dot height for the dot-shaped pattern of the thermoplastic polymer-containing layer is preferably 0.1 $\mu$m or more, more preferably 0.3 $\mu$m or more, and still more preferably 0.4 $\mu$m or more. The upper limit of the average dot height is preferably 10 $\mu$m or less, more preferably 4 $\mu$m or less, and still more preferably 3 $\mu$m or less.

Furthermore, the average dot height of the thermoplastic polymer-containing layer is preferably 0.1 $\mu$m or more and 10 $\mu$m or less, more preferably 0.3 $\mu$m or more and 4 $\mu$m or less, and still more preferably 0.4 $\mu$m or more and 3 $\mu$m or less.

From the viewpoint of obtaining satisfactory air leakage, the positioning angle of the dots in the thermoplastic polymer-containing layer is preferably less than 40°, and while the lower limit for the positioning angle is not particularly limited it may be, for example, 0° or more.

In the dot-shaped pattern of the thermoplastic polymer-containing layer, the rate of change in the dot distance before and after permeation of the electrolyte solution through the separator is preferably 0% or more and 20% or less, and more preferably 0% or more and 10% or less. The balance between adhesion and injectability will tend to be excellent if the rate of change in the dot distance before and after immersion of the electrolyte solution into the separator is within this range.

The separator according to the present embodiment may have a thermoplastic polymer-containing layer on one or both surfaces of the porous substrate, and may optionally have an inorganic filler-containing layer between the substrate surface and the thermoplastic polymer-containing layer, or on a substrate surface on which the thermoplastic polymer-containing layer is not formed.

Hereinafter, constituent elements of the separator of the present embodiment will be described.

[Thermoplastic Polymer-Containing Layer]

The thermoplastic polymer-containing layer according to the present embodiment includes a thermoplastic polymer.

[Contact Angle between Thermoplastic Polymer-Containing Layer and Electrolyte Solution]

From the viewpoint of excellent injectability of the electrolyte solution, resistance to pooling of air and a shorter injection time, the contact angle of the thermoplastic polymer-containing layer with the electrolyte solution is preferably 0° or more and 20° or less, more preferably 2° or more and 18° or less, and still more preferably 4° or more and 16° or less. The contact angle of the thermoplastic polymer-containing layer with the electrolyte solution is preferably measured on the side of the thermoplastic polymer-containing layer on which the dot-shaped pattern is formed.

The contact angle of the thermoplastic polymer-containing layer with the electrolyte solution can be adjusted to within the range specified above by, for example, controlling the total coverage area of the thermoplastic polymer on the substrate surface, the particle size of the thermoplastic polymer, the strength of corona treatment on the substrate surface, the drying speed, the coating material viscosity and the coating material pH, during the process of forming the thermoplastic polymer-containing layer.

(Thermoplastic Polymer)

The thermoplastic polymer used for the present embodiment is not particularly limited, and examples include polyolefin resins such as polyethylene, polypropylene and $\alpha$-polyolefin; fluorine-containing resins such as polyvinylidene fluoride and polytetrafluoroethylene and copolymers including them; diene-based polymers having conjugated dienes such as butadiene or isoprene as monomer units, or copolymers and hydrides including them; acrylic polymers having acrylic acid esters or methacrylic acid esters as monomer units, or their copolymers or hydrides; rubber compounds such as ethylene-propylene rubber, polyvinyl alcohol and vinyl polyacetate; cellulose derivatives such as ethyl cellulose, methyl cellulose, hydroxyethyl cellulose and carboxymethyl cellulose; and resins having a melting point and/or glass transition temperature of 180°C or higher, such as polyphenylene ether, polysulfone, polyethersulfone, polyphenylene sulfide, polyetherimide, polyamideimide, polyamide and polyester compounds, and their blends. Monomers to be used for synthesis of thermoplastic polymers include monomers having a hydroxyl group, a sulfonic acid group, a carboxyl group, an amide group, or a cyano group.

Preferred among these thermoplastic polymers are diene-based polymers, acrylic polymers and fluorine-based polymers, for their excellent adhesiveness with electrode active materials and excellent strength or flexibility.

(Diene-Based Polymers)

Diene-based polymers are not particularly limited, and examples include polymers that include monomer units obtained by polymerization of conjugated dienes having two conjugated double bonds, such as butadiene or isoprene. Conjugated diene monomers are not particularly limited, and examples include 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene and 3-butyl-1,3-octadiene. Any of these may be polymerized alone, or they may be copolymerized.

The proportion of a monomer unit obtained by polymerization of a conjugated diene in the diene-based polymer is not particularly limited, but it may be 40% by weight or more, preferably 50% by weight or more, and more preferably 60% by weight or more, of the total diene-based polymer.

The diene-based polymer is not particularly limited, and examples include homopolymers of conjugated dienes such as poly butadiene and polyisoprene, and copolymers with monomers that are copolymerizable with conjugated dienes. Such a copolymerizable monomer is not particularly limited, and may be any of the (meth)acrylate monomers or monomers mentioned below (hereinafter also referred to as "other monomers").

The "other monomers" are not particularly limited, and examples include $\alpha,\beta$-unsaturated nitrile compounds such as acrylonitrile and methacrylonitrile; unsaturated carboxylic acids such as acrylic acid, methacrylic acid, itaconic acid and fumaric acid; styrene-based monomers such as styrene, chlorostyrene, vinyltoluene, t-butylstyrene, vinylbenzoic acid, methyl vinylbenzoate, vinylnaphthalene, chloromethylstyrene, hydroxymethylstyrene, $\alpha$-methylstyrene and divinylbenzene; olefins such as ethylene and propylene; halogen atom-containing monomers such as vinyl chloride and vinylidene chloride; vinyl esters such as vinyl acetate, vinyl propionate, vinyl butyrate and vinyl benzoate; vinyl ethers such as methyl vinyl ether, ethyl vinyl ether and butyl vinyl ether; vinyl ketones such as methyl vinyl ketone, ethyl vinyl ketone, butyl vinyl ketone, hexyl vinyl ketone and isopropenyl vinyl ketone; heterocyclic ring-containing vinyl compounds such as N-vinylpyrrolidone, vinylpyridine and vinylimidazole; acrylic acid ester and/or methacrylic acid ester compounds such as methyl acrylate and methyl methacrylate; hydroxyalkyl group-containing compounds such as $\beta$-hydroxyethyl acrylate and $\beta$-hydroxyethyl methacrylate; and amide-based monomers such as acrylamide, N-methylolacrylamide and acrylamide-2-methylpropanesulfonic acid, any one of which may be used alone or in combinations of two or more thereof.

(Acrylic Polymers)

Acrylic polymers are not particularly limited, but are preferably polymers including a monomer unit obtained by polymerization of a (meth)acrylate monomer.

When the thermoplastic polymer-containing layer contains an acrylic polymer as the thermoplastic polymer, it preferably contains a copolymer including monomer units of a (meth)acrylic acid ester monomer.

It is preferable that the thermoplastic polymer of the thermoplastic polymer-containing layer contains a copolymer including a monomer unit of a (meth)acrylic acid ester monomer, since the adhesive force is improved when the separator has a low basis weight.

In the present disclosure, "(meth)acrylic acid" means "acrylic acid or methacrylic acid", and "(meth)acrylate" means "acrylate or methacrylate".

(Meth)acrylate monomers are not particularly limited, and examples include alkyl (meth)acrylates such as methyl (meth)acrylate, ethyl (meth)acrylate, n-propyl (meth)acrylate, isopropyl (meth)acrylate, n-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, lauryl (meth)acrylate, n-tetradecyl (meth)acrylate and stearyl (meth)acrylate; hydroxyl group-containing (meth)acrylates such as hydroxyethyl (meth)acrylate, hydroxypropyl (meth)acrylate and hydroxybutyl (meth)acrylate; amino group-containing (meth)acrylates such as aminoethyl (meth)acrylate; and epoxy group-containing (meth)acrylates such as glycidyl (meth)acrylate (GMA).

The proportion of a monomer unit obtained by polymerization of a (meth)acrylate monomer is not particularly limited, but it may be, for example, 40% by weight or more, preferably 50% by weight or more, and more preferably 60% by weight or more, of the total acrylic polymer. Examples of the acrylic polymer include homopolymers of (meth)acrylate monomers, and copolymers of monomers copolymerizable therewith.

Such copolymerizable monomers include the "other monomers" mentioned above for diene-based polymers, any of which may be used alone or in combinations of two or more thereof.

(Fluorine-Based Polymers)

Fluorine-based polymers are not particularly limited, and examples include vinylidene fluoride homopolymers, and copolymers of monomers that are copolymerizable with them. Fluorine-based polymers are preferred from the viewpoint of electrochemical stability.

The proportion of a monomer unit obtained by polymerization of vinylidene fluoride is not particularly limited, but it may be, for example, 40% by weight or more, preferably 50% by weight or more, and more preferably 60% by weight or more.

Monomers that are copolymerizable with vinylidene fluoride are not particularly limited, and examples include fluorine-containing ethylenic unsaturated compounds such as vinyl fluoride, tetrafluoroethylene, trifluorochloroethylene, hexafluoropropylene, hexafluoroisobutylene, perfluoroacrylic acid, perfluoromethacrylic acid, and fluoroalkyl esters of acrylic acid or methacrylic acid; non-fluorinated ethylenic unsaturated compounds such as cyclohexyl vinyl ether and hydroxyethyl vinyl ether; and non-fluorinated diene compounds such as butadiene, isoprene and chloroprene.

Of these fluorine-based polymers, homopolymers of vinylidene fluoride, vinylidene fluoride/tetrafluoroethylene copolymer and vinyliden/fluoride/tetrafluoroethylene/hexafluoropropylene copolymer are preferred. Vinylidene fluoride/-tetrafluoroethylene/hexafluoropropylene copolymer is an especially preferred fluorine-based polymer, the monomer composition usually being 30 to 90% by weight vinylidene fluoride, 50 to 9% by weight tetrafluoroethylene and 20 to 1% by weight hexafluoropropylene. Particles of such fluorine resins may be used alone or in combinations of two or more thereof.

Monomers to be used for synthesis of thermoplastic polymers include monomers with a hydroxyl group, a carboxyl group, an amino group, a sulfonic acid group, an amide group, or a cyano group.

Monomers having hydroxyl groups are not particularly limited, and may be vinyl-based monomers, such as pentenol.

Monomers having carboxyl groups are also not particularly limited, and examples include vinyl-based monomers such as unsaturated carboxylic acids or pentenoic acids having ethylenic double bonds, such as (meth)acrylic acid or itaconic acid.

Monomers having amino groups are not particularly limited, and include, for example, 2-aminoethyl methacrylate.

Monomers having sulfonic acid groups are not particularly limited, and examples include vinylsulfonic acid, methylvinylsulfonic acid, (meth)allylsulfonic acid, styrenesulfonic acid, ethyl (meth)acrylate-2-sulfonate, 2-acrylamide-2-methylpropanesulfonic acid, 3-allyloxy-2-hydroxypropanesulfonic acid and the like.

Monomers having amide groups are not particularly limited, and examples include acrylamide (AM), methacrylamide, N-methylolacrylamide, N-methylolmethacrylamide and the like.

Monomers having cyano groups are not particularly limited, and examples include acrylonitrile (AN), methacrylonitrile, $\alpha$-chloroacrylonitrile, $\alpha$-cyanoethyl acrylate and the like.

The thermoplastic polymer to be used for the embodiment may be one polymer alone or a blend of two or more polymers, but it preferably includes two or more different polymers. The thermoplastic polymer may also be used together with a solvent, the solvent being one that can uniformly and stably disperse the thermoplastic polymer, such as N-methylpyrrolidone, N,N-dimethylformamide, N,N-dimethyl acetamide, water, ethanol, toluene, hot xylene, methylene chloride or hexane, with aqueous solvents being preferred among these. The thermoplastic polymer may also be used in the form of a latex.

(Glass Transition Point of Thermoplastic Polymer)

From the viewpoint of ensuring adhesiveness to the substrate, inhibiting blocking, and exhibiting adhesive force between the separator and electrodes, while also ensuring proper distance between the electrodes and separator in the electricity storage device and shortening the electrolyte solution injection time, the thermoplastic polymer constituting the thermoplastic polymer-containing layer preferably has thermal properties with at least two glass transition temperatures, at least one of the glass transition temperatures being within a range of 20°C or lower, and at least one of the glass transition temperatures being within a range of 30°C or higher and 150°C or lower.

The glass transition temperature is determined from a DSC curve obtained by differential scanning calorimetry (DSC). The glass transition temperature may also be referred to herein as "Tg".

Specifically, it is determined by the intersection between a straight line extending the low-temperature end baseline in the DSC curve toward the high-temperature end, and the tangent line at the inflection point in the stepwise change region of glass transition. More specifically, it may be determined with reference to the method described in the Examples.

The "glass transition" refers to the value when a change in heat quantity accompanying the change in state of a polymer test piece in DSC occurs at the endothermic end. Such a change in heat quantity is observed as a stepwise change in the DSC curve, or a combination of a stepwise change and a peak.

A "stepwise change" is a portion of the DSC curve that moves away from the previous baseline and toward a new baseline. This also includes any combination of a peak and stepwise change.

The "inflection point" is the point at which the slope of the DSC curve is maximum in the stepwise change region. In the stepwise change region, this represents the point where the upwardly convex curve changes to a downwardly convex curve.

The term "peak" refers to a portion of the DSC curve that moves away from the baseline and then returns to the same baseline.

The term "baseline" refers to the DSC curve in the temperature zone where no transition or reaction takes place in the test piece.

If at least one glass transition temperature of the thermoplastic polymer used in the present embodiment is within a range of 20°C or lower, the adhesiveness to the porous substrate or the inorganic filler-containing layer is excellent and blocking is suppressed, resulting in an effect of excellent adhesiveness between the separator and electrodes. The glass transition temperature is preferably -100°C or higher, more preferably -50°C or higher, still more preferably -40°C or higher, or particularly preferably -6°C or higher, from the viewpoint of handleability and blocking resistance, and is preferably 20°C or lower, more preferably 10°C or lower, or particularly preferably 0°C or lower, from the viewpoint of adhesiveness to the porous substrate or the inorganic filler-containing layer.

In the present embodiment, if at least one glass transition temperature of the thermoplastic polymer used for the embodiment is within a range of 30°C or higher and 150°C or lower, the adhesion between the separator and electrodes and the handleability will be excellent, and it will be possible to maintain distance between the electrode surface and the separator substrate surface in the electricity storage device, while also shortening the electrolyte solution injection time. From the viewpoint of handleability and blocking resistance, the glass transition temperature is preferably 30°C or higher, more preferably 40°C or higher, still more preferably 70°C or higher, and particularly preferably 85°C or higher, and from the viewpoint of adhesive force, the glass transition temperature is preferably 150°C or lower, more preferably 130°C or lower, and particularly preferably 120°C or lower.

A thermoplastic polymer having two glass transition temperatures can be obtained, for example, by a method of blending two or more thermoplastic polymers, but there is no limitation on this method.

For a polymer blend, the glass transition temperature of the thermoplastic polymer as a whole can be controlled by combination of a polymer having a high glass transition temperature and a polymer having a low glass transition temperature, and multiple functions can also be imparted to the thermoplastic polymer as a whole. In the case of a blend, for example, both blocking resistance and wettability with the polyolefin microporous membrane can be obtained with a blend of two or more different types of polymers having a glass transition temperature within a range of 30°C or higher, and a polymer having a glass transition temperature within a range of 20°C or lower. The blending ratio, in the case of a blend, is preferably within a range of 0.1:99.9 to 99.9:0.1, more preferably 5:95 to 95:5, still more preferably 50:50 to 95:5, and yet more preferably 60:40 to 90: 10, as the ratio of polymers having a glass transition temperature within a range of 30°C or higher and polymers having a glass transition temperature within a range of 20°C or lower. The viscoelasticity can be controlled by combination of a polymer having high viscosity and a polymer having high elasticity.

In the present embodiment, the glass transition temperature (Tg) of the thermoplastic polymer can be appropriately adjusted by changing the monomer components used for production of the thermoplastic polymer and the loading proportion of each monomer, for example. Specifically, the Tg for each monomer used for production of the thermoplastic polymer can be roughly estimated from the commonly used Tg for its homopolymer (as listed in the "Polymer Handbook" (for example, a Wiley-Interscience Publication), and the mixing proportion of the monomer. For example, a copolymer having high Tg can be obtained by blending a high proportion of a monomer such as styrene, methyl methacrylate or acrylonitrile, which yield polymers having Tg of about 100°C, and a copolymer having low Tg can be obtained by blending a high proportion of a monomer such as butadiene which yields a polymer having Tg of about -80°C, or n-butyl acrylate or 2-ethylhexyl acrylate which yield polymers having Tg of about -50°C.

The Tg of the thermoplastic polymer can be approximated by the Fox formula (formula (1) below). However, the glass transition point of the thermoplastic polymer of the present embodiment is the value measured by the method using DSC described above.

$$1/Tg = W_1/Tg_1 + W_2/Tg_2 + \cdots + W_i/Tg_i + \cdots W_n/Tg_n \qquad (1)$$

{In formula (1), Tg (K) represents the Tg of the copolymer, Tgi (K) represents the Tg of a homopolymer of each monomer i, and Wi represents the mass fraction of each monomer.}

The glass transition temperature of a thermoplastic polymer is determined by the following method.

An appropriate amount of a thermoplastic polymer coating solution is placed on an aluminum pan and dried with a hot air dryer at 130°C for 30 minutes. About 5 mg of the dried film after drying is packed in a measuring aluminum container, and a DSC curve and a DDSC curve are obtained under a nitrogen atmosphere using a DSC measurement device (DSC Q2000, manufactured by TA Instruments). The measurement conditions are as follows.

(First stage temperature increase program)

40°C start, temperature increase at 50°C/minute. The temperature was maintained for 5 minutes after reaching 200°C.

(Second stage temperature decrease program)

Temperature decrease from 200°C at 20°C/minute. The temperature was maintained for 5 minutes after reaching -50°C.

(Third stage temperature increase program)

Temperature increase from -50°C to 200°C at 20°C/minute. Recording of DSC and DDSC data during the third stage heating.

In accordance with the method mentioned in JIS-K7121, the intersection between the baseline (an extended straight line toward the high-temperature end from the baseline of the obtained DSC curve) and the tangent line at the inflection point (the point where the upwardly convex curve changed to a downwardly convex curve) was defined as the glass transition temperature (Tg).

(Structure of Thermoplastic Polymer-Containing Layer)

In the thermoplastic polymer-containing layer, preferably a thermoplastic resin having a glass transition temperature of 30°C or higher and 150°C or lower is present on the outer surface side of the separator for an electricity storage device, and a thermoplastic resin having a glass transition temperature of 20°C or lower is present on the interface side between the polyolefin microporous membrane and the thermoplastic polymer-containing layer. The "outer surface" is the side of the thermoplastic polymer-containing layer that contacts with an electrode when the separator for an electricity storage device and the electrode are stacked. The "interface" is the side of the thermoplastic polymer-containing layer that contacts with the polyolefin microporous membrane.

If a thermoplastic polymer having a glass transition temperature of 30°C or higher and 150°C or lower is present in the thermoplastic polymer-containing layer on the outer surface side of the separator for an electricity storage device, the adhesiveness with the microporous membrane will be excellent, and adhesiveness between the separator and electrodes will tend to be excellent as a result. If a thermoplastic polymer having a glass transition temperature of 20°C or lower is present on the interface side between the polyolefin microporous membrane and the thermoplastic polymer-containing layer, adhesion between the separator and electrodes and the handleability will both tend to be excellent. A separator having a thermoplastic polymer-containing layer as described above will tend to have further improved handleability and adhesion between the separator and electrodes.

Such a structure can be obtained as a structure in which the thermoplastic polymer (a) is composed of thermoplastic polymer particles and a binder polymer that binds the thermoplastic polymer particles to the polyolefin microporous membrane with the thermoplastic polymer particles exposed on the surface, the glass transition temperature of the thermoplastic polymer particles is within a range of 30°C or higher and 150°C or lower, and a thermoplastic polymer having a glass transition temperature of 20°C or lower is present on the interface side between the polyolefin microporous membrane and the thermoplastic polymer-containing layer, and/or the thermoplastic polymer (b) has a layered structure, the glass transition temperature of the thermoplastic polymer in the uppermost surface layer when used as a separator, is within a range of 30°C or higher and 150°C or lower, and a thermoplastic polymer having a glass transition temperature of 20°C or lower is present on the interface side between the polyolefin microporous membrane and the thermoplastic polymer-containing layer. The thermoplastic polymer (b) may also have a layered structure of polymers with different Tg values.

(Average Particle Size of Thermoplastic Polymer)

The structure of the thermoplastic polymer in the present embodiment is not particularly limited and may be particulate, for example. Such a structure will tend to provide more excellent adhesion between the separator and electrodes and handleability for the separator. The term "particulate" as used herein means that in measurement with a scanning electron microscope (SEM), the individual thermoplastic polymers have borders with shapes such as thin elongated, spherical or polygonal shapes.

The particle size distribution and median diameter of the granular thermoplastic polymer can be measured using a laser particle size distribution measuring device (Microtrac MT3300EX, manufactured by Nikkiso Co., Ltd.). If necessary, the particle size distribution of the granular thermoplastic polymer can be adjusted using the particle size distribution of water or a binder polymer as a baseline. The particle size of the granular thermoplastic polymer with a cumulative frequency of 50% is defined as $D_{50}$, and $D_{50}$ of the granular thermoplastic polymer is defined as Dp.

The average particle size $D_P$ of the granular thermoplastic polymer is preferably 100 nm or more and 1000 nm or less, more preferably 130 nm or more and 700 nm or less, still more preferably 320 nm or more and 590 nm or less, and most preferably 400 nm or more and 550 nm or less, from the viewpoint of exhibiting adhesive force between the separator and electrodes while maintaining distance between multiple electrodes across the separator, and shortening the injection time for the electrolyte solution into the electricity storage device including a separator.

(Basis Weight of Thermoplastic Polymer-Containing Layer Per Side)

In the separator according to the present embodiment, the basis weight per side of the thermoplastic polymer-containing layer is preferably 0.03 g/m$^2$ or more and 0.50 g/m$^2$ or less, more preferably 0.04 g/m$^2$ or more and 0.30 g/m$^2$ or less, and most preferably 0.06 g/m$^2$ or more and 0.20 g/m$^2$ or less, from the viewpoint of achieving both adhesive force with the electrode and ion permeability. The basis weight of the thermoplastic polymer-containing layer can be adjusted by changing the polymer concentration of the coating solution or the coating amount of the polymer solution. The preferred range is more than 0.06 g/m$^2$, as long as the effect of the present embodiment is not impaired, from the viewpoint of preventing deformation of the cell shape with expansion and contraction of the electrodes and obtaining a satisfactory cycle characteristics for the battery.

(Coverage Area Ratio of Substrate or Inorganic Filler-Containing Layer Surface by Thermoplastic Polymer-Containing Layer)

In the present embodiment, the coverage area ratio per side of the thermoplastic polymer-containing layer to the substrate or inorganic filler-containing layer surface is preferably 3% or more, or 4% or more, or 5% or more, or 10% or more, or 15% or more, or 20% or more, or 30% or more, and is preferably 90% or less, or 80% or less, or 75% or less, or 70% or less, or 50% or less, from the viewpoint of reducing the resistance of the battery while maintaining the adhesive force of the separator with the electrodes, and shortening the injection time for the electrolyte solution into the electricity storage device including a separator.
From the viewpoint of efficiently exerting the effects of the present embodiment, the coverage area ratio per side of the thermoplastic polymer-containing layer to the substrate surface is particularly preferably 30% or more and 50% or less.
If the coverage area ratio of the thermoplastic polymer-containing layer is less than the lower limit, the distance between the separator and the electrode interface becomes non-uniform, causing the current distribution to become non-uniform, and the temperature is likely to rise in a (heating) safety test. If the coverage area of the thermoplastic polymer-containing layer is more than the upper limit, the resistance of the battery increases, leading to deterioration of the rate characteristics.
The coverage area ratio S of the thermoplastic polymer-containing layer present on the substrate surface is calculated from the following formula.

S (%) = Coverage area of thermoplastic polymer-containing layer/surface area of substrate $\times$ 100

The coverage area ratio (%) of the coating pattern of the thermoplastic polymer-containing layer to the substrate surface is measured using a microscope (model: VHX-7000, manufactured by Keyence Corporation). After photographing the separator sample (coaxial lighting) at a magnification of 30 times, the automatic area measurement in the measurement mode is selected to measure the coverage area ratio of the thermoplastic polymer. The coverage area ratio for each sample is calculated by the arithmetic average value of three measurements.
The coverage area ratio of the thermoplastic polymer-containing layer can be adjusted by changing the polymer concentration of the coating solution, the coating amount of the polymer solution, the coating method, and the coating conditions.

[Substrate]

Since the separator must have an insulating property and ion permeability, the separator substrate will usually be formed of an insulating material sheet with a porous structure, a polyolefin nonwoven fabric or a resin microporous membrane. A polyolefin microporous membrane having oxidation-reduction resistance and a dense, homogeneous porous structure is particularly preferred for a separator substrate to be used in an electricity storage device such as a non-aqueous secondary battery provided with a positive electrode and negative electrode that are able to occlusion/release lithium, and a non-aqueous electrolyte solution containing an electrolyte dissolved in a non-aqueous solvent.

(Polyolefin Microporous Membrane)

The polyolefin microporous membrane in the present embodiment is not particularly limited and may be a microporous membrane composed of a polyolefin resin composition containing a polyolefin, for example, and is preferably a microporous membrane having a polyolefin resin as the main component. The polyolefin resin content in the polyolefin microporous membrane in the present embodiment is not particularly limited, but from the viewpoint of shutdown performance when used as a separator for an electricity storage device, it is preferably a microporous membrane including a polyolefin resin composition in which the polyolefin resin constitutes 50% to 100% as the mass fraction among the total components composing the microporous membrane. The proportion constituted by the polyolefin resin is more preferably 60% or more and 100% or less, and still more preferably 70% or more and 100% or less.

The polyolefin resin is not particularly limited and may be a polyolefin resin commonly used in extrusion, ejection, inflation or blow molding, and homopolymers, copolymers and multistage polymers of ethylene, propylene, 1-butene, 4-methyl-1-pentene, 1-hexene and 1-octene may be used. Polyolefins selected from the group consisting of these homopolymers and copolymers or multistage polymers may be used alone, or they may be used in admixture.

Typical examples of polyolefin resins include, but are not limited to, polyethylenes such as low-density polyethylene, linear low-density polyethylene, medium-density polyethylene, high-density polyethylene and ultrahigh molecular weight polyethylene, or polypropylenes such as isotactic polypropylene and atactic polypropylene, ethylene-propylene random copolymer, polybutene, ethylene-propylene rubber and the like.

When the separator of the present embodiment is to be used as a battery separator, it is preferred to use a resin composed mainly of polyethylene and especially high-density polyethylene, for a low melting point and high strength.

From the viewpoint of improving the heat resistance of the microporous membrane, it is more preferred to use a porous membrane composed of a resin composition including polypropylene and a polyolefin resin other than polypropylene. The spatial structure of the polypropylene is not limited, and it may be isotactic polypropylene, syndiotactic polypropylene or atactic polypropylene.

There is no particular restriction on the proportion of polypropylene with respect to the total polyolefins in the polyolefin resin composition, but from the viewpoint of both heat resistance and a satisfactory shutdown function, it is preferably 1 to 35% by weight, more preferably 3 to 20% by weight, and still more preferably 4 to 10% by weight. In such cases, there are no limitations on a polyolefin resin other than polypropylene, and it may be a homopolymer or copolymer of an olefin hydrocarbon such as ethylene, 1-butene, 4-methyl-1-pentene, 1-hexene or 1-octene olefin, for example. Specific examples include polyethylene, polybutene and ethylene-propylene random copolymers.

From the viewpoint of the shutdown property, which represents the degree to which the pores become occluded by heat-fusion, the polyolefin resin other than polypropylene is preferably polyethylene, such as low-density polyethylene, linear low-density polyethylene. medium-density polyethylene, high-density polyethylene or ultrahigh molecular weight polyethylene. Polyethylene with a density of 0.93 g/cm$^3$ or more and 0.97 g/cm$^3$ or less as measured according to JIS K 7112 is preferred among these from the viewpoint of strength.

The viscosity-average molecular weight of the polyolefin resin composing the polyolefin microporous membrane is not particularly limited, but is preferably 30,000 or more and 12,000,000 or less, more preferably 50,000 or more and less than 2,000,000, still more preferably 100,000 or more and less than 1,200,000, and most preferably 500,000 or more and less than 1,000,000. If the viscosity-average molecular weight of the polyolefin resin is 30,000 or more, the melt tension during melt molding will be increased, resulting in satisfactory moldability, while the strength will also tend to be high due to entanglement between the polymers. If the viscosity-average molecular weight of the polyolefin resin is 12,000,000 or less, meanwhile, it will be easier to accomplish uniform melt kneading, and the sheet moldability, and especially thickness stability, will tend to be excellent. The viscosity-average molecular weight of the polyolefin resin is also preferably less than 1,000,000 because the pores will be easily occluded during temperature increase, and a satisfactory shutdown function will tend to be obtained. For example, instead of using only a polyolefin with a viscosity-average molecular weight of less than 1,000,000, a mixture of a polyolefin with a viscosity-average molecular weight of 2,000,000 and a polyolefin having a viscosity-average molecular weight of 270,000 may be used, in such a proportion that the viscosity-average molecular weight of the mixture is less than 1,000,000.

The polyolefin microporous membrane in the present embodiment may also include optional additives. Such additives are not particularly limited and examples include polymers other than polyolefins; inorganic particles; phenol-based, phosphorus-based and sulfur-based antioxidants; metal soaps such as calcium stearate and zinc stearate; ultraviolet absorbers; light stabilizers; antistatic agents; anti-fogging agents; and color pigments. The total content of additives is preferably 20 parts by weight or less, more preferably 10 parts by weight or less, and still more preferably 5 parts by weight or less, with respect to 100 parts by weight of the polyolefin resin composition.

(Physical Properties of Polyolefin Microporous Membrane)

The puncture strength in terms of the basis weight (g/m$^2$) of the PO microporous membrane (PO microporous membrane in one aspect) (hereinafter referred to as "basis weight-equivalent puncture strength") is preferably 50 gf/(g/m$^2$) or more, or 60 gf/(g/m$^2$) or more. A PO microporous membrane having a basis weight-equivalent puncture strength of 50 gf/(g/m$^2$) or more, or 60 gf/(g/m$^2$) or more will be less likely to result in tearing of the PO microporous membrane during impact testing of the electricity storage device. From the viewpoint of improving the electricity storage device safety, such as impact resistance, while maintaining the strength of the PO microporous membrane, the basis weight-equivalent puncture strength is more preferably 70 gf/(g/m$^2$) or more, and still more preferably 80 gf/(g/m$^2$) or more. The limit for the basis weight-equivalent puncture strength is not particularly limited and may be, for example, 200 gf/(g/m$^2$) or less, or 150 gf/(g/m$^2$) or less, or 140 gf/(g/m$^2$) or less.

The puncture strength that is not in terms of the basis weight of the PO microporous membrane (hereinafter referred to simply as "puncture strength") has a lower limit of preferably 100 gf or more (preferably 0.98 N or more), more preferably 200 gf or more, and still more preferably 300 gf or more. A puncture strength of 100 gf or more is preferred from the viewpoint of inhibiting tearing of the PO microporous membrane during impact testing. The upper limit for the puncture strength of the PO microporous membrane is preferably 1000 gf or less, more preferably 800 gf or less and still more preferably 700 gf or less from the viewpoint of stability during film formation. The lower limit may be a value that allows stable production during film formation and battery fabrication. The upper limit is set in balance with the other properties. The puncture strength can be increased by increasing the orientation of the molecular chains by application of shearing force or stretching of the molded article during extrusion, but since increasing the strength also impairs the thermostability due to higher residual stress, this is controlled as suitable for the purpose.

The basis weight of the polyolefin microporous membrane in the present embodiment is not particularly limited, but is preferably 2.8 g/m$^2$ or more, more preferably 3.3 g/m or more, and still more preferably 4.0 g/m$^2$ or more, and is preferably 6.4 g/m$^2$ or less, more preferably 5.4 g/m$^2$or less, still more preferably 4.9 g/m$^2$ or less, and particularly preferably 4.7 g/m$^2$ or less.

The porosity of the polyolefin microporous membrane in the present embodiment is not particularly limited, but is preferably 20% or more, more preferably 35% or more, still more preferably 40% or more, and particularly preferably 45% or more, and is preferably 80% or less, more preferably 60% or less, and still more preferably 55% or less. The porosity is preferably 20% or more from the viewpoint of ensuring the permeability of the separator. The porosity is also preferably 80% or less from the viewpoint of ensuring puncture strength. The porosity can be adjusted by changing the stretch ratio, for example.

The lower limit of the thickness of the polyolefin microporous membrane in the present embodiment is not particularly limited, but is preferably 2 $\mu$m or more, more preferably 4.5 $\mu$m or more, still more preferably 5.5 $\mu$m or more, and particularly preferably 6 $\mu$m or more, and the upper limit is preferably 30 $\mu$m or less, more preferably 20 $\mu$m or less, still more preferably 16 $\mu$m or less, particularly preferably 12 $\mu$m or less, and most preferably 9 $\mu$m or less. The thickness of the polyolefin microporous membrane is preferably 2 $\mu$m or more, from the viewpoint of increasing the mechanical strength. The thickness of the polyolefin microporous membrane is also preferably 30 $\mu$m or less because this will reduce the volume occupied by the separator, which is advantageous for increasing the capacity of the battery.

The air permeability of the polyolefin microporous membrane of the present embodiment is not particularly limited but is preferably 10 sec/100 cm$^3$ or more, more preferably 20 sec/100 cm$^3$ or more, still more preferably 30 sec/100 cm$^3$ or more, yet more preferably 90 sec/100 cm$^3$ or more, and most preferably 100 sec/100 cm$^3$ or more, and is preferably 300 sec/100 cm$^3$ or less, more preferably 200 sec/100 cm$^3$ or less, still more preferably 180 sec/100 cm$^3$ or less, and particularly preferably 140 sec/100 cm$^3$ or less. The air permeability is preferably 10 sec/100 cm$^3$ or more from the viewpoint of reducing self-discharge of the electricity storage device. The air permeability is also preferably 300 sec/100 cm$^3$ or less from the viewpoint of obtaining a satisfactory charge-discharge characteristics. The air permeability can be adjusted by changing the stretching temperature or stretch ratio.

The upper limit of the average pore size of the polyolefin microporous membrane in the present embodiment is preferably 0.15 $\mu$m or less and more preferably 0.1 $\mu$m or less, with a lower limit of preferably 0.01 $\mu$m or more. A average pore size of 0.15 $\mu$m or less is preferred from the viewpoint of reducing self-discharge of the electricity storage device and helping to prevent reduction in capacity, for use as a separator for an electricity storage device.

When the average pore size of the polyolefin microporous membrane is within the above range, it is possible to control the contact angle of the adhesive coating solution to the surface of the substrate on which the thermoplastic polymer-containing layer is provided or the surface of the inorganic filler-containing layer (the coated surface of the thermoplastic polymer in one aspect) within the prescribed range of the present application, which is preferable. The average pore size can be adjusted by changing the stretching ratio when producing the polyolefin microporous membrane.

The short-circuit temperature, as an indicator of the heat resistance of the polyolefin microporous membrane of the embodiment, is preferably 140°C or higher, more preferably 150°C or higher and still more preferably 160°C or higher. A short-circuit temperature of 140°C or higher is preferred from the viewpoint of safety of the power storage device, when used as a separator for an electricity storage device.

The viscosity-average molecular weight of the polyolefin microporous membrane in the present embodiment is not particularly limited, but is preferably 100,000 or more and 5,000,000 or less, more preferably 300,000 or more and 1,500,000 or less, and still more preferably 500,000 or more and 1,000,000 or less. A viscosity-average molecular weight of the microporous membrane of 100,000 or more and 5,000,000 or less is preferred from the viewpoint of the puncture strength, permeability, heat shrinkage and shutdown function of the polyolefin microporous membrane.

(Method for Producing Polyolefin Microporous Membrane)

The method for producing the polyolefin microporous membrane in the present embodiment is not particularly limited, and any publicly known method may be employed. Examples include a method of melt kneading a polyolefin resin composition and a plasticizer and molding the mixture into a sheet, optionally with stretching, and then extracting the plasticizer to form pores; a method of melt kneading a polyolefin resin composition, extruding it at a high draw ratio, and then stretching it with heat treatment to detach the polyolefin crystal interface and form pores; a method of melt kneading a polyolefin resin composition and an inorganic filler and casting the mixture into a sheet, and then detaching the interface between the polyolefin and the inorganic filler by stretching to form pores; and a method of first dissolving the polyolefin resin composition and then dipping it in a poor solvent for the polyolefin to solidify the polyolefin while simultaneously removing the solvent, to form pores.

Hereinafter, an example of a method of producing the microporous membrane will be described, as a method of melt-kneading a polyolefin resin composition and a plasticizer, forming the mixture into a sheet, and then extracting the plasticizer.

First, the polyolefin resin composition and the plasticizer are melt-kneaded. In the melt kneading method, a polyolefin resin and other additives as necessary may be loaded into a resin kneader such as an extruder, kneader, Laboplastomil, kneading roll or Banbury mixer, and the plasticizer introduced at a desired proportion and kneaded in while hot melting the resin components. Before loading the polyolefin resin, the other additives and the plasticizer into the resin kneader, they are preferably pre-kneaded in a prescribed proportion using a Henschel mixer or the like. More preferably, only a portion of the plasticizer is loaded in during the pre-kneading, while the remainder of the plasticizer is kneaded in while side feeding it to the resin kneader. This can increase the dispersibility of the plasticizer, and allow stretching to a high factor without membrane rupture during stretching of the melt-kneaded cast sheet of the resin composition and plasticizer in the subsequent steps.

The plasticizer used may be a non-volatile solvent that can form a homogeneous solution at or above the melting point of the polyolefin. Examples of such non-volatile solvents include hydrocarbons such as liquid paraffin and paraffin wax; esters such as dioctyl phthalate and dibutyl phthalate; and higher alcohols such as oleyl alcohol and stearyl alcohol, with liquid paraffin being preferable among these. Liquid paraffins are preferred among these because of their high compatibility with polyethylene or polypropylene and low risk of interfacial peeling between the polyolefin resin composition and plasticizer even when the melt kneaded mixture is stretched, thus tending to facilitate uniform stretching.

The proportion of the polyolefin resin composition and the plasticizer is not particularly limited, as long as it is in a range in which they can undergo uniform melt kneading to then be cast into a sheet form. For example, the mass fraction of the plasticizer in the composition including the polyolefin resin composition and the plasticizer is preferably 30 to 80% by weight and more preferably 40 to 70% by weight. A plasticizer mass fraction of 80% by weight or less will help prevent insufficient melt tension during melt molding, and will tend to improve moldability. A mass fraction of the plasticizer of 30% by weight or more, meanwhile, will avoid cutting of the polyolefin chains even with stretching of the mixture of the polyolefin resin composition and plasticizer to a high factor, and will aid in formation of a homogeneous and fine pore structure while also increasing strength.

The melt-kneaded mixture is then cast into a sheet. The method of producing the cast sheet may be, for example, a method of extruding the melt kneaded mixture through a T-die or the like into a sheet, and contacting it with a heat conductor to cool it to a sufficiently lower temperature than the crystallization temperature of the resin component, thereby solidifying it. The heat conductor used for the cooling solidification may be metal, water, air or the plasticizer itself, but a metal roll is preferred because it has high heat conduction efficiency. When the mixture is to be contacted with metal rolls, it is more preferably sandwiched between the rolls because this will further increase the heat conduction efficiency while causing the sheet to become oriented and increasing the membrane strength, while the surface smoothness of the sheet will also be improved. The die lip gap when extruding into a sheet from a T-die is preferably 400 $\mu$m or more and 3,000 $\mu$m or less, and more preferably 500 $\mu$m or more and 2,500 $\mu$m or less. Limiting the die lip gap to 400 $\mu$m or more can reduce tip adhesion, can lower the effects of streaks and defects on the film quality, and can help avoid membrane rupture during the subsequent stretching step. Limiting the die lip gap to 3,000 $\mu$m or less, meanwhile, will tend to speed the cooling rate to prevent cooling irregularities while maintaining sheet thickness stability.

The cast sheet obtained in this manner is then preferably stretched. Either uniaxial stretching or biaxial stretching can be suitably used for the stretching treatment, but biaxial stretching is preferred from the viewpoint of improving the strength of the obtained microporous membrane. When a cast sheet is subjected to high-ratio stretching in the biaxial directions the molecules become oriented in the in-plane direction, such that the microporous membrane that is obtained as the final result is less likely to tear, and has high puncture strength. The stretching method may be simultaneous biaxial stretching, sequential biaxial stretching, multistage stretching or multiple stretching, for example, with simultaneous biaxial stretching being preferred from the viewpoint of improved puncture strength, uniform stretching, and shutdown properties.

Simultaneous biaxial stretching is a stretching method in which stretching in the MD (the machine direction of the microporous membrane) and stretching in the TD (the direction crossing the MD of the microporous membrane at an angle of 90°) are carried out simultaneously, and the draw ratios in each direction may be different. Sequential biaxial stretching is a stretching method in which stretching in the MD and TD are carried out independently, in such a manner that while the MD or TD stretching is being carried out, the other direction is in a non-constrained state or in an anchored state with fixed length.

The stretch ratio is an area increase by a factor of preferably within a range of 20 or more and 100 or less, and more preferably within a range of 25 or more and 50 or less. The stretch ratio in each axial direction by a factor is preferably within a range of 4 or more and 10 or less in the MD and 4 or more and 10 or less, inclusive, in the TD, and more preferably within a range of 5 or more and 8 or less in the MD and 5 or more and 8 or less in the TD. If the total area factor is 20 or more the obtained microporous membrane will tend to be imparted with sufficient strength, and if the total area factor is 100 or less, membrane rupture will tend to be prevented in the stretching step, resulting in high productivity.

The cast sheet may also be subjected to rolling. Rolling may be carried out, for example, by a press method using a double belt press machine or the like. Rolling can increase the orientation of the surface layer sections, in particular. The area increase by rolling is preferably by a factor of more than 1 and 3 or less, and more preferably a factor of more than 1 and 2 or less. If the rolling factor is more than 1, the plane orientation will increase and the membrane strength of the final microporous membrane will tend to increase. The rolling factor is preferably 3 or less because there will be less of a difference in orientation between the surface layer portion and center interior portion, tending to allow formation of a porous structure that is more uniform in the thickness direction of the membrane.

The plasticizer is then removed from the cast sheet to obtain a microporous membrane. The method of removing the plasticizer may be, for example, a method of immersing the cast sheet in an extraction solvent to extract the plasticizer, and then thoroughly drying it. The method of extracting the plasticizer may be either a batch process or a continuous process. In order to minimize shrinkage of the microporous membrane, it is preferred to constrain the edges of the cast sheet during the series of steps of immersion and drying. The plasticizer residue in the microporous membrane is preferably less than 1% by weight.

The extraction solvent used is preferably one that is a poor solvent for the polyolefin resin composition and a good solvent for the plasticizer, and that has a boiling point that is lower than the melting point of the polyolefin resin. Examples of such extraction solvents include hydrocarbons such as n-hexane and cyclohexane; halogenated hydrocarbons such as methylene chloride and 1,1,1-trichloroethane; non-chlorine-based halogenated solvents such as hydrofluoroethers and hydrofluorocarbons; alcohols such as ethanol and isopropanol: ethers such as diethyl ether and tetrahydrofuran; and ketones such as acetone and methyl ethyl ketone. These extraction solvents may be collected by a process such as distillation and then reutilized.

In order to help prevent shrinkage of the microporous membrane, heat treatment for heat setting or thermal relaxation may be carried out either after the stretching step or after formation of the microporous membrane. The microporous membrane may also be subjected to posttreatment such as hydrophilizing treatment with a surfactant, or crosslinking treatment with ionizing radiation.

[Inorganic Filler-Containing Layer]

The separator for an electricity storage device according to the present embodiment may also include an inorganic filler-containing layer that contains an inorganic filler and a resin binder (the inorganic filler-containing layer may be referred to as a porous layer in the present embodiment). The location of the inorganic filler-containing layer may be on at least part of the surface of the polyolefin microporous membrane, at least part of the surface of the thermoplastic polymer-containing layer and/or between the polyolefin microporous membrane and the thermoplastic polymer-containing layer. In one aspect, the location of the inorganic filler-containing layer of the present embodiment is between the microporous polyolefin membrane and the thermoplastic polymer-containing layer. The separator of the present embodiment may include an inorganic filler-containing layer on one or both sides of the polyolefin microporous film.

In the inorganic filler-containing layer of the present embodiment, the proportion T of pores having an area in the range of 0.001 $\mu m^2$ to 0.05 $\mu m^2$ to the total pores having an area of 0.001 $\mu m^2$ or more in the inorganic filler-containing layer is preferably 80% or more. The lower limit of the proportion T is preferably 80% or more, more preferably 90% or more, and still more preferably 95% or more.

(Inorganic Filler)

The inorganic filler used in the inorganic filler-containing layer is not particularly limited, but preferably it has a melting point of 200°C or higher and also high electrical insulating properties, and is also electrochemically stable in the range in which the lithium ion secondary battery is to be used.

Examples of materials for the inorganic filler include oxide-based ceramics such as alumina, silica, titania, zirconia, magnesia, ceria, yttria, zinc oxide and iron oxide; nitride-based ceramics such as silicon nitride, titanium nitride and boron nitride; ceramics such as silicon carbide, calcium carbonate, magnesium sulfate, aluminum sulfate, barium sulfate, aluminum hydroxide, aluminum oxide hydroxide or boehmite, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and quartz sand; and glass fibers. Of these, one or more selected from the group consisting of alumina, boehmite and barium sulfate are preferred from the viewpoint of stability in the lithium ion secondary battery. Synthetic boehmite is more preferred as boehmite since it can reduce ionic impurities that may adversely affect the properties of electrochemical elements.

Examples of inorganic filler forms include laminar, scaly, polyhedral, needle-like, columnar, granular, spherical, fusiform and block-shaped forms, and various combinations of inorganic fillers with these forms may also be used. Preferred among these are block-shaped forms from the viewpoint of balance between permeability and heat resistance.

The embodiment ratio of the inorganic filler is preferably 1.0 or more and 5.0 or less, and more preferably 1.1 or more and 3.0 or less. The embodiment ratio of the inorganic filler is preferably 5.0 or less from the viewpoint of inhibiting moisture adsorption on the multilayer porous membrane (the inorganic filler-containing layer and the polyolefin microporous membrane in one aspect) and preventing capacity deterioration with repeated cycling, and also from the viewpoint of inhibiting deformation at temperatures above the melting point of the polyolefin microporous membrane.

The specific surface area of the inorganic filler is preferably 3.0 m$^2$/g or more and 17 m$^2$/g or less, more preferably 5.0 m$^2$/g or more and 15 m$^2$/g or less, and still more preferably 6.5 m$^2$/g or more and 13 m$^2$/g or less. The specific surface area is preferably 17 m$^2$/g or less from the viewpoint of inhibiting moisture adsorption on the multilayer porous membrane and preventing capacity deterioration with repeated cycling, and the specific surface area of the inorganic filler is preferably 3.0 m$^2$/g or more, from the viewpoint of inhibiting deformation at temperatures above the melting point of the polyolefin microporous membrane. The specific surface area of the inorganic filler is measured using the BET adsorption method.

In the particle size distribution of a slurry containing the inorganic filler, $D_F$ that is the average particle size $D_{50}$ of the inorganic filler particles is preferably 0.10 $\mu$m or more and 1.50 $\mu$m or less, more preferably 0.20 $\mu$m or more and 1.0 $\mu$m or less, and still more preferably 0.30 $\mu$m or more and 0.70 $\mu$m or less. The $D_{50}$ is preferably 0.10 $\mu$m or more from the viewpoint of inhibiting penetration of the inorganic filler into the pores of the substrate to increase the battery resistance, thus preventing capacity deterioration with repeated cycling, and the $D_{50}$ is preferably 1.50 $\mu$m or less from the viewpoint of easily forming a thin inorganic filler-containing layer to inhibit an increase in battery capacity and deterioration in rate characteristics.

In the particle size distribution of a slurry containing the inorganic filler, $D_{10}$, which is the particle size of inorganic filler particles with a cumulative frequency of 10%, is preferably 0.08 $\mu$m or more and 0.80 $\mu$m or less, more preferably 0.09 $\mu$m or more and 0.50 $\mu$m or less, and still more preferably 0.10 $\mu$m or more and 0.35 $\mu$m or less. The $D_{10}$ is preferably 0.08 $\mu$m or more from the viewpoint of inhibiting moisture adsorption on the multilayer porous membrane and preventing capacity deterioration with repeated cycling, and the $D_{10}$ is preferably 0.80 $\mu$m or less from the viewpoint of inhibiting deformation at temperatures above the melting point of the polyolefin microporous membrane.

The particle size distribution and median diameter of the inorganic filler particles can be measured using a laser particle size distribution measuring device (Microtrac MT3300EX, manufactured by Nikkiso Co., Ltd.). If necessary, the particle size distribution of the inorganic filler particle dispersion or slurry coating solution can be adjusted using the particle size distribution of water or a binder polymer as a baseline. The particle size of the inorganic filler particles with a cumulative frequency of 50% is defined as $D_{50}$, and $D_{50}$ of the inorganic filler particles is defined as $D_F$.

The ratio (Dp /$D_F$) of $D_P$ which is the $D_{50}$ of the thermoplastic polymer particles to $D_F$ which is the $D_{50}$ of the inorganic filler particles is preferably 0.6 or more and 2 or less, more preferably 0.78 or more and 2 or less, and still more preferably 1 or more and 2 or less. When (Dp /$D_F$) is within the above range, the dot shape can be controlled to achieve high adhesion, and appropriate voids are secured to prevent clogging, which is preferable.

The method of adjusting the particle size distribution of the inorganic filler as described above may be, for example, a method of pulverizing the inorganic filler using a ball mill, bead mill or jet mill to obtain the desired particle size distribution, or a method of preparing multiple fillers with different particle size distributions and then blending them.

The proportion of the inorganic filler in the inorganic filler-containing layer may be set as appropriate from the viewpoint of the adhesiveness of the inorganic filler, and the permeability and heat resistance of the multilayer porous membrane, but it is preferably 50% by weight or more and less than 100% by weight, more preferably 70% by weight or more and 99.99% by weight or less, still more preferably 80% by weight or more and 99.9% by weight or less, and particularly preferably 90% by weight or more and 99% by weights or less.

(Resin Binder)

The type of resin binder is not particularly limited, but it is preferred to use one that is insoluble in the electrolyte solution of the lithium ion secondary battery and electrochemically stable in the operating range of the lithium ion secondary battery, when using a separator for a lithium ion secondary battery including the multilayer porous membrane in the present embodiment is used as.

Specific examples of resin binders include the following 1) to 7).

1) Polyolefins: Polyethylene, polypropylene, ethylene-propylene rubber and modified forms of these;

2) Conjugated diene-based polymers: for example, styrene-butadiene copolymers and their hydrogenated forms, acrylonitrile-butadiene copolymers and their hydrogenated forms and acrylonitrile-butadiene-styrene copolymers and their hydrogenated forms;

3) Acrylic polymers: for example, methacrylic acid ester-acrylic acid ester copolymers, styrene-acrylic acid ester copolymers and acrylonitrile-acrylic acid ester copolymers;

4) Polyvinyl alcohol-based resins: for example, polyvinyl alcohol and polyvinyl acetate;

5) Fluorine-containing resins: for example, polyvinylidene fluoride, polytetrafluoroethylene, vinylidene fluoride-hexafluoropropylene-tetrafluoroethylene copolymer and ethylene-tetrafluoroethylene copolymer;

6) Cellulose derivatives: for example, ethyl cellulose, methyl cellulose, hydroxyethyl cellulose and carboxymethyl cellulose; and

7) Polymers that are resins with a melting point and/or glass transition temperature of 180°C or higher, or without a melting point but having a decomposition temperature of 200°C or higher; for example, polyphenylene ethers, polysulfones, polyethersulfones, polyphenylene sulfides, polyetherimides, polyamideimides, polyamides and polyesters.

Preferred from the viewpoint of further improving the safety during short circuits are 3) acrylic polymers, 5) fluorine-containing resins and 7) polyamide polymers. Polyamides are preferably total aromatic polyamides, and especially polymetaphenylene isophthalamide, from the viewpoint of durability.

From the viewpoint of compatibility between the resin binder and the electrodes, the above 2) conjugated diene-based polymers are preferred, while from the viewpoint of voltage endurance, the above 3) acrylic polymers, and 5) fluorine-containing resins are preferred.

The above 2) conjugated diene-based polymer is a polymer that includes a conjugated diene compound as a monomer unit.

Examples of conjugated diene compounds include 1,3-butadiene, 2-methyl-1,3-butadiene, 2,3-dimethyl-1,3-butadiene, 2-chlor-1,3-butadiene, substituted straight-chain conjugated pentadienes and substituted or side chain-conjugated hexadienes, any of which may be used alone or in combinations of two or more thereof. A particularly preferred compound is 1,3-butadiene.

The above 3) acrylic polymer is a polymer that includes a (meth)acrylic compound as a monomer unit. A (meth)acrylic compound is at least one compound selected from the group consisting of (meth)acrylic acid and (meth)acrylic acid esters.

Examples of (meth)acrylic acid esters to be used as the 3) acrylic polymer include (meth)acrylic acid alkyl esters such as methyl acrylate, methyl methacrylate, ethyl acrylate, ethyl methacrylate, butyl acrylate, butyl methacrylate, 2-ethylhexyl acrylate and 2-ethylhexyl methacrylate; and epoxy group-containing (meth)acrylic acid esters such as glycidyl acrylate and glycidyl methacrylate; any of which may be used alone or in combinations of two or more thereof. Particularly preferred among these are 2-ethylhexyl acrylate (EHA) and butyl acrylate (BA).

An acrylic polymer is preferably a polymer including EHA or BA as a main structural unit, from the viewpoint of safety in impact testing. A "main structural unit" is a portion of the polymer corresponding to a monomer constituting 40 mol % or more of the entire starting material used to form the polymer.

The above 2) conjugated diene-based polymer and 3) acrylic polymer may also be obtained by copolymerization with other monomers that are copolymerizable with them. Examples of other copolymerizable monomers to be used include unsaturated carboxylic acid alkyl esters, aromatic vinyl-based monomers, vinyl cyanide-based monomers, unsaturated monomers with hydroxyalkyl groups, unsaturated amide carboxylate monomers, crotonic acid, maleic acid, maleic acid anhydride, fumaric acid and itaconic acid, any of which may be used alone or in combinations of two or more thereof. Unsaturated carboxylic acid alkyl ester monomers are particularly preferred among these. Unsaturated carboxylic acid alkyl ester monomers include dimethyl fumarate, diethyl fumarate, dimethyl maleate, diethyl maleate, dimethyl itaconate, monomethyl fumarate and monoethyl fumarate, any of which may be used alone or in combinations of two or more thereof.

The 2) conjugated diene-based polymer can be obtained by copolymerization of the aforementioned (meth)acrylic compound as another monomer.

From the viewpoint of exhibiting high adhesiveness between inorganic particles even at high temperatures above ordinary temperature, and inhibiting heat shrinkage, the resin binder is preferably in the form of a latex, and is more preferably an acrylic polymer latex.

The average particle size of the resin binder is preferably 50 nm or more and 500 nm or less, more preferably 60 nm or more and 460 nm or less, and still more preferably 80 nm or more and 250 nm or less. If the average particle size of the resin binder is 50 nm or more, the ion permeability will be less likely to decrease and a high output characteristics will be more readily exhibited, when the inorganic filler-containing layer containing the inorganic filler and resin binder has been layered on at least one side of the polyolefin microporous membrane. Even with rapid temperature increase that occurs during abnormal heat release, a smooth shutdown property is exhibited and a high degree of safety can be obtained more easily. A average particle size of 500 nm or less for the resin binder will tend to result in satisfactory adhesiveness, satisfactory heat shrinkage as a multilayer porous membrane, and excellent safety.

The average particle size of the resin binder can be controlled by adjusting the polymerization time, the polymerization temperature, the compositional ratio of the components, the loading order of the components, and the pH.

A dispersing agent such as a surfactant may also be added to the inorganic filler coating solution to improve the dispersion stability and coatability. The dispersing agent is adsorbed onto the surfaces of the inorganic filler particles in the slurry, thus stabilizing the inorganic filler particles by electrostatic repulsion or other forces, and examples thereof include polycarboxylic acid salts, sulfonic acid salts and polyoxyethers. The amount of dispersing agent added is preferably 0.2 part by weight or more and 5.0 parts by weight or less, and more preferably 0.3 part by weight or more and 1.0 parts by weight or less, based on solid content, with respect to 100 parts by weight of the inorganic filler.

(Physical Properties, Structure and Forming Method for Inorganic Filler-Containing Layer)

The thickness per layer of the inorganic filler-containing layer is preferably 0.1 $\mu$m or more and 4.0 $\mu$m or less, more preferably 0.2 $\mu$m or more and 3.0 $\mu$m or less, still more preferably 0.5 $\mu$m or more and 2.0 $\mu$m or less, and particularly preferably 1.0 $\mu$m or more and 1.5 $\mu$m or less. The thickness of the inorganic filler-containing layer is preferably 0.1 $\mu$m or more from the viewpoints of preventing deterioration of performance and safety due to the occurrence of micro-short circuits caused by being unable to resist the shrinkage stress of the substrate during a storage test, and inhibiting deformation at temperatures above the melting point of the microporous membrane. The thickness of the inorganic filler-containing layer is preferably 4.0 $\mu$m or less from the viewpoints of increasing the battery capacity, inhibiting deterioration of the rate characteristics, and inhibiting the amount of moisture adsorption by the multilayer porous film.

The layer density in the inorganic filler-containing layer is preferably 1.10 g/(m$^2 \cdot \mu$m) or more and 3.00 g/(m$^2 \cdot \mu$m) or less, more preferably 1.20 g/(m$^2 \cdot \mu$m) or more and 2.90 g/(m$^2 \cdot \mu$m) or less, still more preferably 1.40 g/(m$^2 \cdot \mu$m) or more and 2.70 g/(m$^2 \cdot \mu$m) or less, and particularly preferably 1.50 g/(m$^2 \cdot \mu$m) or more and 2.50 g/(m$^2 \cdot \mu$m) or less. The layer density in the inorganic filler-containing layer is preferably 1.10 g/(m$^2 \cdot \mu$m) or more from the viewpoint of inhibiting deformation at temperatures above the melting point of the PO microporous membrane. The layer density in the inorganic filler-containing layer is preferably 3.00 g/(m$^2 \cdot \mu$m) or less from the viewpoint of preventing capacity deterioration with repeated cycling, while maintaining the ion permeability of the inorganic filler-containing layer.

The method of forming the inorganic filler-containing layer may be, for example, a method in which a coating solution containing an inorganic filler, a resin binder, and a solvent is applied onto at least one side of a microporous membrane composed mainly of a polyolefin resin to form an inorganic filler-containing layer.

The solvent for the coating solution containing an inorganic filler and a resin binder is preferably one that can uniformly and stably disperse the inorganic filler and resin binder, and examples include N-methylpyrrolidone, N,N-dimethylformamide, N,N-dimethyl acetamide, water, ethanol, toluene, hot xylene, methylene chloride, hexane and the like.

In order to improve the dispersion stability or coatability, the coating solution containing an inorganic filler and a resin binder may also contain various additives including dispersing agents such as surfactants; thickeners; moistening agents; antifoaming agents; and pH adjustors that contain acids or alkalis. These additives are preferably ones that can be removed during solvent removal, but they may also remain in the inorganic filler-containing layer, as long as they are electrochemically stable in the range in which the lithium ion secondary battery is used, do not interfere with the battery reaction, and are stable up to about 200°C.

The method of dispersing the inorganic filler and resin binder in the solvent in the coating solution is not particularly limited, as long as it allows the coating solution to exhibit the necessary dispersion properties for the coating step. Examples include mechanical stirring using a ball mill, bead mill, planetary ball mill, vibrating ball mill, sand mill, colloid mill, attritor, roll mill, high-speed impeller disperser, disperser, homogenizer, high-speed impact mill, ultrasonic disperser or stirring blade.

The method of coating the coating solution containing an inorganic filler and a resin binder onto the microporous membrane is not particularly limited, as long as the necessary layer thickness or coating area can be ensured, and examples include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods, spray coating methods and the like.

The surface of the microporous membrane serving as the separator substrate is preferably surface-treated prior to application of the coating solution containing an inorganic filler and a resin binder, because the coating solution will be easier to apply and adhesion between the inorganic filler-containing layer and the microporous membrane surface after coating will be increased. The method of surface treatment is not particularly limited, as long as it does not significantly impair the porous structure of the microporous membrane, and examples include corona discharge treatment, mechanical roughening methods, solvent treatment, acid treatment, ultraviolet oxidation methods and the like.

The method of removing the solvent from the coated film after application of the coating solution containing an inorganic filler and a resin binder onto the microporous membrane is also not particularly limited, as long as it does not adversely affect the microporous membrane, and examples include methods of anchoring the microporous membrane while drying it at a temperature below its melting point, and methods of reduced pressure drying at low temperature. From the viewpoint of preventing the binder polymer, which is a binding component of the resin binder, from inhibiting the ion permeability of the separator while exhibiting an adhesive force to the microporous membrane or inorganic filler-containing layer (porous layer) that is the base material and binding strength between particulate binders, drying is preferably carried out under normal pressure. The drying temperature and take-up tension are preferably adjusted as appropriate from the viewpoint of controlling shrinkage stress in the MD of the microporous membrane and multilayer porous membrane.

[Physical Properties and Construction of Separator]

From the viewpoint of excellent injectability of the electrolyte solution, resistance to pooling of air and a shorter injection time, the contact angle of the separator according to the present embodiment with the electrolyte solution is preferably 0° or more and 20° or less, more preferably 2° or more and 18° or less, and still more preferably 4° or more and 16° or less. The contact angle with the electrolyte solution is preferably measured on the side of the separator on which the thermoplastic polymer-containing layer has been formed in a dot-shaped pattern.

The lower limit of the total thickness of the separator for an electricity storage device according to the present embodiment is preferably 5 μm or more, more preferably 6 μm or more, and still more preferably 7 μm or more, and the upper limit is preferably 20 μm or less, more preferably 17 μm or less, still more preferably 15 μm or less, and particularly preferably 14 μm or less. The total thickness of the separator for an electricity storage device is preferably 5 μm or more from the viewpoint of ensuring the strength and safety of the separator for an electricity storage device. Meanwhile, it is preferable for the total thickness of the separator for an electricity storage device to be 20 μm or less from the viewpoint of obtaining satisfactory charge/discharge characteristics since it reduces the resistance of the battery. The total thickness of the separator for an electricity storage device is preferably 5 μm or more and 20 μm or less, more preferably 6 μm or more and 17 μm or less, still more preferably 7 μm or more and 15 μm or less, and particularly preferably 7 μm or more and 14 μm or less.

The total thickness of the separator for an electricity storage device is determined by the following method.

The thickness of the separator is measured at room temperature (23±2°C) using a micro thickness gauge "KBM (trademark)" manufactured by Toyo Seiki Seisaku-sho, Ltd.

The lower limit of the basis weight of the separator for an electricity storage device according to the present embodiment is preferably 5.0 $g/m^2$ or more, more preferably 7.5 $g/m^2$ or more, and still more preferably 9.7 $g/m^2$ or more, and the upper limit is preferably 13.5 $g/m^2$ or less, more preferably 11.2 $g/m^2$ or less, and still more preferably 9.9 $g/m^2$ or less. The basis weight of 5.0 $g/m^2$ or more is preferable from the viewpoint of ensuring strength and safety. Meanwhile, the basis weight of 13.5 $g/m^2$ or less is preferable from the viewpoint of obtaining satisfactory charge/discharge characteristics since it reduces the resistance of the battery.

The lower limit for the air permeability of the separator for an electricity storage device according to the present embodiment is preferably 10 sec/100 $cm^3$ or more, more preferably 20 sec/100 $cm^3$ or more, still more preferably 30 sec/100 $cm^3$ or more, and most preferably 50 sec/100 $cm^3$ or more, and the upper limit is preferably 200 sec/100 $cm^3$ or less, more preferably 180 sec/100 $cm^3$ or less, still more preferably 150 sec/100 $cm^3$ or less, and most preferably 120 sec/100 $cm^3$ or less. The air permeability according to the present embodiment is preferably 10 sec/100 $cm^3$ or more from the viewpoints of inhibiting the occurrence of micro-short circuits and deterioration of performance and safety during a storage test and further inhibiting self-discharge of the power storage device when a separator for an electricity storage device is fabricated. Meanwhile, the air permeability is also preferably 200 sec/100 $cm^3$ or less from the viewpoint of obtaining satisfactory charge-discharge characteristics since it reduces the resistance of the battery. The air permeability of the separator for an electricity storage device according to the present embodiment can be adjusted by changing the stretching temperature or stretch ratio during production of the polyolefin microporous membrane, or the coverage area ratio of the thermoplastic polymer, or the form in which it is provided.

The lower limit of the puncture strength of the separator for an electricity storage device according to the present embodiment is preferably 200 gf or more, more preferably 300 gf or more, still more preferably 400 gf or more, and particularly preferably 450 gf or more. The puncture strength of 200 gf or more is preferable from the viewpoints of preventing membrane rupture due to fallen active material when the separator is wound together with the electrodes, inhibiting short circuits due to expansion and contraction of the electrodes during charging and discharging, and improving the impact resistance of the power storage device. The upper limit of the puncture strength of the separator for an electricity storage device according to the present embodiment is preferably 800 gf or less, more preferably 700 gf or less, and still more preferably 600 gf or less, from the viewpoint of reducing width shrinkage due to relaxation of orientation during heating.

Regarding the heat shrinkage ratio of the separator for an electricity storage device according to the present embodiment, a TD heat shrinkage ratio at 150°C for 1 hour is preferably -3% or more and 10% or less, more preferably -1% or more and 8% or less, and still more preferably 0% or more and 5% or less. In this case, if the heat shrinkage ratio in the TD is -3% or more, negative shrinkage (expansion) leads to twisting of the separator, thereby inhibiting the risk of short circuits between electrodes and deterioration of performance and safety. If the heat shrinkage ratio of the TD is 10% or less, deterioration of performance and safety due to the occurrence of micro-short circuits during a storage test is inhibited.

The heat shrinkage ratio of the separator according to the present embodiment can be adjusted by appropriately combining the stretching operation and heat treatment of the substrate. While inhibiting the heat shrinkage ratio in the TD, the heat shrinkage ratio in the MD is also preferably -3% to 10% or less, more preferably -1% or more and 8% or less, and still more preferably 0% or more and 5% or less.

In the present disclosure, longitudinal direction (MD) means the machine direction of the microporous membrane continuous molding, and transverse direction (TD) means the direction crossing the MD of the microporous membrane at an angle of 90°.

The shutdown temperature of the separator for an electricity storage device according to the present embodiment, as an indicator of the safety of the power storage device, is preferably 160°C or lower, more preferably 155°C or lower, still more preferably 150°C or lower, and most preferably 145°C or lower.

The short-circuit temperature of the separator for an electricity storage device according to the present embodiment, as an indicator of heat resistance, is preferably 140°C or higher, more preferably 150°C or higher, and still more preferably 160°C or higher. A short-circuit temperature of 160°C or higher is preferred from the viewpoint of safety of the power storage device, when used as a separator for an electricity storage device.

From the viewpoint of efficiently exhibiting the effect of the present embodiment, the separator according to the present embodiment preferably has an asymmetrical multilayer structure in terms of the substrate, and more preferably it has a multilayer structure in which a thermoplastic polymer-containing layer is provided on at least one surface (one side or both sides) of the substrate, and an inorganic filler-containing layer containing an inorganic filler and a resin binder is formed between at least one surface of the substrate and the thermoplastic polymer-containing layer.

[Method for Producing Separator]

The method for producing a separator for an electricity storage device according to the present embodiment comprises the steps of:

preparing a porous substrate, and
applying a slurry containing a thermoplastic polymer onto at least one surface of the porous substrate to form a thermoplastic polymer-containing layer,
a contact angle of the slurry with respect to the coated surface of the thermoplastic polymer being 20° or more and 80° or less, and
drying the slurry while applying a tension of 0.008 N/mm or more and 0.150 N/mm or less after applying the slurry containing a thermoplastic polymer onto at least one surface of the porous substrate.

In one aspect, the method for producing a separator for an electricity storage device according to the present embodiment comprises the steps of:

preparing a porous substrate,
forming an inorganic filler-containing layer formed on at least one surface of the porous substrate, and
applying a slurry containing a thermoplastic polymer onto at least one surface of the porous substrate to form a thermoplastic polymer-containing layer,
a contact angle of the slurry with respect to the coated surface of the thermoplastic polymer being 20° or more and 80° or less, and
drying the slurry while applying a tension of 0.008 N/mm or more and 0.150 N/mm or less after applying the slurry containing a thermoplastic polymer onto at least one surface of the porous substrate.

<Step of Preparing Porous Substrate>

The production method of the present embodiment includes a step of preparing a porous substrate. The step of preparing a porous substrate includes, for example, the formation of a microporous membrane by the above-mentioned method for producing a substrate, and a surface treatment of the substrate mentioned below.

<Step of Forming Inorganic Filler-Containing Layer>

The production method of the present embodiment may include a step of forming an inorganic filler-containing layer on at least one surface of the porous substrate. As the step of forming an inorganic filler-containing layer, for example, the method mentioned in the above-mentioned method for forming an inorganic filler-containing layer can be carried out.

<Step of Forming Thermoplastic Polymer-Containing Layer>

The manufacturing method of the present embodiment includes a step of applying a slurry containing a thermoplastic polymer onto at least one surface of a porous substrate to form a thermoplastic polymer-containing layer. The method for applying a slurry is not particularly limited, and examples thereof include a method in which a slurry containing a thermoplastic polymer and a solvent (a thermoplastic polymer-containing coating solution in one aspect) is applied to a polyolefin microporous membrane.

The method of applying the coating solution containing the thermoplastic polymer onto the microporous membrane is not particularly limited, as long as it can provide the necessary layer thickness and coating area. Examples include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods, spray coating methods, spray coater methods and ink-jet coating methods. Preferred among these are gravure coater methods or spray coating methods, from the viewpoint of a high degree of freedom for the coating shape of the thermoplastic polymer, to easily obtain the preferred area ratio. From the viewpoint of adjusting the dot-shaped pattern of the thermoplastic polymer-containing layer as described above, preferred methods are gravure coating, ink-jet application and coating methods that allow easy adjustment of the printing plate.

If the thermoplastic polymer-containing coating solution infiltrates to the inside of the microporous membrane when the thermoplastic polymer is coated on the polyolefin microporous membrane, the adhesive resin will become embedded on the surfaces and interiors of the pores, lowering the ion permeability. The solvent of the thermoplastic polymer-containing coating solution is therefore preferably a poor solvent for the thermoplastic polymer.

A poor solvent for the thermoplastic polymer is preferably used as the solvent of the thermoplastic polymer-containing coating solution, from the viewpoint of inhibiting reduction in permeability since the coating solution in the microporous film will fail to infiltrate and the adhesive polymer will be present mainly on the surface of the microporous film. Water is preferred as a medium with such properties. Media that can be used in combination with water include, but are not particularly limited to, ethanol and methanol. If desired, a defoamer (for example, KM-73 manufactured by Shin-Etsu Chemical Co., Ltd., SK-14, manufactured by Nissin Chemical Industry Co., Ltd., etc.) may be added to the thermoplastic polymer-containing coating solution.

From the viewpoint of adjusting the dot-shaped pattern of the thermoplastic polymer-containing layer as described above, it is preferred to optimize the thermoplastic polymer-containing coating solution (or simply "coating material") using the thermoplastic polymer and poor solvent described above.

From the viewpoint of adjusting the contact angle to the coated surface, the thermoplastic polymer-containing coating solution has a coating material viscosity of preferably within a range of 10 mPa·s or more and 100 mPa·s or less, more preferably 15 mPa·s or more and 80 mPa·s or less, still more preferably 20 mPa·s or more and 70 mPa·s or less, and particularly preferably 40 mPa·s or more and 60 mPa·s or less. A coating material viscosity within this range will tend to result in suitable thickening, thus reducing leveling, providing an irregular structure for the thermoplastic polymer particles on the dot surfaces, and increasing the wettability of the electrolyte solution to the dot surface (the injectability of the electrolyte solution in one aspect).

From the viewpoint of adjusting the contact angle to the coating surface within the numerical range described above, the thermoplastic polymer-containing coating solution has a surface tension of preferably within a range of 10 mN/m or more and 70 mN/m or less, more preferably 20 mN/m or more and 60 mN/m or less, still more preferably 25 mN/m or more and 50 mN/m or less, and particularly preferably 40 mN/m or more and 50 mN/m or less.

From the viewpoint of achieving both adhesive force to the electrode and ion permeability, the coating amount per side of the thermoplastic polymer-containing coating solution is preferably within a range of 0.03 $g/m^2$ or more and 0.50 $g/m^2$ or less, more preferably 0.04 $g/m^2$ or more and 0.30 $g/m^2$ or less, and most preferably 0.06 $g/m^2$ or more and 0.20 $g/m^2$ or less.

With respect to the thermoplastic polymer-containing coating solution, from the viewpoints of inhibiting an increase in battery resistance and deterioration of rate characteristics, and inhibiting an increase in cell temperature in a (heating) safety test caused by non-uniform current distribution due to non-uniformity in the distance between the separator and the electrode interface, the coating layer thickness of the thermoplastic polymer-containing layer is preferably within a range of 0.1 $\mu$m or more and 10 $\mu$m or less, more preferably 0.2 $\mu$m or more and 5.0 $\mu$m or less, still more preferably 0.3 $\mu$m or more and 4.0 $\mu$m or less, and particularly preferably 0.4 $\mu$m or more and 3.0 $\mu$m or less.

From the viewpoint of adjusting the contact angle of the thermoplastic polymer-containing layer or separator with respect to the electrolyte solution to within the numerical range specified above, the coating material pH of the thermoplastic polymer-containing coating solution is preferably within a range of 5 to 7.9, and more preferably 5.5 to 7.7. A coating material pH within this range can suitably reduce electrostatic repulsion and lower dispersion stability, thereby inhibiting closest packing of the thermoplastic polymer particles during the drying step, and tending to improve the wettability of the electrolyte solution to the dot surface by the irregular structure of the thermoplastic polymer particles.

Surface treatment of the porous substrate serving as the separator substrate is also preferably carried out before application of the thermoplastic polymer-containing coating solution, in order to facilitate application of the coating solution and increased adhesion between the porous substrate or the inorganic filler-containing layer and the thermoplastic (adhesive) polymer. The method of surface treatment is not particularly limited, as long as it does not significantly impair the porous structure of the porous substrate, and examples include corona discharge treatment, plasma treatment, mechanical roughening methods, solvent treatment, acid treatment, ultraviolet oxidation and the like.

For corona discharge treatment, from the viewpoint of adjusting the contact angle between the substrate of the thermoplastic polymer-containing layer or the inorganic filler-containing layer or separator and the electrolyte solution to within the numerical range specified above, the intensity of corona treatment on the substrate surface is preferably within a range of 1 W/(m$^2$/min) or more and 40 W/(m$^2$/min) or less, more preferably 3 W/(m$^2$/min) or more and 32 W/(m$^2$/min) or less, and still more preferably 5 W/(m$^2$/min) or more and 25 W/(m$^2$/min) or less. An intensity of corona treatment within the aforementioned range will tend to increase affinity with the electrolyte solution by introduction of hydrophilic groups into the substrate surface, while also improving the wettability of the electrolyte solution to the dot surface. Corona discharge treatment is also preferably carried out after the dot-shaped pattern has been formed in the thermoplastic polymer-containing layer by coating.

The method of removing the solvent from the coated film after application of the thermoplastic polymer-containing coating solution is not particularly limited, as long as it is a method that does not adversely affect the porous substrate. For example, it may be a method of drying the porous substrate at a temperature below its melting point while anchoring it, a method of reduced pressure drying at low temperature, or a method of immersing it in a poor solvent for the adhesive polymer to solidify the adhesive polymer while simultaneously extracting out the solvent.

It is preferable to control the contact angle of the adhesive coating solution (a coating solution containing a thermoplastic polymer in one aspect) with respect to at least one surface (the coated surface of the thermoplastic polymer in one aspect) of the porous substrate or inorganic filler-containing layer on which the thermoplastic polymer-containing layer is provided to be 20° or more and 80° or less, since the number and ratio of voids inside the dot plane can be controlled as described above, and repelling and pinholes can be prevented.

By controlling the contact angle of the adhesive coating solution with respect to at least one surface of the substrate or the inorganic filler-containing layer (the surface coated with the thermoplastic polymer in one aspect) within a range of preferably 20° or more and 80° or less, more preferably 30° or more and 75° or less, and still more preferably 40° or more and 70° or less, the number and proportion of voids within the dot plane can be controlled as described above.

The contact angle of the adhesive coating solution with respect to the surface of the substrate on which the thermoplastic polymer-containing layer is provided or the surface of the inorganic filler-containing layer (the surface to which the thermoplastic polymer is applied in one aspect) can be adjusted within the above-described numerical range, for example, by controlling the particle size of the thermoplastic polymer, the pore size of the substrate surface, the corona treatment strength of the substrate surface, the drying speed, the viscosity of the coating material, the surface tension of the coating material, the pH of the coating material, and the like in the process of forming the thermoplastic polymer-containing layer.

<Measurement of Contact Angle between Surface of Substrate or Inorganic Filler-Containing Layer and Adhesive Coating Solution>

Using a contact angle meter (CA-V) (model name) manufactured by Kyowa Interface Science Co., Ltd., 2 μL of each slurry (a coating solution, for example, an adhesive coating solution in one aspect) is dropped onto a clean substrate surface (which may be optionally surface-treated) or the surface of the inorganic filler-containing layer, and the contact angle is measured after the lapse of 40 seconds.

<Drying Step>

The production method of the present embodiment includes a step of drying the slurry while applying a tension of 0.008 N/mm or more and 0.150 N/mm or less after applying the slurry containing a thermoplastic polymer onto at least one surface of the porous substrate.

By controlling the tension during drying within a range of preferably 0.008 N/mm or more and 0.150 N/mm or less, more preferably 0.010 N/mm or more and 0.100 N/mm or less, still more preferably 0.015 N/mm or more and 0.080 N/mm or less, and particularly preferably 0.020 N/mm or more and 0.050 N/mm or less, the number and proportion of voids inside the dot plane can be controlled as mentioned above.

For drying of the coated film formed by applying the adhesive coating solution onto the substrate or the inorganic filler-containing layer, from the viewpoint of adjusting the contact angle between the substrate of the thermoplastic polymer-containing layer or the inorganic filler-containing layer or the contact angle between the thermoplastic polymer-containing layer or separator and the electrolyte solution to within the numerical range specified above, the drying speed is preferably within a range of 0.03 g/(m²·s) or more and 4.0 g/(m²·s) or less, more preferably 0.05 g/(m²·s) or more and 3.5 g/(m²·s) or less, and still more preferably 0.08 g/(m²·s) or more and 3.0 g/(m²·s) or less. A drying speed within this range will be a suitable drying speed, tending to reduce leveling, providing an irregular structure for the thermoplastic polymer particles on the dot surfaces, and increasing the wettability of the electrolyte solution to the dot surface. From the same viewpoint, the temperature is preferably increased by warming or heating during drying of the coated film, to an extent that does not degrade the particle shapes in the thermoplastic polymer-containing layer.

[Stacked Body]

A stacked body according to the present embodiment is obtained by stacking a separator and electrodes. The separator of the present embodiment may be used as a stacked body by bonding with the electrodes. The stacked body according to the present embodiment has excellent handleability during winding and provides an excellent rate characteristics for an electricity storage device, while also exhibiting excellent adhesion and ion permeability for the thermoplastic polymer-containing layer and polyolefin microporous membrane. Consequently, there are no particular restrictions on usage of the stacked body, and suitable uses include electricity storage devices, among which are batteries such as non-aqueous electrolyte solution secondary batteries, and condensers or capacitors.

An electrode to be used in the stacked body of the present embodiment may be any one mentioned below under "electricity Storage Device". The method for producing the stacked body using a separator of the present embodiment is not particularly limited, and for example, production may be by stacking the separator of the present embodiment with the electrodes, if necessary while heating and/or pressing. The heating and/or pressing can be carried out during stacking of the electrodes and separator. Alternatively, the production method may be stacking of the electrodes and separator, followed by winding into a circular or flat spiral shape to obtain a wound body which is then heated and/or pressed.

The stacked body may also be produced by flat stacking in the order: positive electrode-separator-negative electrode-separator or negative electrode-separator-positive electrode-separator, if necessary with heating and/or pressing. From the viewpoint of efficiently exhibiting the effect of the present embodiment, the stacking is preferably carried out in a manner such that the positive electrode and the side of the separator which has the inorganic filler-containing layer described above are disposed facing each other, in terms of the substrate of the separator.

More specifically, the separator of the present embodiment may be prepared as a longitudinal separator with a width of 10 to 500 mm (preferably 80 to 500 mm) and a length of 200 to 4,000 m (preferably 1,000 to 4,000 m), with the separator being stacked during production according to the order: positive electrode-separator-negative electrode-separator or negative electrode-separator-positive electrode-separator, if necessary with heating and/or pressing.

The heating temperature is preferably 40 to 120°C. The heating time is preferably 5 seconds to 30 minutes. The pressing pressure is preferably 1 to 30 MPa. The pressing time is also preferably 5 seconds to 30 minutes. The order of heating and pressing may be heating followed by pressing, pressing followed by heating, or simultaneous pressing and heating. Simultaneous pressing and heating is preferred.

<Electricity Storage Device>

The separator of the present embodiment may be used as a separator for a battery, condenser or capacitor, or it may be used for separation of substances. When used as a separator for an electricity storage device, it is possible to provide adhesiveness for the electrodes and excellent battery performance. Hereinafter, preferable aspect in which the electricity storage device is a non-aqueous electrolyte solution secondary battery will be described.

The power storage device according to the present embodiment comprises a positive electrode, a negative electrode, a separator for an electricity storage device according to the present embodiment, and a non-aqueous electrolyte solution. For manufacture of a non-aqueous electrolyte solution secondary battery using the separator of the present embodiment, there are no limitations for the positive electrode, negative electrode or non-aqueous electrolyte solution, and any publicly known ones may be used.

The positive electrode material is not particularly limited, and examples include lithiumcontaining composite oxides such as $LiCoO_2$, $LiNiO_2$, spinel-type $LiMnO_4$ and olivine-type LiFePO4.

The negative electrode material is also not particularly limited, and examples include carbon materials such as graphite, non-graphitizable carbon, easily graphitizable carbon and complex carbon; or silicon, tin, metal lithium, various alloy materials and the like.

The non-aqueous electrolyte solution is not particularly limited, and for example, an electrolyte solution with an electrolyte dissolved in an organic solvent may be used, with examples of organic solvents including propylene carbonate, ethylene carbonate, dimethyl carbonate, diethyl carbonate and ethylmethyl carbonate, and examples of electrolytes including lithium salts such as LiClO4, $LiBF_4$ and $LiPF_6$.

The method for producing an electricity storage device using the separator of the present embodiment is not particularly limited, and when the electricity storage device is a secondary battery, for example, it can be produced by first preparing separators of the present embodiment as longitudinally shaped separators each with a width of 10 to 500 mm (preferably 80 to 500 mm) and a length of 200 to 4,000 m (preferably 1,000 to 4,000 m), stacking the separators in the order: positive electrode-separator-negative electrode-separator, or negative electrode-separator-positive electrode-separator, winding the stack into a circular or flat spiral form to obtain a wound body, and inserting the wound body into a battery can and further injecting an electrolyte solution into it.

A stacked body can then be formed by subjecting the wound body to heating and/or pressing. The wound body can also be produced using the stacked body wound into a circular or flat spiral form. The electricity storage device can alternatively be produced through a step of injecting an electrolyte solution into a flat stack in the order: positive electrode-separator-negative electrode-separator or negative electrode-separator-positive electrode-separator, or the stacked body laminated with a bag-like film, optionally through a step of heating and/or pressing. The step of heating and/or pressing may be carried out before and/or after the step of injecting the electrolyte solution.

From the viewpoint of efficiently exhibiting the effect of the present embodiment in an electricity storage device including a positive electrode, a negative electrode, a separator according to the present embodiment, and a non-aqueous electrolyte solution, preferably the side of the separator with the inorganic filler-containing layer described above is disposed in a manner facing the positive electrode, in terms of the substrate.

In one aspect, regarding the separator according to the present embodiment, the adhesive strength D1 as measured after stacking the thermoplastic polymer-containing layer with a positive electrode and pressing under 1 MPa at 100°C for 30 seconds is 0.1 N/m or more and 20 N/m or less, and

the adhesive strength D2 as measured after stacking the thermoplastic polymer-containing layer with a negative electrode and pressing under 1 MPa at 100°C for 30 seconds is 0.1 N/m or more and 20 N/m or less, thus exerting the effects of improving battery cycle characteristics, inhibiting battery resistance, inhibiting the battery resistance, improving the handleability in the cell fabrication process and injectability of the electrolyte solution into the cell, and reducing the cell thickness after pressing to realize a high capacity.

From the viewpoints of improving the cycle characteristics of the battery, inhibiting the battery resistance, improving the handleability in the cell fabrication process and the injectability of the electrolyte solution into the cell, and reducing the cell thickness after pressing to realize a high capacity, D1 is preferably 0.1 N/m or more and 20 N/m or less, more preferably 0.5 N/m or more and 10 N/m or less, and particularly preferably 1 N/m or more and 3 N/m or less.

From the viewpoints of improving the cycle characteristics of the battery, inhibiting the battery resistance, improving the handleability in the cell fabrication process and the injectability of the electrolyte solution into the cell, and reducing the cell thickness after pressing to realize a high capacity, D2 is preferably 0.1 N/m or more and 20 N/m or less, more preferably 0.3 N/m or more and 10 N/m or less, and particularly preferably 0.5 N/m or more and 2 N/m or less.

To adjust the positive electrode/negative electrode ratio balance in dry bonding (adhesion balance between both electrodes), improve the processability of cell production, and achieve high capacity, the ratio of D1 to D2 (D1/D2) is preferably 0.1 or more and 15 or less, more preferably 0.5 or more and 10 or less, and still more preferably 1.5 or more and 7 or less.

The adhesive strengths D1 and D2 of the separator can be measured by the following method.

The separator for an electricity storage device is cut out into a rectangular shape having a width of 20 mm and a length of 70 mm.

The positive electrode or negative electrode to be used as the adherend is cut out into a rectangular shape having a width of 15 mm and a length of 60 mm.

It is possible to use, as the positive electrode, for example, (manufactured by Enertech, positive electrode material: $LiCoO_2$, conductive aid: acetylene black, L/W: 36 mg/cm² for both sides, Al current collector thickness: 15 $\mu$m), and to use, as the negative electrode, for example, (manufactured by Enertech, negative electrode material: graphite, conductive aid: acetylene black, L/W: 20 mg/cm² for both sides, Cu current collector thickness: 10 $\mu$m, thickness of negative electrode after pressing: 140 $\mu$m).

Then, a stacked body was obtained by stacking so that the thermoplastic polymer-containing layer of the separator and the positive electrode active material or the negative electrode active material of the positive electrode or the negative electrode face each other. The laminate is pressed under the following conditions.

Press pressure: 1 MPa
Temperature: 100°C
Pressing time: 30 seconds

For each of the pressed stacked bodies, ZP5N and MX2-500N force gauges manufactured by Imada Co., Ltd. were used for a 90° peel test at a peel rate of 50 mm/min, with a pulling system in which the electrodes were anchored and the separator held and pulled to determine the peel strength.

The peel strength from the positive electrode is defined as D1, and the peel strength from the negative electrode is defined as D2.

However, for a separator having an inorganic filler-containing layer on only one side of a polyolefin substrate, the peel strength between the thermoplastic polymer layer on the inorganic filler-containing layer side and the positive electrode is defined D1, and the peel strength between the thermoplastic polymer layer on the polyolefin substrate side and the negative electrode is defined D2.

For separators having a thermoplastic polymer-containing layer that serves as an adhesive layer on only one side of a polyolefin substrate, the peel strengths of the thermoplastic polymer-containing layer and both the positive electrode and the negative electrode are measured, and the peel strength between the thermoplastic polymer layer and the positive electrode is defined as D1, and the peel strength between the thermoplastic polymer-containing layer and the negative electrode is defined as D2.

For other samples, when the values are the same on both sides of the separator to be measured, that value is used; when they are different, the larger value is used as the measured value and is defined as D1 or D2.

In one aspect, regarding the separator according to the present embodiment, the adhesive strength W1 as measured after stacking the thermoplastic polymer-containing layer with a positive electrode in the presence of an electrolyte solution, leaving to stand for 12 hours, and pressing under 0.5 MPa at 45°C for 30 minutes is 0.1 N/m or more and 20 N/m or less, and

the adhesive strength W2 as measured after stacking the thermoplastic polymer-containing layer with a negative electrode in the presence of an electrolyte solution, leaving to stand for 12 hours, and pressing under 0.5 MPa at 45°C for 30 minutes is 0.1 N/m or more and 20 N/m or less, and thus cell distortion is inhibited to realize excellent cycle characteristics.

From the viewpoint of improving the cycle characteristics of the battery and inhibiting the battery resistance, W1 is preferably 0.1 N/m or more and 20 N/m or less, more preferably 0.3 N/m or more and 10 N/m or less, and particularly preferably 0.5 N/m or more and 3 N/m or less.

From the viewpoint of improving the cycle characteristics of the battery and inhibiting the battery resistance, W2 is preferably 0.1 N/m or more and 20 N/m or less, more preferably 0.15 N/m or more and 10 N/m or less, and particularly preferably 0.2 N/m or more and 2 N/m or less.

To adjust the positive electrode/negative electrode ratio in wet bonding (adhesion balance between both electrodes), to prevent cell distortion for improving the cycle characteristics, and to improve the balance between handleability and resistance in the cell fabrication process, the ratio of W1 to W2 (W1/W2) is preferably 0.1 or more and 15 or less, more preferably 0.5 or more and 10 or less, still more preferably 1.5 or more and 7 or less, and particularly preferably 2 or more and 4.5.

The adhesive strengths W1 and W2 of the separator can be measured by the following method.

The separator for an electricity storage device is cut out into a rectangular shape having a width of 20 mm and a length of 70 mm. The positive electrode or negative electrode to be used as the adherend is cut out into a rectangular shape having a width of 15 mm and a length of 60 mm.

It is possible to use, as the positive electrode, for example, (manufactured by Enertech, positive electrode material: $LiCoO_2$, conductive aid: acetylene black, L/W: 36 mg/cm$^2$ for both sides, Al current collector thickness: 15 $\mu$m), and to use, as the negative electrode, for example, (manufactured by Enertech, negative electrode material: graphite, conductive aid: acetylene black, L/W: 20 mg/cm$^2$ for both sides, Cu current collector thickness: 10 $\mu$m, thickness of negative electrode after pressing: 140 $\mu$m).

Then, a stacked body was obtained by stacking so that the thermoplastic polymer-containing layer of the separator and the positive electrode active material or the negative electrode active material of the positive electrode or the negative electrode face each other. The stacked body was then placed in a rectangular aluminum pouch having a width of 60 mm and a length of 120 mm, and 0.4 mL of an electrolyte solution containing 1 mol/L $LiPF_6$ and 1% by weight vinylene carbonate at 25°C in a ratio of ethylene carbonate (EC):ethyl methyl carbonate (EMC) = 1:2 (volume ratio) was added, and after leaving to stand at 25°C for 12 hours, the aluminum pouch containing the stacked body was then pressed under the following conditions.

Press pressure: 0.5 MPa
Temperature: 45°C
Pressing time: 30 minutes

For each of the pressed stacked bodies, ZP5N and MX2-500N force gauges (product name) manufactured by Imada Co., Ltd. were used for a 90° peel test at a peel rate of 50 mm/min, with a pulling system in which the electrodes were anchored and the separator held and pulled to determine the peel strength.

The peel strength from the positive electrode is defined as W1, and the peel strength from the negative electrode is defined as W2.

However, for a separator having an inorganic filler-containing layer on only one side of a polyolefin substrate, the peel strength between the thermoplastic polymer layer on the inorganic filler-containing layer side and the positive electrode is defined W1, and the peel strength between the thermoplastic polymer layer on the polyolefin substrate side and the negative electrode is defined W2.

For separators having a thermoplastic polymer-containing layer that serves as an adhesive layer on only one side of a polyolefin substrate, the peel strengths of the thermoplastic polymer-containing layer and both the positive electrode and the negative electrode are measured, and the peel strength between the thermoplastic polymer layer and the positive electrode is defined as W1, and the peel strength between the thermoplastic polymer-containing layer and the negative electrode is defined as W2.

For other samples, when the values are the same on both sides of the separator to be measured, that value is used; when they are different, the larger value is used as the measured value and is defined as W1 or W2.

In one aspect, regarding the separator according to the present embodiment, the adhesive strength W3 as measured after stacking the thermoplastic polymer-containing layer with a positive electrode in the presence of an electrolyte solution, leaving to stand for 12 hours, and pressing under 1 MPa at 90°C for 1 minute is 0.1 N/m or more and 20 N/m or less, and

the adhesive strength W4 as measured after stacking the thermoplastic polymer-containing layer with a negative electrode in the presence of an electrolyte solution, leaving to stand for 12 hours, and pressing 1 MPa at 90°C for 1 minute is 0.1 N/m or more and 20 N/m or less, and thus cell distortion is inhibited to realize excellent cycle characteristics.

From the viewpoint of improving the cycle characteristics of the battery and inhibiting the battery resistance, W3 is preferably 0.1 N/m or more and 20 N/m or less, more preferably 0.3 N/m or more and 10 N/m or less, and particularly preferably 0.5 N/m or more and 4 N/m or less.

From the viewpoint of improving the cycle characteristics of the battery and inhibiting the battery resistance, W4 is preferably 0.1 N/m or more and 20 N/m or less, more preferably 0.5 N/m or more and 10 N/m or less, and particularly preferably 1 N/m or more and 3 N/m or less.

To adjust the positive electrode/negative electrode ratio in wet bonding (adhesion balance between both electrodes), to prevent cell distortion for improving the cycle characteristics, in the step of pressing at low temperature and low pressure, and to improve the balance between handleability and resistance in the cell fabrication process, the ratio of W3 to W4 (W3/W4) is preferably 0.1 or more and 15 or less, more preferably 0.2 or more and 10 or less, still more preferably 0.3 or more and 5 or less, and particularly preferably 2 or more and 4.5 or less.

The adhesive strengths W3 and W4 of the separator can be measured by the following method.

The separator for an electricity storage device is cut out into a rectangular shape having a width of 20 mm and a length of 70 mm. The positive electrode or negative electrode to be used as the adherend is cut out into a rectangular shape having a width of 15 mm and a length of 60 mm.

It is possible to use, as the positive electrode, for example, (manufactured by Enertech, positive electrode material: $LiCoO_2$, conductive aid: acetylene black, L/W: 36 mg/cm$^2$ for both sides, Al current collector thickness: 15 $\mu$m), and to use, as the negative electrode, for example, (manufactured by Enertech, negative electrode material: graphite, conductive aid: acetylene black, L/W: 20 mg/cm$^2$ for both sides, Cu current collector thickness: 10 $\mu$m, thickness of negative electrode after pressing: 140 $\mu$m).

Then, a stacked body was obtained by stacking so that the thermoplastic polymer-containing layer of the separator and the positive electrode active material or the negative electrode active material of the positive electrode or the negative electrode face each other. The stacked body was then placed in a rectangular aluminum pouch having a width of 60 mm and a length of 120 mm, and 0.4 mL of an electrolyte solution containing 1 mol/L $LiPF_6$ and 1% by weight vinylene carbonate at 25°C in a ratio of ethylene carbonate (EC):ethyl methyl carbonate (EMC) = 1:2 (volume ratio) was added, and after leaving to stand at 25°C for 12 hours, the aluminum pouch containing the stacked body was then pressed under the following conditions.

Press pressure: 1 MPa
Temperature: 90°C
Pressing time: 1 minute

For each of the pressed stacked bodies, ZP5N and MX2-500N force gauges (product name) manufactured by Imada Co., Ltd. were used for a 90° peel test at a peel rate of 50 mm/min, with a pulling system in which the electrodes were anchored and the separator held and pulled to determine the peel strength.

The peel strength from the positive electrode is defined as W3, and the peel strength from the negative electrode is defined as W4.

However, for a separator having an inorganic filler-containing layer on only one side of a polyolefin substrate, the peel strength between the thermoplastic polymer layer on the inorganic filler-containing layer side and the positive electrode is defined W3, and the peel strength between the thermoplastic polymer layer on the polyolefin substrate side and the negative electrode is defined W4.

For separators having a thermoplastic polymer-containing layer that serves as an adhesive layer on only one side of a polyolefin substrate, the peel strengths of the thermoplastic polymer-containing layer and both the positive electrode and the negative electrode are measured, and the peel strength between the thermoplastic polymer layer and the positive electrode is defined as W3, and the peel strength between the thermoplastic polymer-containing layer and the negative electrode is defined as W4.

For other samples, when the values are the same on both sides of the separator to be measured, that value is used; when they are different, the larger value is used as the measured value and is defined as W3 or W4.

In the power storage device according to the present embodiment, when the adhesive force between the separator for an electricity storage device according to the present embodiment and the positive electrode is Ad1, and the adhesive force between the separator for an electricity storage device according to the present embodiment and the negative electrode is Ad2, it is preferable that $0.1 \leq Ad1/Ad2 \leq 15$, and Ad1/Ad2 is preferably 0.5 or more and 10 or less, and more preferably 1.5 or more and 7 or less. When Ad1/Ad2 is within the above numerical range, the adhesion balance between the positive electrode and the negative electrode inside the battery is satisfactory, and the effect of preventing cell distortion for improving the cycle characteristics can be realized.

The adhesive strengths Ad1 and Ad2 of the separators can be measured by the following method.

A stacked body of the separator and the electrodes is removed from the electricity storage device (which may be before or after a rate characteristic evaluation test and a cycle characteristic evaluation test), and the laminated portions of the positive electrode and the separator, and the negative electrode and the separator are cut out into rectangular shapes having a width of 15 mm and a length of 60 mm. For each of the stacked bodies, ZP5N and MX2-500N force gauges (product name) manufactured by Imada Co., Ltd. were used for a 90° peel test at a peel rate of 50 mm/min, with a pulling system in which the electrodes were anchored and the separator held and pulled to determine the peel strength.

The peel strength from the positive electrode is defined as Ad1 (N/m), and the peel strength from the negative electrode is defined as Ad2 (N/m).

The adhesive strengths Ad1 and Ad2 may be the ratio of the adhesive strength of the separator and electrode stacked body itself taken out from inside the battery, or the separator taken out from the electricity storage device may be isolated, washed and dried, and then measured in the same manner as W1 and W2, and the result may fall within the above range.

The electricity storage device of the present embodiment can be produced by the same method as that for producing the battery used in the rate characteristic test, cycle characteristic test and the like mentioned in Examples mentioned below.

Unless otherwise specified, the measured values for the different parameters mentioned above are the values measured by the measuring methods in the following Examples.

EXAMPLES

Hereinafter, the present invention will be described in detail by way of Examples and Comparative Examples, with the understanding that these Examples are in no way limitative on the present invention. The methods of measuring and evaluating the physical properties used in the following Production Examples, Examples and Comparative Examples were as follows. Unless otherwise specified, measurement and evaluation were carried out under conditions of room temperature at 23°C, 1 atmosphere, and 50% relative humidity.

[Measuring Methods]

<Viscosity-Average Molecular Weight (hereinafter also referred to as Mv)>

The limiting viscosity [η] at 135°C with a decalin solvent was determined based on ASRM-D4020, and the Mv of polyethylene was calculated by the following formula.

$$[\eta] = 0.00068 \times Mv^{0.67}$$

The Mv of polypropylene was calculated by the following formula.

$$[\eta] = 1.10 \times 10^{-4} Mv^{0.80}$$

<Volume Average Particle Size $D_{50}$ of Thermoplastic Polymer Particles and Inorganic Filler Particles>

For particle size distribution and median diameter of the inorganic filler particles or thermoplastic polymer particles, the particle size distribution of an inorganic filler particle dispersion or a slurry coating solution containing thermoplastic polymer particles was measured using a laser particle size distribution measuring device (Microtrac MT3300EX, manufactured by Nikkiso Co., Ltd.). If necessary, the particle size distribution of the inorganic filler particles and the slurry coating solution can be adjusted using the particle size distribution of water or a binder polymer as a baseline. The particle size of the inorganic filler particles with a cumulative frequency of 50% was defined as $D_{50}$, $D_{50}$ of the inorganic filler particles was defined as $D_F$, and $D_{50}$ of the thermoplastic polymer was defined as Dp.

<Basis Weight of Polyolefin Microporous Membrane and Basis Weight Per Side of Thermoplastic Polymer-Containing Layer>

A 10 cm $\times$ 10 cm-square sample was cut out from a polyolefin porous substrate, or a polyolefin porous substrate and an inorganic filler-containing layer, and the weight was measured using an AEL-200 electronic scale manufactured by Shimadzu Corporation. The obtained weight was multiplied by 100 to calculate the basis weight (g/m$^2$) of the membrane per 1 m$^2$.

A 10 cm $\times$ 10 cm-square sample was cut out from a polyolefin porous substrate or a separator in which a thermoplastic polymer-containing layer was formed on a polyolefin porous substrate and an inorganic filler-containing layer, and an AEL-200 electronic scale was used to measure its weight. The obtained weight was multiplied by 100 to calculate the basis weight (g/m$^2$) of the separator per 1 m$^2$.

The basis weight per side of the thermoplastic polymer-containing layer was calculated from the difference in basis weight between the polyolefin porous substrate or the polyolefin porous substrate and the inorganic filler-containing layer, and the separator.

Alternatively, the basis weight per side of the thermoplastic polymer-containing layer can be determined by peeling off the thermoplastic polymer-containing layer from the surface of a 10 cm $\times$ 10 cm-square sample and calculating the weight reduction using a thermogravimetric differential thermal analyzer (NEXTA STA 200RV, manufactured by Hitachi High-Tech Science, Ltd.).

<Porosity (%) of Polyolefin Microporous Membrane>

A 10 cm $\times$ 10 cm-square sample was cut out from the polyolefin microporous membrane, and its volume (cm$^3$) and mass (g) were determined and used for calculation by the following formula, using 0.95 (g/cm$^3$) as the membrane density.

$$\text{Porosity} = (\text{volume - mass/membrane density})/\text{volume} \times 100$$

<Air Permeability (Sec/100 cm$^3$) of Polyolefin Microporous Membrane and Separator>

The air permeability of the polyolefin microporous membrane and the separator was determined as the air permeability resistance measured with a Gurley air permeability tester (G-B2 (trademark), manufactured by Toyo Seiki Seisaku-sho, Ltd.), according to JIS P-8117.

<Puncture Strength (gf) of Polyolefin Microporous Membrane and Separator>

Using a Handy Compression Tester KES-G5 (trademark) by Kato Tech Corp., the polyolefin microporous membrane and the separator were anchored with a specimen holder having an opening diameter of 11.3 mm. Next, the center section of the anchored polyolefin microporous membrane and separator was subjected to a puncture test with a needle having a tip curvature radius of 0.5 mm, at a puncture speed of 2 mm/sec in a 25°C atmosphere, obtaining the puncture strength (gf) as the maximum puncture load. The basis weight-equivalent puncture strength can also be calculated from the puncture strength and the basis weight.

<Total Thickness of Polyolefin Microporous Membrane and Separator>

The total thickness of the polyolefin microporous membrane and the separator was measured at room temperature (23$\pm$2°C) using a micro thickness gauge "KBM (trademark)" manufactured by Toyo Seiki Seisaku-sho, Ltd.

<Thickness of Inorganic Filler-Containing Layer>

The separator sample was subjected to cross-section processing with a BIB (broad ion beam). The cross-section processing was carried out with IM4000 manufactured by Hitachi High-Technologies Corp., under processing conditions with an argon beam species, an acceleration voltage of 3 kV and a beam current of 25 to 35 $\mu$A. In order to reduce heat damage during processing, the sample was cooled as necessary just before processing. Specifically, the sample is left to stand for whole day and night in a cooling device at -40° C. This allowed a smooth cross-section of the separator to be obtained.

The thickness of the inorganic filler-containing layer was measured using a scanning electron microscope (SEM) (Model S-4800, manufactured by Hitachi, Ltd.). The sample was vapor-deposited with osmium and observed under conditions of an acceleration voltage of 1.0 kV and a magnification of 5,000 times, and the thickness of the inorganic filler-containing layer was measured at five observation points and the arithmetic average value was calculated to be the thickness of the inorganic filler-containing layer of the separator.

<Heat Shrinkage Ratio>

The separator as a sample was cut into 100 mm in MD and 100 mm in TD and left to stand in an oven at 150°C for 1 hour. At this time, the sample was sandwiched between two sheets of paper so that the hot air would not directly hit the sample. After the sample was removed from the oven and cooled, the length (mm) was measured and a heat shrinkage ratio was calculated by the following formula. The measurements were carried out in the MD and TD, and the TD value was shown as the heat shrinkage ratio.

$$\text{Heat shrinkage ratio (\%)} = \{(100 - \text{length of sample after heating})/100\} \times 100$$

<Measurement of Swelling Degree of Thermoplastic Polymer>

Thermoplastic polymer particles are vacuum-dried at a temperature below their melting point for 12 hours to completely remove the solvent, thus obtaining a dried material for the thermoplastic polymer particles. The mass of about 0.5 g of the resulting dried product was weighed and defined as a pre-immersion mass (WA). This dried product was placed in a 50 mL vial together with 15 g of an electrolyte solution of ethylene carbonate (EC):ethyl methyl carbonate (EMC) = 1:2 (volume ratio) containing 1 mol/L $LiPF_6$ and 1% by weight vinylene carbonate at 25°C, and after immersion for 72 hours, the sample was removed and wiped with a towel paper, and immediately thereafter, the mass was measured and defined as the mass after immersion (WB).

The swelling degree of the thermoplastic polymer-containing layer in an electrolyte solution is calculated according to the following formula.

$$\text{Swelling degree (times)} = WB/WA$$

In the above formula, if the material of the thermoplastic polymer-containing layer does not swell or dissolve in the electrolyte solution, the swelling degree will be 1 time.

<Glass Transition Temperature (°C) of Thermoplastic Polymer>

A sufficient amount of the thermoplastic polymer coating solution (nonvolatile content = 30%) was placed in an aluminum tray and dried for 30 minutes in a hot air drier at 130°C. About 5 mg of the dried film was packed into a measuring aluminum container, and the DSC curve and DDSC curve were obtained using a DSC measuring apparatus (DSC Q2000, manufactured by TA Instruments) under a nitrogen atmosphere. The measuring conditions were as follows.

(First stage temperature increase program)

40°C start, temperature increase at 50°C/minute. The temperature was maintained for 5 minutes after reaching 200°C.

(Second stage temperature decrease program)

Temperature decreases from 200°C at 20°C/minute. The temperature was maintained for 5 minutes after reaching -50°C.

(Third stage temperature increase program)

Temperature increases from -50°C to 200°C at 20°C/minute. Recording of DSC and DDSC data during the third stage heating.

In accordance with the method mentioned in JIS-K7121, the intersection between the baseline (an extended straight line toward the high-temperature end from the baseline of the obtained DSC curve) and the tangent line at the inflection point (the point where the upwardly convex curve changed to a downwardly convex curve) was defined as the glass transition temperature (Tg).

<Dot Diameter>

The dot diameter of the coated pattern was measured using a microscope (model: VHX-7000 by Keyence Corp.). The separator sample was photographed (coaxial lighting) at a magnification of 100 times, and the diameters of a plurality of dots (five points) were measured in measurement mode, and the average value was calculated as the dot diameter.

<Number of Voids (Exposed Portions) Inside Plane of Dots>

The number of exposed portions of the inorganic filler-containing layer or substrate surface contained inside the plane of each dot in the thermoplastic polymer-containing layer was measured using a scanning electron microscope (SEM) (model: S-4800, manufactured by Hitachi, Ltd.). After osmium was vapor-deposited onto a separator sample, the sample was observed under the conditions of an acceleration voltage of 1.0 kV and a magnification of 50 times. This observation was carried out multiple times, and 100 dots showing the entire image are randomly selected, and the number of voids (exposed portions) contained in each dot was counted.

<Proportion of Dots with Multiple or More Voids>

The voids inside the plane of the 100 dots randomly selected as above were counted, and the number of dots with multiple or more voids (2 to 5 points) were counted. The ratio of the number of dots having multiple or more voids to 100 dots selected at random was determined.

<SD Value>

$$\text{SD value (nm)} = (D_{84} - D_{16})/2 \quad \cdots \text{Formula}$$

The particle size of the thermoplastic polymer with a cumulative frequency of 50% is defined as $D_{50}$, the particle size of the thermoplastic polymer with a cumulative frequency of 16% is defined as $D_{16}$, and the particle size of the thermoplastic polymer with a cumulative frequency of 84% is defined as $D_{84}$.

$D_{50}$, $D_{16}$ and $D_{84}$ of the thermoplastic polymer were determined by the following method.

The particle size distribution and median diameter of the thermoplastic polymer can be measured using a laser particle size distribution measuring device (Microtrac MT3300EX, manufactured by Nikkiso Co., Ltd.). If necessary, the particle size distribution of the thermoplastic polymer can be adjusted using the particle size distribution of water or a binder polymer as a baseline. The particle size of the thermoplastic polymer with a cumulative frequency of 50% is defined as $D_{50}$, the particle size of the thermoplastic polymer with a cumulative frequency of 16% is defined as $D_{16}$, and the particle size of the thermoplastic polymer with a cumulative frequency of 84% is defined as $D_{84}$.

<Pore Size Proportion T and Area of Pores of Inorganic Filler-Containing Layer>

The area of the pores and the proportion T of the pores having an area within a range of 0.001 $\mu m^2$ to 0.05 $\mu m^2$ can be determined by the following method.

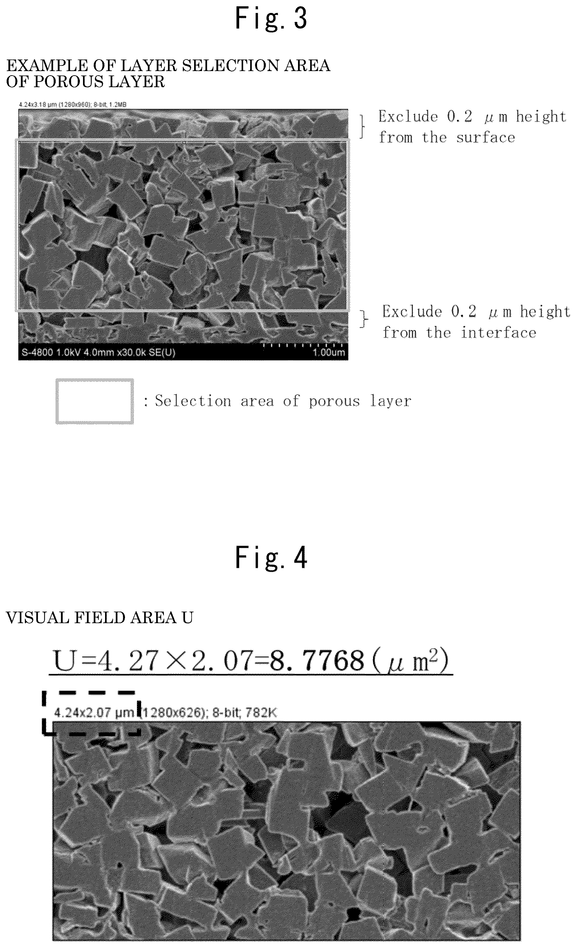

The proportion T of the number of pores of 0.001 $\mu m^2$ to 0.05 $\mu m^2$ with respect to the total number of pores are calculated by the following method using "Fiji" (Fuji Is Just Image J) image processing software. FIG. 3 to FIG. 7 show concrete examples of binarization for calculation.

First, "File" → "Open" is clicked to open the cross-section SEM electronic image of interest. Next, the straight-line selection tool "Straight" is used to measure a known distance in the image. The measuring units and known distance are then inputted to set the scale, by opening "Analyze" → "SET SCALE".

Next, "Rectangular selections" is used to select a desired region (inorganic filler-containing layer), for selection of the area to be evaluated in the binarization. For selection of the desired region in the height (vertical) direction of the image, if the thickness of the inorganic filler-containing layer is 1.0 $\mu$m or more, selection is made of the remaining area after excluding the location up to a thickness of 0.2 $\mu$m on the inorganic filler-containing layer side from the interface between the polyolefin microporous membrane and inorganic filler-containing layer, and the location up to a thickness of 0.2 $\mu$m from the outer surface of the inorganic filler-containing layer, as shown in FIG. 3. When the outer surface of the inorganic filler-containing layer does not appear in the image, the location up to 0.2 $\mu$m from the top of the image is excluded. When the thickness of the inorganic filler-containing layer is less than 1.0 $\mu$m, meanwhile, 10% of each thickness from the interface and the outer surface are excluded, and the other 80% is selected as the remainder. The entire image is selected in the horizontal direction.

Next, "Image" → "Crop" is clicked to display only the selected area. The visual field area U of the selected area is calculated at this time, as shown in FIG. 4.

The contrast of the cross-sectional SEM image is then flattened. Specifically, "Process" → "Enhance Contrast" is opened, setting "Saturated pixels" to 0.3%, and checking "Equalize histogram", and "OK" is clicked. This processing accentuates contrast of the image, rendering the light areas (the edges of the inorganic filler particles) lighter and the dark (pore) areas darker.

Next, "Plugins" → "Process" → "Bilateral Filter" is opened, setting 16 for "Spatial radius" and 64 for "range radius", and "OK" is clicked. This processing removes noise while retaining the edges of the filler particles.

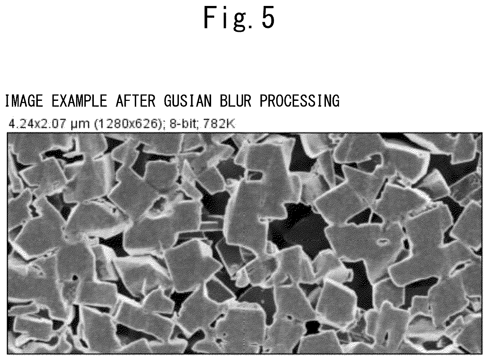

Next, "Process" → "Filters" → "Gaussian Blur" is opened, setting 1.0 for "Sigma (radius)", and "OK" is clicked. This results in an image as shown in FIG. 5.

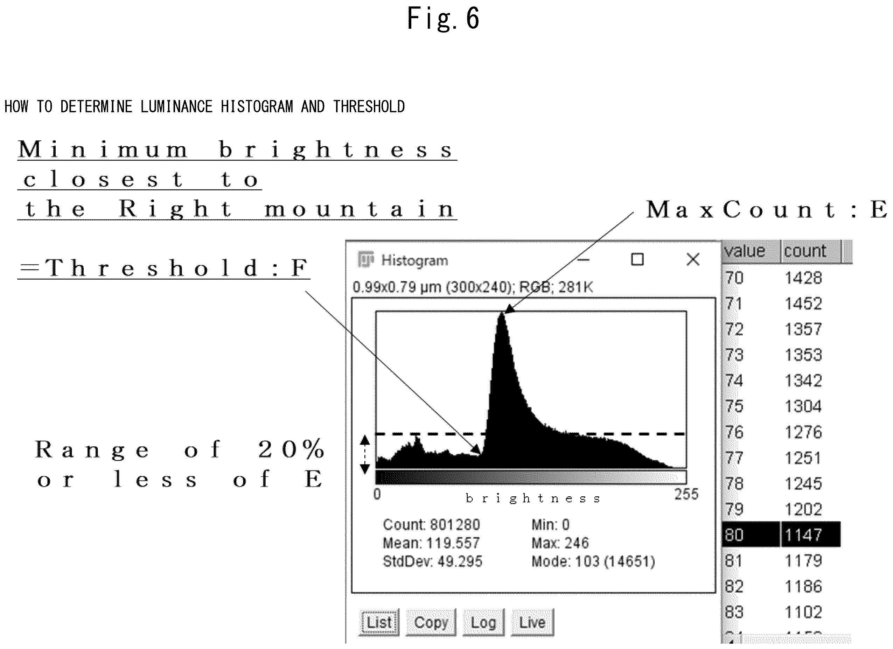

The threshold is then set using FIG. 5, for binarization processing. Specifically, "Analysis" → "Histogram" is selected, and as shown in FIG. 5, a graph representing number (ordinate) with respect to brightness (abscissa) in tones from 0 to 255 is used with "List". As shown in FIG. 6, the number E of maximum peaks at the center of the histogram is read off from "List". A brightness threshold F is read off from the List, as the brightness F corresponding to a number of ≤20% of E in the direction toward 0 brightness from the peak top (the left side of the peak), and corresponding to the nearest minimum to the peak.

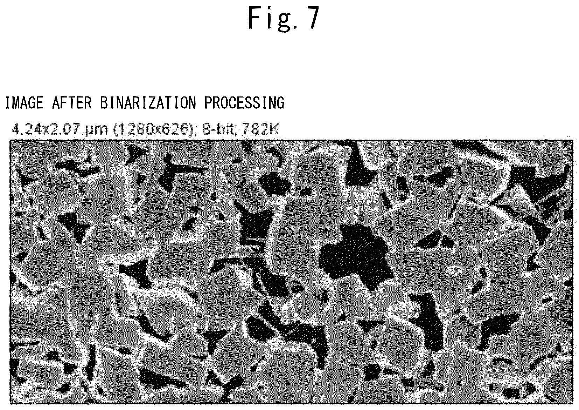

Next, "Image" → "Adjust" → "Threshold" is selected. "Set" is pressed, the "Lower threshold level" is set to 0, the brightness F (threshold) is inputted as the "Upper threshold level", and "OK" is clicked. FIG. 7 is obtained with black shading of the pore sections of the image of FIG. 5.

Next, binarization processing is carried out. Specifically, "Analyze" → "Analyze particles" is selected, "0.001-Infinity" is inputted for "Size ($\mu$m$^2$)" and "Display results" "Clear results" "Exclude on edges" "Include holes" "Add to Manager" are all checked, after which "OK" is clicked to obtain the number of pores X of 0.001 $\mu$m$^2$ or more and the area value of each hole, for the visual field area U $\mu$m$^2$.

The number of pores in a 10 $\mu$m$^2$ visual field is calculated for the obtained number of pores X and the visual field area U $\mu$m$^2$.

The number of pores of 0.001 $\mu$m$^2$ or more and 0.05 $\mu$m$^2$ or less is then also calculated, and the proportion of the number of pores of 0.001 $\mu$m$^2$ or more and 0.05 $\mu$m$^2$ or less with respect to the total number of pores X is calculated.

In this method, the number of pores in the 10 $\mu$m$^2$ visual field, and the number of pores of 0.001 $\mu$m$^2$ or more and 0.05 $\mu$m$^2$ or less with respect to the total number of pores X, are both calculated from the three images, and their averages are defined as the number of pores S and the proportion T of the number of pores of 0.001 $\mu$m$^2$ or more and 0.05 $\mu$m$^2$ or less with respect to the total number of pores X.

<Coverage Area Ratio (%) of Thermoplastic Polymer-Containing Layer with respect to Substrate Surface or Inorganic Filler-Containing Layer>

The coverage area ratio of the coating pattern of the thermoplastic polymer-containing layer to the substrate or inorganic filler-containing layer surface was measured using a microscope (model: VHX-7000 by Keyence Corp.). The separator sample was photographed (coaxial lighting) at a magnification of 30 times, and the automatic area measurement in the measurement mode was selected to measure the coverage area ratio of the thermoplastic polymer. The coverage area ratio for each sample was calculated by the arithmetic average value of three measurements.

<Measurement of Average Height of Dots>

The separator sample was subjected to cross-section processing with a BIB (broad ion beam). The cross-section processing was carried out with an IM4000 by Hitachi High-Technologies Corp., under processing conditions with an argon beam species, an acceleration voltage of 3 kV and a beam current of 25 to 35 $\mu$A. In order to reduce heat damage during processing, the multilayer porous membrane on which the thermoplastic polymer-containing layer was dot-coated was cooled as necessary just before processing. Specifically, the multilayer porous membrane was left to stand for whole day and night in a cooling device at -40°C. This allowed a smooth cross-section of the separator to be obtained.

The height of the thermoplastic polymer-containing layer was measured using a scanning electron microscope (SEM) (Model S-4800 by Hitachi Corp.). The sample was subjected to osmium vapor deposition, and then observed under conditions with an acceleration voltage of 1.0 kV and a magnification of 5,000 times, measuring the maximum thickness of the thermoplastic polymer-containing layer at 5 observed points and calculating the average value as the average height. In the case of a dot pattern, the distance from the substrate surface to the dot apex along the thickness direction of the thermoplastic polymer-containing layer is used as the maximum dot thickness for calculation of the average dot height by the same method described above.

<Measurement of Coating Layer Thickness of Thermoplastic Polymer-Containing Layer>

The separator sample was subjected to cross-section processing with a BIB (broad ion beam). The cross-section processing was carried out with IM4000 manufactured by Hitachi High-Technologies Corp., under processing conditions with an argon beam species, an acceleration voltage of 3 kV and a beam current of 25 to 35 μA. In order to reduce heat damage during processing, the sample was cooled as necessary just before processing. Specifically, the sample is left to stand for whole day and night in a cooling device at -40° C. This allowed a smooth cross-section of the separator to be obtained.

The height of the thermoplastic polymer-containing layer was measured using a scanning electron microscope (SEM) (Model S-4800, manufactured by Hitachi, Ltd.). The sample was vapor-deposited with osmium and observed under conditions with osmium vapor deposition, an acceleration voltage of 1.0 kV and a magnification of 5,000 times, and the thickness of the polyolefin microporous membrane and the thickness of the inorganic filler-containing layer were measured at five observation points and each arithmetic average value was calculated.

The thickness of the thermoplastic polymer-containing layer was calculated by subtracting the thickness of the polyolefin microporous membrane and the thickness of the inorganic filler-containing layer calculated by the above-mentioned method from the total thickness of the separator obtained by measurement at room temperature (23±2°C) using a micro thickness tester "KBM (trademark)" manufactured by Toyo Seiki Seisaku-sha, Ltd.

<Measurement of Contact Angle Between Substrate or Inorganic Filler-Containing Layer and Adhesive Coating Solution>

Using a contact angle meter (CA-V) (model name) manufactured by Kyowa Interface Science Co., Ltd., 2 μL of each slurry (a coating solution) was dropped onto a clean substrate surface (which may be optionally surface-treated as necessary) or the surface of the inorganic filler-containing layer, and the contact angle was measured after the lapse of 40 seconds.

<Positive Electrode and Negative Electrode for Adhesion Test and Injectability Test of Separator>

Positive electrode (manufactured by Enertech, positive electrode material: $LiCoO_2$, conductive aid: acetylene black, L/W: 36 mg/cm$^2$ for both sides, Al current collector thickness: 15 μm)

Negative electrode (manufactured by Enertech, negative electrode material: graphite, conductive aid: acetylene black, L/W: 20 mg/cm$^2$ for both sides, Cu current collector thickness: 10 μm, thickness of negative electrode after pressing: 140 μm).

<Preparation of Electrolyte Solution for Adhesion Test of Separator>

An electrolyte solution was prepared by dissolving $LiPF_6$ as a solute in a mixed solvent of ethylene carbonate (EC): ethyl methyl carbonate (EMC) = 1:2 (volume ratio) containing 1% by weight vinylene carbonate so that the concentration became 1 mol/L.

<Fabrication of Positive Electrode and Negative Electrode for Rate Characteristic Test and Cycle Characteristic Test>

After mixing 90.4% by weight of nickel, manganese and cobalt complex oxide (NMC) (Ni:Mn:Co = 1:1:1 (element ratio), density: 4.70 g/cm$^3$), as the positive electrode active material, 1.6% by weight of graphite powder (KS6) (density: 2.26 g/cm$^3$, number-average particle size: 6.5 μm) and 3.8% by weight of acetylene black powder (AB) (density: 1.95 g/cm$^3$, number-average particle size: 48 nm), as conductive aids, and 4.2% by weight of polyvinylidene fluoride (PVDF) (density: 1.75 g/cm$^3$) as a binder, the mixture was dispersed in N-methylpyrrolidone (NMP) to prepare a slurry. The slurry was coated using a die coater onto one side of a 20 μm-thick aluminum foil sheet as the positive electrode collector, and dried at 130°C for 3 minutes, after which it was compression molded using a roll press, to fabricate a positive electrode. The coating amount of the positive electrode active material was 109 g/m$^2$.

In purified water there were dispersed 87.6% by weight of graphite powder A (density: 2.23 g/cm$^3$, number-average particle size: 12.7 $\mu$m) and 9.7% by weight of graphite powder B (density: 2.27 g/cm$^3$, number-average particle size: 6.5 $\mu$m) as negative electrode active materials, and 1.4% by weight (solid content conversion) of carboxymethyl cellulose ammonium salt (1.83% by weight solid concentration aqueous solution) and 1.7% by weight (solid content conversion) of diene rubber latex (40% by weight solid concentration aqueous solution) as binders, to prepare a slurry. The slurry was coated using a die coater onto one side of a 12 $\mu$m-thick copper foil sheet as the negative electrode collector, and dried at 120°C for 3 minutes, after which it was compression molded using a roll press to fabricate a negative electrode. The coating amount of the negative electrode active material was 5.2 g/m$^2$.

<Preparation of Non-Aqueous Electrolyte Solution for Rate Characteristic Test and Cycle Characteristic Test>

A non-aqueous electrolyte solution was prepared by dissolving LiPF$_6$, as a solute, in a mixed solvent of ethylene carbonate containing 1% by weight vinylene carbonate:ethylmethyl carbonate = 1:2 (volume ratio) so that the concentration became 1.0 mol/L.

<Battery Assembly>

Separators or substrates were each cut out into a 24 mm$\varphi$ circular shape, and positive electrode and negative electrodes for the measurement of rate characteristics and cycle characteristics were cut out into 16 mm$\varphi$ circular shapes. The negative electrode, separator or substrate and positive electrode were stacked in that order with the active material sides of the positive electrode and negative electrode facing each other, and then inserted into a covered stainless steel metal container. The container and cover were insulated, with the container in contact with the negative electrode copper foil and the cover in contact with the positive electrode aluminum foil. The non-aqueous electrolyte solution for the measurement of rate characteristics and cycle characteristics was injected into the container at 0.4 ml and sealed to assemble a simple battery (power storage device).

<Adhesion 1 to Electrodes (Adhesive Strength D1 and D2)>

The separators for an electricity storage device obtained for each of the Examples and Comparative Examples were each cut out into rectangular shapes having a width of 20 mm and a length of 70 mm.

The positive electrodes or negative electrodes as adherends were each cut out into rectangular shapes having a width of 15 mm and a length of 60 mm. These were stacked with the thermoplastic polymer-containing layer of the separator facing the positive electrode active material or the negative electrode active material of the positive electrode or the negative electrode to obtain a stacked body. Each stacked body was then pressed under the following conditions.

    Press pressure: 1 MPa
    Temperature: 100°C
    Pressing time: 30 seconds

For each of the pressed stacked bodies, the force gauge ZP5N (product name) by Imada Co., Ltd., and MX2-500N (product name) by Imada Co., Ltd. were used for a 90° peel test at a peel rate of 50 mm/min, with a pulling system in which the electrodes were anchored and the separator held and pulled to measure the peel strength.

The peel strength from the positive electrode is defined as D1, and the peel strength from the negative electrode is defined as D2.

However, for a separator having an inorganic filler-containing layer on only one side of a polyolefin substrate, the peel strength between the thermoplastic polymer layer on the inorganic filler-containing layer side and the positive electrode is defined D1, and the peel strength between the thermoplastic polymer layer on the polyolefin substrate side and the negative electrode is defined D2.

For separators having a thermoplastic polymer-containing layer that serves as an adhesive layer on only one side of a polyolefin substrate, the peel strengths of the thermoplastic polymer-containing layer and both the positive electrode and the negative electrode are measured, and the peel strength between the thermoplastic polymer layer and the positive electrode is defined as D1, and the peel strength between the thermoplastic polymer-containing layer and the negative electrode is defined as D2.

For other samples, when the values are the same on both sides of the separator to be measured, that value is used; when they are different, the larger value is used as the measured value and is defined as D1 or D2.

<Adhesion 2 to Electrodes (Adhesive Strength W1 and W2)>

The separators for an electricity storage device obtained for each of the Examples and Comparative Examples were each cut out into rectangular shapes having a width of 20 mm and a length of 70 mm. The positive electrode or negative electrode to be used as the adherend was cut out into a rectangular shape having a width of 15 mm and a length of 60 mm. These were stacked with the thermoplastic polymer-containing layer of the separator facing the positive electrode active material or the negative electrode active material of the positive electrode or the negative electrode to obtain a stacked body, which was placed in a rectangular aluminum pouch having a width of 60 mm and a length of 120 mm, and 0.4 mL of an electrolyte solution at 25°C was added, and after leaving to stand at 25°C for 12 hours, the aluminum pouch containing the stacked body was then pressed under the following conditions.

Press pressure: 0.5 MPa
Temperature: 45°C
Pressing time: 30 minutes

For each of the pressed stacked bodies, the force gauge ZP5N (product name) by Imada Co., Ltd., and MX2-500N (product name) by Imada Co., Ltd. were used for a 90° peel test at a peel rate of 50 mm/min, with a pulling system in which the electrodes were anchored and the separator held and pulled to measure the peel strength.
The peel strength from the positive electrode is defined as W1, and the peel strength from the negative electrode is defined as W2.
However, for a separator having an inorganic filler-containing layer on only one side of a polyolefin substrate, the peel strength between the thermoplastic polymer layer on the inorganic filler-containing layer side and the positive electrode is defined W1, and the peel strength between the thermoplastic polymer layer on the polyolefin substrate side and the negative electrode is defined W2.
For separators having a thermoplastic polymer-containing layer that serves as an adhesive layer on only one side of a polyolefin substrate, the peel strengths of the thermoplastic polymer-containing layer and both the positive electrode and the negative electrode are measured, and the peel strength between the thermoplastic polymer layer and the positive electrode is defined as W1, and the peel strength between the thermoplastic polymer-containing layer and the negative electrode is defined as W2.
For other samples, when the values are the same on both sides of the separator to be measured, that value is used; when they are different, the larger value is used as the measured value and is defined as W1 or W2.

<Adhesion 3 to Electrodes (Adhesive Strength W3 and W4)>

The separators for an electricity storage device obtained for each of the Examples and Comparative Examples were each cut out into rectangular shapes having a width of 20 mm and a length of 70 mm. The positive electrode or negative electrode to be used as the adherend was cut out into a rectangular shape having a width of 15 mm and a length of 60 mm. These were stacked with the thermoplastic polymer-containing layer of the separator facing the positive electrode active material or the negative electrode active material of the positive electrode or the negative electrode to obtain a stacked body, which was placed in a rectangular aluminum pouch having a width of 60 mm and a length of 120 mm, and 0.4 mL of an electrolyte solution at 25°C was added, and after leaving to stand at 25°C for 12 hours, the aluminum pouch containing the stacked body was then pressed under the following conditions.

Press pressure: 1 MPa
Temperature: 90°C
Pressing time: 1 minute

For each of the pressed stacked bodies, the force gauge ZP5N (product name) by Imada Co., Ltd., and MX2-500N (product name) by Imada Co., Ltd. were used for a 90° peel test at a peel rate of 50 mm/min, with a pulling system in which the electrodes were anchored and the separator held and pulled to measure the peel strength.
The peel strength from the positive electrode is defined as W3, and the peel strength from the negative electrode is defined as W4.
However, for a separator having an inorganic filler-containing layer on only one side of a polyolefin substrate, the peel strength between the thermoplastic polymer layer on the inorganic filler-containing layer side and the positive electrode is defined W3, and the peel strength between the thermoplastic polymer layer on the polyolefin substrate side and the negative electrode is defined W4.
For separators having a thermoplastic polymer-containing layer that serves as an adhesive layer on only one side of a polyolefin substrate, the peel strengths of the thermoplastic polymer-containing layer and both the positive electrode and the negative electrode are measured, and the peel strength between the thermoplastic polymer layer and the positive electrode is defined as W3, and the peel strength between the thermoplastic polymer-containing layer and the negative electrode is defined as W4.

For other samples, when the values are the same on both sides of the separator to be measured, that value is used; when they are different, the larger value is used as the measured value and is defined as W3 or W4.

<Adhesive Force between Separator and Electrodes in Eelectricity Storage Device>

A stacked body of the separator and the electrodes is removed from the electricity storage device (which may be before or after a rate characteristic evaluation test and a cycle characteristic evaluation test), and the laminated portions of the positive electrode and the separator, and the negative electrode and the separator are cut out into rectangular shapes having a width of 15 mm and a length of 60 mm. For each of the stacked bodies, ZP5N and MX2-500N force gauges manufactured by Imada Co., Ltd. were used for a 90° peel test at a peel rate of 50 mm/min, with a pulling system in which the electrodes were anchored and the separator held and pulled to determine the peel strength.

The peel strength from the positive electrode is defined as Ad1, and the peel strength from the negative electrode is defined as Ad2.

The adhesive strengths Ad1 and Ad2 may be the ratio of the adhesive strength of the separator and electrode stacked body itself taken out from inside the battery, or the separator taken out from the electricity storage device may be isolated, washed and dried, and then measured in the same manner as W1 and W2, and the result may fall within the above range.

<Injectability of Electrolyte Solution>

The separators for an electricity storage device obtained in each of the Examples and Comparative Examples, and negative electrodes as adherends were each cut out into rectangular shapes having a width of 15 mm and a length of 60 mm. These were stacked with the thermoplastic polymer-containing layer of the separator facing the negative electrode active material to obtain a stacked body. The stacked body was then pressed under the following conditions.

Press pressure: 1 MPa
Temperature: 90°C
Pressing time: 5 seconds

Each pressed stacked body was sandwiched between two glass plates (S1214 by Matsunami Glass Ind., Ltd., size: 76 × 26 mm, thickness: 1.2 to 1.5 mm), anchored with clips (JB34c by Kokuyo Co., double clip (medium), silver, opening width: 25 mm) at both sides and the top, for a total of 3 points, and then immersed in an electrolyte solution (LBG-00307 by Kishida Chemical Co., Ltd., ethylene carbonate (EC):diethyl carbonate (DEC) = (2:3 volume/volume %)). The sections where the electrolyte solution permeated the separator and electrode surface were visually observed, and the time required for permeation of the total surface was defined as the injection completion time. In an electricity storage device using a separator that achieves an injection completion time of 20 minutes or less obtained by this method, electrolyte solution penetration at the interfaces with the opposing the positive electrode and the negative electrode becomes satisfactory, and the injectability of the entire cell is improved.

<Evaluation Criteria>

A (Good): The injection completion time is 15 minutes or less.
B (Acceptable): The injection completion time is more than 15 minutes and 20 minutes or less.
C (Poor): The injection completion time is more than 20 minutes.

<Blocking Resistance>

The separators for an electricity storage device including an inorganic filler-containing layer obtained in each of the Examples and Comparative Examples were each cut out into rectangular shapes having a width of 20 mm and a length of 70 mm. The two separators were then stacked so that the front and back of each separator were stacked, and pressed under the following conditions.

Press pressure: 1 MPa

Temperature: 50°C
Pressing time: 1 minute

For each of the pressed stacked bodies, the force gauge ZP5N (product name) by Imada Co., Ltd., and MX2-500N (product name) by Imada Co., Ltd. were used for a 90° peel test at a peel rate of 50 mm/min, with a pulling system in which the electrodes were anchored and the separator held and pulled to measure the peel strength. The peeled surface was photographed (coaxial lighting) at a magnification of 50 times using a microscope (model: VHX-7000, manufactured by Keyence Corporation), and the blocking resistance was evaluated according to the following criteria.

<Evaluation Criteria>

A (Extremely Good): 0 points where the inorganic filler-containing layer from one side is adhered to the other side.
B (Good): 1 to 2 points where the inorganic filler-containing layer from one side is adhered to the other side.
C (Poor): 3 to 5 points where the inorganic filler-containing layer from one side is adhered to the other side.
D (Extremely Poor): 5 or more points where the inorganic filler-containing layer from one side is adhered to the other side.

<Rate Characteristics>

Each simple battery assembled was subjected to initial charging after fabrication of the battery (initial charging) for a total of approximately 6 hours by a method of charging to a cell voltage of 4.2 V at a current value of 3 mA (approximately 0.5C) at 25°C, and then beginning to draw out a current of 3 mA while maintaining 4.2 V. The battery was then discharged to a cell voltage of 3.0 V at a current value of 3 mA. This was followed by charging for a total of approximately 3 hours, by a method of charging to a cell voltage of 4.2 V at a current value of 6 mA (approximately 1.0 C) at 25°C, and then beginning to draw out a current of 6 mA while maintaining 4.2 V. The service capacity after discharge to a cell voltage of 3.0 V at a current value of 6 mA was defined as the 1C service capacity (mAh). This was followed by charging for a total of approximately 3 hours, by a method of charging to a cell voltage of 4.2 V at a current value of 6 mA (approximately 1.0 C) at 25°C, and then beginning to draw out a current of 6 mA while maintaining 4.2 V. The service capacity after discharge to a cell voltage of 3.0 V at a current value of 12 mA (approximately 2.0 C) was defined as the 2C service capacity (mAh). Then, the ratio of the 2C discharge capacity to the 1C discharge capacity was calculated, and this value was defined as the rate characteristics. When a simple battery is charged and discharged at a temperature of 25°C, a current value of 6 mA is approximately 1C.

$$\text{Rate characteristics } (\%) = (2C \text{ discharge capacity}/1C \text{ discharge capacity}) \times 100$$

A (Good): Rate characteristics of more than 85%
B (Acceptable): Rate characteristics of more than 80% and 85% or less
C (Poor): Rate characteristics of 80% or less

<High Rate Characteristics>

Each simple battery assembled was subjected to initial charging after fabrication of the battery (initial charging) for a total of approximately 6 hours by a method of charging to a cell voltage of 4.2 V at a current value of 3 mA (approximately 0.5C) at 25°C, and then beginning to draw out a current of 3 mA while maintaining 4.2 V. The battery was then discharged to a cell voltage of 3.0 V at a current value of 3 mA. The discharge capacity at this time was defined as an initial battery capacity (mAh).

This was followed by charging for a total of approximately 3 hours, by a method of charging to a cell voltage of 4.2 V at a current value of 6 mA (approximately 1.0 C) at 25°C, and then beginning to draw out a current value of 6 mA while maintaining 4.2 V. The discharge capacity after discharge to a cell voltage of 3.0 V at a current value of 30 mA was defined as the 5C discharge capacity (mAh).

$$\text{High rate characteristics } (\%) = (5C \text{ discharge capacity}/\text{initial battery capacity}) \times 100$$

Evaluation criteria

A (Good): High rate characteristics of more than 50%
B (Acceptable): High rate characteristics of more than 30% and 50% or less
C (Poor): High rate characteristics of 30% or less

<Capacity Retention Ration after Storage Test at 60°C>

Each battery after initial charging was subjected to constant-current charging to a voltage of 4.2 V at a current value of 1/3 C, and then constant voltage charging at 4.2 V for 8 hours, followed by discharge at a current of 1/3 C to a final voltage of 3.0 V. After carrying out constant-current charge to a voltage of 4.2 V at a current value of 1 C, the battery was stored at 60°C for 6 weeks.

The pretreated battery was discharged at a discharge current of 1A to a final discharge voltage of 3 V at a temperature of 25°C, and then charged to a charge end voltage of 4.2 V at a charge current of 1 A. This operation was repeated 1 cycle, and this operation was repeated 60 cycles. The cycle characteristics were evaluated based on the capacity retention ratio with respect to the initial capacity (the capacity at the first cycle) according to the following criteria.

<Evaluation criteria>

A (Very good): Capacity retention ratio of 90% or more and 100% or less
B (Good): Capacity retention ratio of 85% or more and less than 90%
C (Poor): Capacity retention ratio of 80% or more and less than 85%
D (Very poor): Capacity retention ratio of less than 80%

<Cycle Characteristics>

The battery subjected to the test of <Rate Characteristics> was discharged at a discharge current of 1 C to a discharge end voltage of 3 V at a temperature of 45°C, and then charged to a charge end voltage of 4.2 V at a charge current of 1 C. This operation was repeated 1 cycle, and charging and discharging were repeated. The cycle characteristics were evaluated based on the capacity retention ratio after 300 cycles with respect to the initial capacity (the capacity at the first cycle) according to the following criteria.

A (Good): Capacity retention ratio of 65% or more
B (Acceptable): Capacity retention ratio of 60% or more and less than 65%
C (Poor): Capacity retention ratio of less than 60%

<Preparation of Thermoplastic Polymer>

<Preparation of Thermoplastic Polymer A1>

In a reactor equipped with a stirrer, a reflux condenser, a drip tank and a thermometer 70.4 parts by weight of ion-exchanged water, 0.5 part by weight of "AQUALON KH1025" as an emulsifier, and 0.5 part by weight of "ADEKA REASOAP SR1025" were charged as first charge. The internal temperature of the reactor was then raised to 95°C, and 7.5 parts by weight of ammonium persulfate (2% aqueous solution) listed as "APS (aq)" in the tables, same hereinafter) was added while keeping the temperature at 95°C.

Meanwhile, 0.1 part by weight of methacrylic acid (MAA), 0.1 part by weight of acrylic acid (AA), 38.5 parts by weight of methyl methacrylate (MMA), 19.6 parts by weight of n-butyl acrylate (BA), 31.9 parts by weight of 2-ethylhexyl acrylate (EHA), 2 parts by weight of 2-hydroxyethyl methacrylate (HEMA), 5 parts by weight of acrylamide (AM), 2.8 parts by weight of glycidyl methacrylate (GMA), 0.7 part by weight of trimethylpropane triacrylate (A-TMPT) (manufactured by Shin-Nakamura Chemical Co., Ltd.), 0.3 part by weight of $\gamma$-methacryloxypropyltrimethoxysilane (AcSi), 3.0 parts by weight of KH1025, 3.0 parts by weight of SR1025, 0.05 part by weight of sodium p-styrenesulfonate (NaSS), 7.5 parts by weight of ammonium persulfate (2% aqueous solution), and 52 parts by weight of ion-exchanged water were mixed for 5 minutes using a homomixer to prepare an emulsion. The resulting emulsion was added dropwise from the drip tank to the reaction vessel. Dropwise addition was started 5 minutes after adding the aqueous ammonium persulfate solution to the reaction vessel, and the entire amount of the emulsion was added dropwise over 150 minutes. During the dropwise addition of the emulsion, the temperature inside the vessel was maintained at 80°C. At this time, a stirring bar placed in the reaction vessel was constantly stirred by a magnetic stirrer.

After completion of the dropwise addition of the emulsion, the internal temperature of the reaction vessel was kept for 90 minutes while maintaining at 80°C, followed by cooling to room temperature to prepare an emulsion. The obtained emulsion was adjusted to a pH of 9.0 with an aqueous ammonium hydroxide solution (25% aqueous solution) to obtain an acrylic copolymer latex having a concentration of 40% (thermoplastic polymer A1). For the obtained thermoplastic polymer A1, the glass transition temperature (Tg) and the volume average particle size ($D_{50}$) of the thermoplastic polymer contained therein were evaluated by the above methods. The results obtained are shown in the table below.

<Preparation of Aqueous Dispersions of Particulate Polymers A2 to A7>

The thermoplastic polymers A2 to A7 were obtained in the same manner as in the thermoplastic polymer A1, except that the composition of the emulsion was changed as shown in the table below, and physical properties were evaluated. The results obtained are shown in the table below.

<Explanation of Abbreviations in Tables>

Emulsifiers

KH1025: "AQUALON KH1025" registered trademark, manufactured by Dai-ichi Kogyo Seiyaku Co., Ltd., 25% aqueous solution
SR1025: "ADEKA REASOAP SR1025" registered trademark, manufactured by ADEKA Corporation, 25% aqueous solution
NaSS: Sodium p-styrenesulfonate

Initiator

APS (aq): Ammonium persulfate (2% aqueous solution)

Monomers

MAA: Methacrylic acid
AA: Acrylic acid
MMA: Methyl methacrylate
BA: n-Butyl acrylate
EHA: 2-Ethylhexyl acrylate
CHMA: Cyclohexyl methacrylate
St: Styrene
AN: Acrylonitrile
HEMA: 2-Hydroxyethyl methacrylate
AM: Acrylamide
GMA: Glycidyl methacrylate
A-TMPT: Trimethylolpropane triacrylate
AcSi: $\gamma$-Methacryloxypropyltrimethoxysilane

Antifoaming agent

S1: "KM-73", Shin-Etsu Chemical Co., Ltd.
S2: "SK-14", Nissin Chemical Co., Ltd.

<Example 1>

(Production of Polyolefin Microporous Membrane B1)

47 parts by weight of high-density polyethylene homopolymer having an Mv of 700,000, 46 parts by weight of high-density polyethylene homopolymer having an Mv of 300,000, and 7 parts by weight of polypropylene homopolymer having an Mv of 700,000 were dry blended using a tumbler blender. To 99 parts by weight of the obtained polyolefin mixture there was added 1 part by weight of tetrakis-[methylene-(3',5'-di-t-butyl-4'-hydroxyphenyl)propionate]methane as an antioxidant, and a tumbler blender was again used for dry blending to obtain a mixture. The obtained mixture was supplied to a twin-screw extruder using a feeder, under a nitrogen atmosphere. Liquid paraffin (kinematic viscosity at 37.78°C: 7.59 $\times$ 10$^{-5}$m$^2$/s) was also injected into the extruder cylinder by a plunger pump. The operating conditions for the feeder and pump were adjusted for a liquid paraffin content of 68 parts by weight, i.e., a polymer concentration of 32 parts by weight, in the total mixture to be extruded.

The contents were then melt kneaded in the twin-screw extruder while heating to 160°C, the obtained melt kneaded mixture was extruded through a T-die onto a cooling roll controlled to a surface temperature of 80°C, and the extruded mixture was contacted with a cooling roll for casting and cooled to solidification to obtain a cast sheet. The sheet was then stretched by a Tenter Stretching Machine at temperature and stretching ratio conditions that satisfied the physical properties B1 shown in Table 1, and the stretched sheet was immersed in methylene chloride for extraction removal of the liquid paraffin and then dried and stretched by a factor that satisfied the physical properties B1 shown in Table 1. The stretched sheet was then relaxed to about 10% in the transverse direction and subjected to heat treatment to obtain polyolefin microporous membrane B1.

The physical properties (basis weight per side of the membrane, porosity, air permeability, thickness, etc.) of the obtained polyolefin microporous membrane B1 were measured by the methods described above, as necessary.

(Production of Polyolefin Microporous Membranes B2 to B11)

Polyolefin microporous membranes B2 to B11 were obtained in the same manner as B1, except that the production conditions were appropriately changed to satisfy the physical properties shown in Table 1 (basis weight of the membrane, porosity, air permeability, and thickness). The obtained polyolefin microporous membranes B2 to B11 were evaluated by the above methods. The results obtained are also shown in Table 1.

(Dot Coating of Thermoplastic Polymer-Containing Layer on Polyolefin Microporous Membrane)

Inorganic filler-containing layers (first and second layers in the table) were formed on both sides of polyolefin microporous membrane B1 under conditions that resulted in the dot-shaped pattern, coverage area ratio, and basis weight per side shown in the table. Thereafter, thermoplastic polymers A1 and A2 mixed in the ratios shown in the table as a coating solution were applied by gravure printing as dots to the surfaces of both sides of the inorganic filler-containing layer, and the coating solution was dried at 40°C to remove water therefrom while adjusting the conditions of the drive roll so that the tension shown in the table was applied in the MD direction, thus obtaining a separator for an electricity storage device having thermoplastic polymer-containing layers in a dot pattern on both sides of the inorganic filler-containing layer. The obtained separator was evaluated by the above method. The results obtained are also shown in Table 5. The resulting separator had a dot distance of 260 $\mu$m and an average dot height of 2 $\mu$m.

<Examples 2 to 33, Comparative Examples 1 to 2>

Separators for an electricity storage device each including a thermoplastic polymer-containing layer and an inorganic layer-containing layer on one or both sides of a polyolefin microporous membrane were obtained in the same manner as Example 1, except that the conditions including the type of thermoplastic polymer, the dot pattern, the coverage area ratio and the basis weight were changed as shown in the table. Each obtained separator was evaluated by the above methods. The results obtained are also shown in the table. The dot distance of the resulting separator was 100 to 500 $\mu$m, and the average dot height was 0.5 to 3 $\mu$m.

In Examples 32 and 33, the separators had an inorganic filler-containing layer on one side of the polyolefin microporous film (hereinafter referred to as "one side").

Example 32 is an aspect having an inorganic filler layer on one side of a polyolefin microporous membrane, a thermoplastic polymer-containing layer on the surface of the inorganic filler-containing layer, and a polyolefin microporous membrane surface on the other side.

Example 33 is an aspect in which one surface of the polyolefin microporous membrane has an inorganic filler layer, and the other surface has a thermoplastic polymer-containing layer on the surface of the polyolefin microporous membrane.

[Table 1]

| Polyolefin porous substrate No. | B1 | B2 | B3 | B4 | B5 | B6 | B7 | B8 | B9 | B10 | B11 |
|---|---|---|---|---|---|---|---|---|---|---|---|
| Thickness ($\mu$m) | 9 | 8 | 6 | 6 | 12 | 6 | 7 | 4.5 | 5.5 | 4.5 | 9 |
| Basis weight (g/m$^2$) | 4.7 | 4.9 | 3.3 | 3.5 | 6.4 | 3.5 | 4.0 | 2.8 | 3.4 | 3.3 | 5.4 |
| Porosity (%) | 45 | 41 | 42 | 39 | 46 | 39 | 40 | 32 | 33 | 37 | 37 |
| Air permeability (sec/100 cm$^3$) | 100 | 130 | 90 | 120 | 145 | 120 | 125 | 90 | 110 | 140 | 160 |

[Table 2]

| | | C1 | C2 | C3 | C4 | C5 | C6 | C7 |
|---|---|---|---|---|---|---|---|---|
| Inorganic filler material | - | AlO(OH) | AlO(OH) | BaSO$_4$ | AlO(OH) | Al$_2$O$_3$ | AlO(OH) | AlO(OH) |
| Inorganic filler form | - | Block-shaped form | Block-shaped form | Spherical form | Block-shaped form | Block-shaped form | Block-shaped form | Block-shaped form |
| Average particle size D$_{50}$ of inorganic filler (D$_F$) | $\mu$m | 0.4 | 0.6 | 0.3 | 0.3 | 0.7 | 1.2 | 1.5 |

[Table 3]

| | | Name of raw materials | Active component ratio or unit | Polymer | | | | | | |
|---|---|---|---|---|---|---|---|---|---|---|
| | Type | | | A1 | A2 | A3 | A4 | A5 | A6 | A7 |
| Initial charge | Emulsifier | KH1025 | 25% | 0.5 | 0.5 | 0.5 | 0.5 | 0.5 | 0.5 | 0.5 |
| | | SR1025 | 25% | 0.5 | 0.5 | 0.5 | 0.5 | 0.5 | 0.5 | 0.5 |
| | Ion-exchanged water | | --- | 70.4 | 70.4 | 70.4 | 70.4 | 70.4 | 70.4 | 70.4 |
| | Initiator | APS (aq) | 2% | 7.5 | 7.5 | 7.5 | 7.5 | 7.5 | 7.5 | 7.5 |

(continued)

| | Type | Name of raw materials | Active component ratio or unit | Polymer | | | | | | |
|---|---|---|---|---|---|---|---|---|---|---|
| | | | | A1 | A2 | A3 | A4 | A5 | A6 | A7 |
| Emulsion | Ar vinyl compound monomer | St | | 0 | 0 | 0 | 0 | 0 | 33 | 58 |
| | Acid monomer | MAA | 100% | 0.1 | 1 | 1 | 1 | 1 | 1 | 1 |
| | | AA | 100% | 0.1 | 1 | 1 | 1 | 1 | 1 | 1 |
| | (Meth)acrylic acid ester | MMA | 100% | 38.5 | 0 | 0 | 38 | 0 | 0 | 0 |
| | | BA | 100% | 19.6 | 0 | 0 | 0 | 0 | 0 | 0 |
| | | EHA | 100% | 31.9 | 0.5 | 2.5 | 0 | 11 | 12 | 18 |
| | | CHMA | 100% | 0 | 25 | 29 | 33 | 35 | 2 | 9 |
| | Cyano group-containing monomer | AN | 100% | 0 | 71 | 65 | 26 | 50 | 50 | 12 |
| | Functional group-containing monomer | HEMA | 100% | 2 | 0 | 0 | 0 | 0 | 0 | 0 |
| | | AM | 100% | 5 | 0 | 0 | 0 | 0 | 0 | 0 |
| | Crosslinkable monomer | GMA | 100% | 2.8 | 0 | 0 | 0 | 0 | 0 | 0 |
| | | A-TMPT | 100% | 0.7 | 1 | 1 | 1 | 1 | 1 | 1 |
| | | AcSi | 100% | 0.3 | 0.5 | 0.5 | 0.5 | 0.5 | 0.5 | 0.5 |
| | Emulsifier | KH1025 | 25% | 3 | 2 | 2 | 2 | 2 | 2 | 2 |
| | | SR1025 | 25% | 3 | 0 | 0 | 0 | 0 | 0 | 0 |
| | | NaSS | 100% | 0.05 | 0 | 0 | 0 | 0 | 0 | 0 |
| | Initiator | APS (aq) | 2% | 7.5 | 7.5 | 7.5 | 7.5 | 7.5 | 7.5 | 7.5 |
| | Ion-exchanged water | | --- | 52 | 52 | 52 | 52 | 52 | 52 | 52 |
| Physical properties | Glass transition temperature (Tg) | | (°C) | -6 | 95 | 88 | 112 | 65 | 72 | 72 |
| | Degree of swelling | | (factor) | 2 | 8 | 7 | 9 | 10 | 3 | 2 |
| | Viscosity | | (mPa·s) | 40 | 45 | 20 | 60 | 55 | 25 | 70 |
| | Surface tension | | mN/m | 35 | 40 | 25 | 40 | 35 | 40 | 50 |
| | Average particle size $D_{50}$ ($D_P$) | | (nm) | 132 | 550 | 520 | 620 | 590 | 320 | 700 |
| | SD value | | (nm) | 42 | 10 | 11 | 9 | 9 | 17 | 8 |

[Table 4]

| Defoamer No. | S1 | S2 |
|---|---|---|
| Manufacturer | Shin-Etsu Chemical Co., Ltd. | Nissin Chemical Industry Co., Ltd. |
| Trade name | KM-73 | SK-14 |

[Table 5-1]

| | | | | | Example 1 | Example 2 | Example 3 | Example 4 | Example 5 | Example 6 | Example 7 | Example 8 | Example 9 |
|---|---|---|---|---|---|---|---|---|---|---|---|---|---|
| | | Polyolefin microporous membrane | | | B1 | B1 | B1 | B1 | B1 | B1 | B1 | B2 | B3 |
| Membrane configuration | Inorganic filler-containing layer | First layer | Raw material slurry No. | | C1 | C1 | C1 | C1 | C1 | C1 | C1 | C1 | C1 |
| | | | Thickness of coating layer | μm | 1.5 | 1.5 | 1.5 | 1.5 | 1.5 | 1.5 | 1.5 | 3 | 1.5 |
| | | | Pore size proportion T | % | 100 | 99 | 97 | 100 | 98 | 99 | 100 | 96 | 99 |
| | | Second layer | Raw material slurry No. | | C1 | C1 | C1 | C1 | C1 | C1 | C1 | - | - |
| | | | Thickness of coating layer | μm | 1.5 | 1.5 | 1.5 | 1.5 | 1.5 | 1.5 | 1.5 | - | - |
| | | | Pore size proportion T | % | 100 | 99 | 97 | 100 | 98 | 99 | 100 | - | - |
| | Thermoplastic polymer-containing coating solution | First layer | Composition | Raw material polymer No. | A2 | A2 | A3 | A4 | A5 | A2 | A2 | A5 | A2 |
| | | | | Mixing ratio (parts) | 90 | 90 | 90 | 90 | 90 | 90 | 90 | 90 | 90 |
| | | | | Raw material polymer No. | A1 | A1 | A1 | A1 | A1 | A1 | A1 | A1 | A1 |
| | | | | Mixing ratio (parts) | 10 | 10 | 10 | 10 | 10 | 10 | 10 | 10 | 10 |
| | | | | Defoamer No. | - | - | - | - | - | S1 | S2 | - | - |
| | | | | Mixing ratio (parts) | - | - | - | - | - | 0.1 | 0.5 | - | - |
| | | | Coating shape | | Dot-shaped form | Dot-shaped form | Dot-shaped form | Dot-shaped form | Dot-shaped form | Dot-shaped form | Dot-shaped form | Dot-shaped form | Dot-shaped form |
| | | | Coated area ratio | % | 30 | 15 | 30 | 30 | 15 | 30 | 30 | 15 | 45 |
| | | | Coating amount | g/m$^2$ | 0.10 | 0.06 | 0.10 | 0.10 | 0.06 | 0.10 | 0.10 | 0.06 | 0.15 |
| | | | Dot diameter | μm | 220 | 220 | 220 | 220 | 220 | 220 | 220 | 220 | 220 |
| | | | Thickness of coating layer | μm | 0.5 | 0.5 | 0.5 | 0.5 | 0.5 | 0.5 | 0.5 | 0.5 | 0.5 |
| | | | Contact angle to coated surface | ° | 60 | 60 | 55 | 65 | 60 | 55 | 50 | 60 | 60 |
| | | | Tension during drying | N/mm | 0.047 | 0.050 | 0.020 | 0.040 | 0.080 | 0.060 | 0.025 | 0.030 | 0.065 |
| | | | Proportion of dots with two or more points of voids | % | 99 | 98 | 95 | 100 | 98 | 99 | 97 | 97 | 98 |
| | | | Proportion of dots with three or more points of voids | % | 96 | 94 | 88 | 91 | 90 | 98 | 95 | 92 | 95 |
| | | | Proportion of dots with four or more points of voids | % | 72 | 74 | 70 | 75 | 68 | 65 | 60 | 78 | 72 |
| | | | Proportion of dots with five or more points of voids | % | 27 | 20 | 23 | 30 | 18 | 21 | 15 | 25 | 24 |
| | | Second layer | Composition | Raw material polymer No. | A2 | A2 | A3 | A4 | A5 | A2 | A2 | A5 | A2 |
| | | | | Mixing ratio (parts) | 90 | 90 | 90 | 90 | 90 | 90 | 90 | 90 | 90 |
| | | | | Raw material polymer No. | A1 | A1 | A1 | A1 | A1 | A1 | A1 | A1 | A1 |
| | | | | Mixing ratio (parts) | 10 | 10 | 10 | 10 | 10 | 10 | 10 | 10 | 10 |
| | | | | Defoamer No. | - | - | - | - | - | S1 | S2 | - | - |
| | | | | Mixing ratio (parts) | - | - | - | - | - | 0.1 | 0.5 | - | - |
| | | | Coating shape | | dot-shaped form | dot-shaped form | dot-shaped form | dot-shaped form | dot-shaped form | dot-shaped form | dot-shaped form | dot-shaped form | dot-shaped form |
| | | | Coated area ratio | % | 30 | 15 | 30 | 30 | 15 | 30 | 30 | 20 | 50 |
| | | | Coating amount | g/m$^2$ | 0.10 | 0.06 | 0.10 | 0.10 | 0.06 | 0.10 | 0.10 | 0.06 | 0.15 |
| | | | Dot diameter | μm | 220 | 220 | 220 | 220 | 220 | 220 | 220 | 220 | 220 |
| | | | Thickness of coating layer | μm | 0.5 | 0.5 | 0.5 | 0.5 | 0.5 | 0.5 | 0.5 | 0.5 | 0.5 |
| | | | Contact angle to coated surface | ° | 60 | 60 | 55 | 65 | 60 | 55 | 50 | 45 | 50 |
| | | | Tension during drying | N/mm | 0.047 | 0.050 | 0.020 | 0.040 | 0.080 | 0.060 | 0.025 | 0.030 | 0.065 |
| | | | Proportion of dots with two or more points of voids | % | 99 | 98 | 95 | 100 | 98 | 99 | 97 | 99 | 100 |
| | | | Proportion of dots with three or more points of voids | % | 96 | 94 | 88 | 91 | 90 | 98 | 95 | 97 | 97 |
| | | | Proportion of dots with four or more points of voids | % | 72 | 74 | 70 | 75 | 68 | 65 | 60 | 58 | 59 |
| | | | Proportion of dots with five or more points of voids | % | 27 | 20 | 23 | 30 | 18 | 21 | 15 | 11 | 13 |

47

[Table 5-2]

| | | | | | | Example 10 | Example 11 | Example 12 | Example 13 | Example 14 | Example 15 | Example 16 | Example 17 | Example 18 |
|---|---|---|---|---|---|---|---|---|---|---|---|---|---|---|
| | | Polyolefin microporous membrane | | | | B4 | B5 | B7 | B6 | B6 | B1 | B8 | B9 | B10 |
| Membrane configuration | Inorganic filler-containing layer | First layer | | Raw material slurry No. | | C1 | C2 | C1 | C3 | C4 | C1 | C1 | C1 | C1 |
| | | | | Thickness of coating layer | μm | 1.5 | 4 | 1.5 | 1 | 1 | 1.5 | 1.5 | 1.5 | 1.5 |
| | | | | Pore size proportion T | % | 100 | 98 | 97 | 100 | 100 | 99 | 97 | 98 | 96 |
| | | Second layer | | Raw material slurry No. | | - | - | C1 | C3 | C4 | C1 | - | - | - |
| | | | | Thickness of coating layer | μm | - | - | 1.5 | 1 | 1 | 1.5 | - | - | - |
| | | | | Pore size proportion T | % | - | - | 97 | 100 | 100 | 99 | - | - | - |
| | Thermoplastic polymer-containing coating solution | First layer | Composition | Raw material polymer No. | | A2 | A5 | A2 | A2 | A2 | A6 | A2 | A5 | A2 |
| | | | | Mixing ratio | parts | 90 | 90 | 90 | 90 | 90 | 90 | 90 | 90 | 90 |
| | | | | Raw material polymer No. | | A1 | A1 | A1 | A1 | A1 | A1 | A1 | A1 | A1 |
| | | | | Mixing ratio | parts | 10 | 10 | 10 | 10 | 10 | 10 | 10 | 10 | 10 |
| | | | | Defoamer No. | | - | - | - | - | - | - | - | - | - |
| | | | | Mixing ratio | parts | - | - | - | - | - | - | - | - | - |
| | | | Coating shape | | | dot-shaped form | dot-shaped form | dot-shaped form | dot-shaped form | dot-shaped form | dot-shaped form | dot-shaped form | dot-shaped form | dot-shaped form |
| | | | Coated area ratio | | % | 50 | 15 | 30 | 30 | 30 | 30 | 50 | 50 | 45 |
| | | | Coating amount | | g/m$^2$ | 0.20 | 0.06 | 0.10 | 0.10 | 0.10 | 0.10 | 0.20 | 0.20 | 0.15 |
| | | | Dot diameter | | μm | 220 | 220 | 220 | 220 | 220 | 220 | 220 | 220 | 220 |
| | | | Thickness of coating layer | μm | 0.5 | 0.5 | 0.5 | 0.5 | 0.5 | 0.5 | 0.5 | 0.5 | 0.5 |
| | | | Contact angle to coated surface | ° | 60 | 60 | 60 | 55 | 45 | 65 | 50 | 50 | 50 |
| | | | Tension during drying | N/mm | 0.015 | 0.080 | 0.015 | 0.020 | 0.030 | 0.045 | 0.055 | 0.050 | 0.070 |
| | | | Proportion of dots with two or more points of voids | % | 94 | 91 | 100 | 99 | 100 | 95 | 94 | 99 | 96 |
| | | | Proportion of dots with three or more points of voids | % | 85 | 80 | 100 | 97 | 84 | 86 | 88 | 95 | 92 |
| | | | Proportion of dots with four or more points of voids | % | 65 | 68 | 84 | 78 | 51 | 77 | 70 | 79 | 69 |
| | | | Proportion of dots with five or more points of voids | % | 20 | 18 | 21 | 25 | 10 | 23 | 29 | 12 | 19 |
| | | Second layer | Composition | Raw material polymer No. | | A2 | A5 | A2 | A2 | A2 | A6 | A2 | A5 | A2 |
| | | | | Mixing ratio | parts | 90 | 90 | 90 | 90 | 90 | 90 | 90 | 90 | 90 |
| | | | | Raw material polymer No. | | A1 | A1 | A1 | A1 | A1 | A1 | A1 | A1 | A1 |
| | | | | Mixing ratio | parts | 10 | 10 | 10 | 10 | 10 | 10 | 10 | 10 | 10 |
| | | | | Defoamer No. | | - | - | - | - | - | - | - | - | - |
| | | | | Mixing ratio | parts | - | - | - | - | - | - | - | - | - |
| | | | Coating shape | | | dot-shaped form | dot-shaped form | dot-shaped form | dot-shaped form | dot-shaped form | dot-shaped form | dot-shaped form | dot-shaped form | dot-shaped form |
| | | | Coated area ratio | | % | 55 | 20 | 30 | 30 | 30 | 30 | 55 | 55 | 50 |
| | | | Coating amount | | g/m$^2$ | 0.20 | 0.06 | 0.10 | 0.10 | 0.10 | 0.10 | 0.20 | 0.20 | 0.15 |
| | | | Dot diameter | | μm | 220 | 220 | 220 | 220 | 220 | 220 | 220 | 220 | 220 |
| | | | Thickness of coating layer | μm | 0.5 | 0.5 | 0.5 | 0.5 | 0.5 | 0.5 | 0.5 | 0.5 | 0.5 |
| | | | Contact angle to coated surface | ° | 40 | 30 | 60 | 55 | 45 | 65 | 50 | 50 | 50 |
| | | | Tension during drying | N/mm | 0.015 | 0.008 | 0.015 | 0.020 | 0.030 | 0.045 | 0.055 | 0.050 | 0.070 |
| | | | Proportion of dots with two or more points of voids | % | 95 | 100 | 100 | 99 | 100 | 95 | 100 | 97 | 96 |
| | | | Proportion of dots with three or more points of voids | % | 82 | 79 | 100 | 97 | 84 | 86 | 81 | 77 | 93 |
| | | | Proportion of dots with four or more points of voids | % | 54 | 30 | 84 | 78 | 51 | 77 | 74 | 35 | 41 |
| | | | Proportion of dots with five or more points of voids | % | 11 | 9 | 21 | 25 | 10 | 23 | 10 | 7 | 15 |

[Table 5-3]

| | | | | | Example 19 | Example 20 | Example 21 | Example 22 | Example 23 | Example 24 | Example 25 | Example 26 | Example 27 |
|---|---|---|---|---|---|---|---|---|---|---|---|---|---|
| Polyolefin microporous membrane | | | | | B1 | B11 | B1 | B1 | B1 | B1 | B3 | B1 | B1 |
| Membrane configuration | Inorganic filler-containing layer | First layer | Raw material slurry No. | | C5 | - | C1 | C1 | C6 | C1 | C1 | C6 | C6 |
| | | | Thickness of coating layer | μm | 1.5 | - | 1.5 | 1.5 | 1.5 | 1.5 | 1.5 | 2 | 2 |
| | | | Pore size proportion T | % | 93 | - | 99 | 99 | 88 | 98 | 97 | 88 | 88 |
| | | Second layer | Raw material slurry No. | | C5 | - | C1 | C1 | C6 | C1 | - | C6 | C6 |
| | | | Thickness of coating layer | μm | 1.5 | - | 1.5 | 1.5 | 1.5 | 1.5 | - | 2 | 2 |
| | | | Pore size proportion T | % | 93 | - | 99 | 99 | 88 | 98 | - | 88 | 88 |
| | Thermoplastic polymer-containing coating solution | First layer | Composition | Raw material polymer No. | A2 | A2 | A2 | A2 | A7 | A2 | A2 | A2 | A5 |
| | | | | Mixing ratio (parts) | 90 | 90 | 90 | 90 | 90 | 90 | 90 | 90 | 90 |
| | | | | Raw material polymer No. | A1 | A1 | A1 | A1 | A1 | A1 | A1 | A1 | A1 |
| | | | | Mixing ratio (parts) | 10 | 10 | 10 | 10 | 10 | 10 | 10 | 10 | 10 |
| | | | | Defoamer No. | - | - | - | - | - | - | - | - | - |
| | | | | Mixing ratio (parts) | - | - | - | - | - | - | - | - | - |
| | | | Coating shape | | dot-shaped form | dot-shaped form | dot-shaped form | dot-shaped form | dot-shaped form | dot-shaped form | dot-shaped form | dot-shaped form | dot-shaped form |
| | | | Coated area ratio | % | 30 | 35 | 30 | 30 | 30 | 30 | 45 | 30 | 30 |
| | | | Coating amount | g/m$^2$ | 0.10 | 0.10 | 0.10 | 0.10 | 0.10 | 0.10 | 0.15 | 0.10 | 0.10 |
| | | | Dot diameter | μm | 220 | 220 | 220 | 220 | 220 | 220 | 220 | 220 | 220 |
| | | | Thickness of coating layer | μm | 0.5 | 0.5 | 0.5 | 0.5 | 0.5 | 0.5 | 0.5 | 0.5 | 0.5 |
| | | | Contact angle to coated surface | ° | 60 | 25 | 70 | 20 | 30 | 65 | 80 | 30 | 15 |
| | | | Tension during drying | N/mm | 0.060 | 0.047 | 0.008 | 0.030 | 0.040 | 0.150 | 0.010 | 0.007 | 0.100 |
| | | | Proportion of dots with two or more points of voids | % | 99 | 99 | 100 | 90 | 100 | 97 | 94 | 89 | 70 |
| | | | Proportion of dots with three or more points of voids | % | 94 | 92 | 84 | 79 | 84 | 80 | 82 | 61 | 55 |
| | | | Proportion of dots with four or more points of voids | % | 70 | 69 | 51 | 50 | 49 | 48 | 49 | 11 | 30 |
| | | | Proportion of dots with five or more points of voids | % | 25 | 21 | 6 | 5 | 3 | 8 | 7 | 2 | 5 |
| | | Second layer | Composition | Raw material polymer No. | A2 | A2 | A2 | A2 | A7 | A2 | A2 | A2 | A5 |
| | | | | Mixing ratio (parts) | 90 | 90 | 90 | 90 | 90 | 90 | 90 | 90 | 90 |
| | | | | Raw material polymer No. | A1 | A1 | A1 | A1 | A1 | A1 | A1 | A1 | A1 |
| | | | | Mixing ratio (parts) | 10 | 10 | 10 | 10 | 10 | 10 | 10 | 10 | 10 |
| | | | | Defoamer No. | - | - | - | - | - | - | - | - | - |
| | | | | Mixing ratio (parts) | - | - | - | - | - | - | - | - | - |
| | | | Coating shape | | dot-shaped form | dot-shaped form | dot-shaped form | dot-shaped form | dot-shaped form | dot-shaped form | dot-shaped form | dot-shaped form | dot-shaped form |
| | | | Coated area ratio | % | 30 | 35 | 30 | 30 | 30 | 30 | 50 | 30 | 30 |
| | | | Coating amount | g/m$^2$ | 0.10 | 0.10 | 0.10 | 0.10 | 0.10 | 0.10 | 0.15 | 0.10 | 0.10 |
| | | | Dot diameter | μm | 220 | 220 | 220 | 220 | 220 | 220 | 220 | 220 | 220 |
| | | | Thickness of coating layer | μm | 0.5 | 0.5 | 0.5 | 0.5 | 0.5 | 0.5 | 0.5 | 0.5 | 0.5 |
| | | | Contact angle to coated surface | ° | 60 | 25 | 70 | 20 | 30 | 65 | 35 | 30 | 15 |
| | | | Tension during drying | N/mm | 0.060 | 0.047 | 0.008 | 0.030 | 0.040 | 0.150 | 0.010 | 0.007 | 0.100 |
| | | | Proportion of dots with two or more points of voids | % | 99 | 99 | 100 | 100 | 100 | 97 | 91 | 89 | 70 |
| | | | Proportion of dots with three or more points of voids | % | 84 | 92 | 84 | 100 | 84 | 80 | 81 | 61 | 55 |
| | | | Proportion of dots with four or more points of voids | % | 60 | 69 | 51 | 84 | 49 | 48 | 54 | 11 | 30 |
| | | | Proportion of dots with five or more points of voids | % | 10 | 21 | 6 | 5 | 3 | 8 | 10 | 2 | 5 |

[Table 5-4]

| | | | | | Example 28 | Example 29 | Example 30 | Example 31 | Example 32 | Example 33 | Comparative Example 1 | Comparative Example 2 |
|---|---|---|---|---|---|---|---|---|---|---|---|---|
| | | Polyolefin microporous membrane | | | B1 | B3 | B3 | B1 | B3 | B3 | B1 | B3 |
| Membrane configuration | Inorganic filler-containing layer | First layer | Raw material slurry No. | | C6 | C1 | C1 | C6 | C1 | C1 | C7 | C4 |
| | | | Thickness of coating layer | μm | 2 | 1.5 | 1.5 | 2 | 1.5 | 1.5 | 2 | 1.5 |
| | | | Pore size proportion T | % | 88 | 85 | 97 | 95 | 99 | 99 | 85 | 100 |
| | | Second layer | Raw material slurry No. | | C6 | - | - | C6 | - | - | C7 | - |
| | | | Thickness of coating layer | μm | 2 | - | - | 2 | - | - | 2 | - |
| | | | Pore size proportion T | % | 88 | - | - | 95 | - | - | 85 | - |
| | Thermoplastic polymer-containing coating solution | First layer | Composition | Raw material polymer No. | A5 | A2 | A2 | A5 | A2 | - | A6 | A4 |
| | | | | Mixing ratio parts | 90 | 90 | 90 | 90 | 90 | - | 90 | 90 |
| | | | | Raw material polymer No. | A1 | A1 | A1 | A1 | A1 | - | A1 | A1 |
| | | | | Mixing ratio parts | 10 | 10 | 10 | 10 | 10 | - | 10 | 10 |
| | | | | Defoamer No. | - | - | - | - | - | - | - | - |
| | | | | Mixing ratio parts | - | - | - | - | - | - | 0 | 0 |
| | | | Coating shape | | dot-shaped form | dot-shaped form | dot-shaped form | dot-shaped form | dot-shaped form | - | dot-shaped form | dot-shaped form |
| | | | Coated area ratio | % | 30 | 45 | 30 | 30 | 45 | - | 30 | 45 |
| | | | Coating amount | g/m² | 0.10 | 0.15 | 0.10 | 0.10 | 0.15 | - | 0.10 | 0.15 |
| | | | Dot diameter | μm | 220 | 220 | 220 | 220 | 220 | - | 220 | 220 |
| | | | Thickness of coating layer | μm | 0.5 | 0.5 | 0.5 | 0.5 | 0.5 | - | 0.5 | 0.5 |
| | | | Contact angle to coated surface | ° | 15 | 80 | 15 | 15 | 60 | - | 15 | 85 |
| | | | Tension during drying | N/mm | 0.120 | 0.010 | 0.100 | 0.100 | 0.065 | - | 0.160 | 0.180 |
| | | | Proportion of dots with two or more points of voids | % | 50 | 90 | 75 | 75 | 98 | - | 49 | 47 |
| | | | Proportion of dots with three or more points of voids | % | 40 | 75 | 55 | 58 | 95 | - | 39 | 38 |
| | | | Proportion of dots with four or more points of voids | % | 12 | 42 | 30 | 35 | 70 | - | 10 | 9 |
| | | | Proportion of dots with five or more points of voids | % | 3 | 9 | 5 | 5 | 25 | - | 1 | 2 |
| | | Second layer | Composition | Raw material polymer No. | A5 | A2 | A2 | A5 | - | A2 | A6 | A4 |
| | | | | Mixing ratio parts | 90 | 90 | 90 | 90 | - | 90 | 90 | 90 |
| | | | | Raw material polymer No. | A1 | A1 | A1 | A1 | - | A1 | A1 | A1 |
| | | | | Mixing ratio parts | 10 | 10 | 10 | 10 | - | 10 | 10 | 10 |
| | | | | Defoamer No. | - | - | - | - | - | - | - | - |
| | | | | Mixing ratio parts | - | - | - | - | - | - | 0 | 0 |
| | | | Coating shape | | dot-shaped form | dot-shaped form | dot-shaped form | dot-shaped form | - | dot-shaped form | dot-shaped form | dot-shaped form |
| | | | Coated area ratio | % | 30 | 50 | 30 | 30 | - | 50 | 30 | 45 |
| | | | Coating amount | g/m² | 0.10 | 0.15 | 0.10 | 0.10 | - | 0.15 | 0.10 | 0.10 |
| | | | Dot diameter | μm | 220 | 220 | 220 | 220 | - | 220 | 220 | 220 |
| | | | Thickness of coating layer | μm | 0.5 | 0.5 | 0.5 | 0.5 | - | 0.5 | 0.5 | 0.5 |
| | | | Contact angle to coated surface | ° | 15 | 35 | 15 | 15 | - | 50 | 15 | 85 |
| | | | Tension during drying | N/mm | 0.120 | 0.010 | 0.100 | 0.100 | - | 0.065 | 0.160 | 0.180 |
| | | | Proportion of dots with two or more points of voids | % | 50 | 91 | 70 | 75 | - | 100 | 49 | 45 |
| | | | Proportion of dots with three or more points of voids | % | 40 | 78 | 50 | 58 | - | 97 | 39 | 38 |
| | | | Proportion of dots with four or more points of voids | % | 12 | 50 | 30 | 35 | - | 59 | 10 | 9 |
| | | | Proportion of dots with five or more points of voids | % | 3 | 10 | 5 | 5 | - | 13 | 1 | 2 |

[Table 5-5]

| | | | Example 1 | Example 2 | Example 3 | Example 4 | Example 5 | Example 6 | Example 7 | Example 8 | Example 9 |
|---|---|---|---|---|---|---|---|---|---|---|---|
| physical properties | Total thickness | μm | 13.0 | 13.0 | 13.0 | 13.0 | 13.0 | 13.0 | 13.0 | 12.0 | 8.5 |
| | Basis weight | g/m$^2$ | 9.7 | 9.7 | 9.7 | 9.7 | 9.7 | 9.7 | 9.7 | 9.9 | 7.0 |
| | Air permeability | sec/100 cc | 120 | 120 | 120 | 120 | 120 | 120 | 120 | 150 | 110 |
| | Puncture strength | gf | 450 | 450 | 450 | 450 | 450 | 450 | 450 | 380 | 280 |
| | Heat shrinkage ratio at 150°C | % | 1.5 | 1.5 | 1.5 | 1.5 | 1.5 | 1.5 | 1.5 | 1.5 | 1.5 |
| | Dry adhesive force D1 under 1 MPa at 100°C for 30 seconds Facing positive electrode | N/m | 2.1 | 1.5 | 2.0 | 1.8 | 1.1 | 1.7 | 1.5 | 1.8 | 5.3 |
| | Dry adhesive force D2 under 1 MPa at 100°C for 30 seconds Facing negative electrode | N/m | 1.4 | 0.9 | 1.1 | 1.0 | 0.7 | 1.1 | 1.0 | 11.8 | 2.0 |
| | Wet adhesive force W1 under 0.5 MPa at 45°C for 30 minutes Facing positive electrode | N/m | 2.3 | 1.2 | 2.4 | 2.2 | 1.4 | 2.0 | 1.8 | 0.9 | 3.5 |
| | Wet adhesive force W2 under 0.5 MPa at 45°C for 30 minutes Facing negative electrode | N/m | 0.7 | 0.4 | 0.8 | 0.7 | 0.2 | 0.6 | 0.7 | 0.3 | 1.1 |
| | Wet adhesive force W3 under 1 MPa at 90°C for 1 minute Facing positive electrode | N/m | 2.4 | 0.8 | 1.7 | 1.6 | 1.1 | 2.4 | 2.4 | 2.8 | 4.3 |
| | Wet adhesive force W4 under 1 MPa at 90°C for 1 minute Facing negative electrode | N/m | 2.1 | 0.4 | 0.7 | 0.6 | 0.7 | 2.1 | 2.1 | 2.0 | 1.7 |
| | DP/DF | - | 1.4 | 1.4 | 1.3 | 1.6 | 1.5 | 1.4 | 1.4 | 1.5 | 1.4 |
| | Ad1/Ad2 | N/m | 3.3 | 3.0 | 3.0 | 3.1 | 7.0 | 3.3 | 2.6 | 3.0 | 3.3 |
| | Electrolyte solution injectability | - | A | A | A | A | A | A | A | A | A |
| | Blocking resistance | - | A | A | A | A | B | A | A | B | A |
| Battery characteristics | Rate characteristics | | A | A | A | A | A | A | A | A | A |
| | High rate characteristics | | A | A | A | A | A | A | A | A | A |
| | Cycle characteristics | | A | A | A | A | A | A | A | A | A |
| | Capacity retention ratio after storage test at 60°C | | A | A | A | A | A | A | A | C | B |

[Table 5-6]

| | | | Example 10 | Example 11 | Example 12 | Example 13 | Example 14 | Example 15 | Example 16 | Example 17 | Example 18 |
|---|---|---|---|---|---|---|---|---|---|---|---|
| Physical properties | Total thickness | $\mu$m | 8.5 | 17.0 | 9.5 | 9.0 | 9.0 | 13.0 | 7.0 | 8.0 | 6.5 |
| | Basis weight | g/m$^2$ | 7.2 | 13.5 | 8.5 | 9 | 7.5 | 9.7 | 5.5 | 6.5 | 5 |
| | Air permeability | sec/100 cc | 140 | 160 | 110 | 110 | 100 | 120 | 130 | 150 | 120 |
| | Puncture strength | gf | 260 | 490 | 330 | 380 | 380 | 450 | 320 | 360 | 250 |
| | Heat shrinkage ratio at 150°C | % | 1.5 | 2.0 | 1.3 | 1.2 | 2.0 | 1.5 | 0.5 | 1.0 | 1.0 |
| | Dry adhesive force D1 under 1 MPa at 100°C for 30 seconds Facing positive electrode | N/m | 5.5 | 1.3 | 1.5 | 2.7 | 2.0 | 2.2 | 5.8 | 4.3 | 4.4 |
| | Dry adhesive force D2 under 1 MPa at 100°C for 30 seconds Facing negative electrode | N/m | 2.1 | 0.7 | 1.0 | 1.5 | 1.2 | 1.2 | 2.3 | 2.3 | 1.7 |
| | Wet adhesive force W1 under 0.5 MPa at 45°C for 30 minutes Facing positive electrode | N/m | 3.3 | 1.4 | 1.8 | 0.9 | 0.9 | 1.5 | 3.0 | 4.7 | 2.3 |
| | Wet adhesive force W2 under 0.5 MPa at 45°C for 30 minutes Facing negative electrode | N/m | 1.4 | 0.2 | 0.8 | 0.3 | 0.4 | 0.3 | 1.8 | 0.7 | 1.4 |
| | Wet adhesive force W3 under 1 MPa at 90°C for 1 minute Facing positive electrode | N/m | 4.5 | 2.4 | 2.4 | 4.3 | 3.1 | 6.0 | 4.0 | 4.1 | 3.8 |
| | Wet adhesive force W4 under 1 MPa at 90°C for 1 minute Facing negative electrode | N/m | 1.5 | 2.1 | 2.1 | 3.2 | 2.5 | 5.3 | 2.4 | 7.0 | 2.7 |
| | DP/DF | - | 1.4 | 1.0 | 1.4 | 1.8 | 1.8 | 0.8 | 1.4 | 1.5 | 1.4 |
| | Ad1/Ad2 | N/m | 2.4 | 7.0 | 2.3 | 3.0 | 2.3 | 4.5 | 1.7 | 7.0 | 1.7 |
| | Electrolyte solution injectability | - | A | A | A | A | A | A | A | A | A |
| | Blocking resistance | - | A | C | A | A | A | B | A | B | A |

| Battery charac-teristics | | Example 10 | Example 11 | Example 12 | Example 13 | Example 14 | Example 15 | Example 16 | Example 17 | Example 18 |
|---|---|---|---|---|---|---|---|---|---|---|
| | Rate characteristics | A | B | A | A | A | A | A | B | B |
| | High rate characteristics | A | C | A | A | A | A | A | A | A |
| | Cycle characteristics | A | A | A | A | A | A | A | A | A |
| | Capacity retention ratio after storage test at 60°C | B | C | A | A | A | A | B | C | B |

[Table 5-7]

| | | Example 19 | Example 20 | Example 21 | Example 22 | Example 23 | Example 24 | Example 25 | Example 26 | Example 27 |
|---|---|---|---|---|---|---|---|---|---|---|
| | Total thickness | μm | 13.0 | 10.0 | 13.0 | 13.0 | 13.0 | 13.0 | 8.5 | 14.0 | 14.0 |
| | Basis weight | g/m² | 11.2 | 5.5 | 9.7 | 9.7 | 9.7 | 9.7 | 7.0 | 9.5 | 9.5 |
| | Air permeability | sec/100 cc | 120 | 160 | 120 | 120 | 120 | 120 | 110 | 110 | 110 |
| | Puncture strength | gf | 450 | 310 | 450 | 450 | 450 | 450 | 280 | 450 | 450 |
| | Heat shrinkage ratio at 150°C | % | 1.5 | 50.0 | 1.5 | 1.5 | 1.5 | 1.5 | 1.5 | 1.5 | 1.5 |
| physical properties | Dry adhesive force D1 under 1 MPa at 100°C for 30 seconds Facing positive electrode | N/m | 3.2 | 6.0 | 1.8 | 2.0 | 1.1 | 2.3 | 5.4 | 1.1 | 1.3 |
| | Dry adhesive force D2 under 1 MPa at 100°C for 30 seconds Facing negative electrode | N/m | 2.0 | 1.2 | 1.1 | 1.2 | 0.7 | 1.6 | 2.1 | 0.4 | 0.9 |
| | Wet adhesive force W1 under 0.5 MPa at 45°C for 30 minutes Facing positive electrode | N/m | 2.4 | 3.0 | 2.0 | 1.9 | 1.6 | 2.3 | 3.0 | 1.5 | 1.8 |
| | Wet adhesive force W2 under 0.5 MPa at 45°C for 30 minutes Facing negative electrode | N/m | 0.8 | 0.8 | 0.5 | 0.9 | 0.4 | 1.0 | 1.2 | 0.4 | 0.8 |
| | Wet adhesive force W3 under 1 MPa at 90°C for 1 minute Facing positive electrode | N/m | 1.7 | 3.4 | 2.6 | 2.9 | 1.9 | 2.4 | 4.1 | 1.8 | 2.0 |
| | Wet adhesive force W4 under 1 MPa at 90°C for 1 minute Facing negative electrode | N/m | 0.8 | 0.8 | 2.1 | 1.7 | 1.6 | 1.1 | 1.7 | 1.5 | 1.9 |
| | $D_P/D_F$ | - | 0.8 | - | 1.4 | 1.4 | 0.6 | 1.4 | 1.4 | 0.5 | 0.5 |
| | Ad1/Ad2 | N/m | 3.0 | 3.8 | 4.0 | 2.1 | 4.0 | 2.3 | 2.5 | 3.8 | 2.3 |
| | Electrolyte solution injectability | - | A | A | A | A | A | A | A | A | B |
| | Blocking resistance | - | A | - | A | A | B | A | A | C | D |

(continued)

| | | Example 19 | Example 20 | Example 21 | Example 22 | Example 23 | Example 24 | Example 25 | Example 26 | Example 27 |
|---|---|---|---|---|---|---|---|---|---|---|
| Battery characteristics | Rate characteristics | A | A | B | B | B | B | A | B | C |
| | High rate characteristics | A | A | A | A | A | A | A | A | B |
| | Cycle characteristics | A | A | A | A | A | A | B | B | B |
| | Capacity retention ratio after storage test at 60°C | A | D | A | A | B | B | B | A | B |

[Table 5-8]

| | | | Example 28 | Example 29 | Example 30 | Example 31 | Example 32 | Example 33 | Comparative Example 1 | Comparative Example 2 |
|---|---|---|---|---|---|---|---|---|---|---|
| physical properties | Total thickness | μm | 14.0 | 8.5 | 8.5 | 14.0 | 8.0 | 8.0 | 14.0 | 8.5 |
| | Basis weight | g/m² | 9.5 | 7.0 | 9.5 | 9.5 | 6.9 | 6.9 | 9.5 | 9.5 |
| | Air permeability | sec/100 cc | 110 | 110 | 110 | 110 | 110 | 110 | 110 | 110 |
| | Puncture strength | gf | 450 | 280 | 450 | 450 | 280 | 280 | 450 | 450 |
| | Heat shrinkage ratio at150°C | % | 1.5 | 1.5 | 1.5 | 1.5 | 1.5 | 1.5 | 1.5 | 1.5 |
| | Dry adhesive force D1 under 1 MPa at 100°C for 30 seconds Facing positive electrode | N/m | 1.0 | 5.4 | 5.5 | 1.5 | 3.2 | 9.0 | 0.9 | 5.0 |
| | Dry adhesive force D2 under 1 MPa at 100°C for 30 seconds Facing negative electrode | N/m | 0.9 | 2.0 | 2.0 | 1.0 | 2.1 | 1.8 | 0.4 | 1.8 |
| | Wet adhesive force W1 under 0.5 MPa at 45°C for 30 minutes Facing positive electrode | N/m | 1.6 | 3.0 | 3.0 | 1.8 | 3.5 | 4.5 | 0.5 | 3.3 |
| | Wet adhesive force W2 under 0.5 MPa at 45°C for 30 minutes Facing negative electrode | N/m | 0.7 | 1.2 | 1.0 | 1.0 | 1.1 | 1.2 | 0.2 | 1.0 |
| | Wet adhesive force W3 under 1 MPa at 90°C for 1 minute Facing positive electrode | N/m | 1.9 | 4.0 | 4.0 | 2.0 | 3.6 | 5.1 | 1.0 | 4.0 |
| | Wet adhesive force W4 under 1 MPa at 90°C for 1 minute Facing negative electrode | N/m | 1.9 | 1.7 | 2.0 | 1.9 | 3.2 | 1.2 | 0.4 | 1.4 |
| | $D_P/D_F$ | - | 0.2 | 1.4 | 0.5 | 0.5 | 1.4 | 1.4 | 0.5 | 2.1 |
| | Ad1Ad2 | N/m | 2.3 | 2.5 | 3.0 | 1.8 | 3.3 | 3.8 | 2.5 | 3.3 |
| | Electrolyte solution injectability | - | C | A | B | B | A | B | C | C |
| | Blocking resistance | - | D | A | D | D | A | B | D | D |
| Battery characteristics | Rate characteristics | | C | B | B | C | A | A | C | C |
| | High rate characteristics | | B | A | B | B | A | B | C | C |
| | Cycle characteristics | | C | B | B | B | A | A | C | C |
| | Capacity retention ratio after storage test at 60°C | | B | C | B | A | B | B | C | D |

EP 4 571 990 A1

56

REFERENCE SIGNS LIST

10: Porous substrate
11: Inorganic filler-containing layer
11a: Inorganic filler
12: Thermoplastic polymer-containing layer
12a: Thermoplastic polymer

**Claims**

1. A separator for an electricity storage device, comprising:

   a porous substrate, and
   a thermoplastic polymer-containing layer, wherein
   the thermoplastic polymer-containing layer has a dot-shaped pattern structure, and
   dots with two or more points of voids inside the plane of one dot account for 50% or more of all dots.

2. The separator for an electricity storage device according to claim 1, comprising:

   the porous substrate,
   an inorganic filler-containing layer formed on at least one surface of the porous substrate, and
   the thermoplastic polymer-containing layer formed on the surface of the inorganic filler-containing layer.

3. The separator for an electricity storage device according to claim 1, comprising:

   the porous substrate,
   an inorganic filler-containing layer formed on both surfaces of the porous substrate, and
   the thermoplastic polymer-containing layer formed on the surface of the inorganic filler-containing layer.

4. The separator for an electricity storage device according to claim 2 or 3, wherein when an average particle size $D_{50}$ of the thermoplastic polymer contained in the thermoplastic polymer-containing layer is $D_P$, and an average particle size $D_{50}$ of the inorganic filler contained in the inorganic filler-containing layer is $D_F$, $0.6 \leq D_P/D_F \leq 2$.

5. The separator for an electricity storage device according to claim 1, wherein the thermoplastic polymer does not penetrate into the inside of the inorganic filler-containing layer.

6. The separator for an electricity storage device according to claim 1, wherein the adhesive strength D1 as measured after stacking the thermoplastic polymer-containing layer with a positive electrode and pressing under 1 MPa at 100°C for 30 seconds is 0.1 N/m or more and 20 N/m or less, and
   the adhesive strength D2 as measured after stacking the thermoplastic polymer-containing layer with a negative electrode and pressing under 1 MPa at 100°C for 30 seconds is 0.1 N/m or more and 20 N/m or less.

7. The separator for an electricity storage device according to claim 1, wherein the adhesive strength W1 as measured after stacking the thermoplastic polymer-containing layer with a positive electrode in the presence of an electrolyte solution, leaving to stand for 12 hours, and pressing under 0.5 MPa at 45°C for 30 minutes is 0.1 N/m or more and 20 N/m or less, and
   the adhesive strength W2 as measured after stacking the thermoplastic polymer-containing layer with a negative electrode in the presence of an electrolyte solution, leaving to stand for 12 hours, and pressing under 0.5 MPa at 45°C for 30 minutes is 0.1 N/m or more and 20 N/m or less.

8. The separator for an electricity storage device according to claim 1, wherein the adhesive strength W3 as measured after stacking the thermoplastic polymer-containing layer with a positive electrode in the presence of an electrolyte solution, leaving to stand for 12 hours, and pressing under 1 MPa at 90°C for 1 minute is 0.1 N/m or more and 20 N/m or less, and
   the adhesive strength W4 as measured after stacking the thermoplastic polymer-containing layer with a negative electrode in the presence of an electrolyte solution, leaving to stand for 12 hours, and pressing 1 MPa at 90°C for 1 minute is 0.1 N/m or more and 20 N/m or less.

9. The separator for an electricity storage device according to claim 1, wherein the thermoplastic polymer constituting the thermoplastic polymer-containing layer has at least two glass transition temperatures,

at least one of the glass transition temperatures is within a range of 20°C or lower, and
at least one of the glass transition temperatures is within a range of 30°C or higher.

10. The separator for an electricity storage device according to claim 1, wherein the thermoplastic polymer-containing layer contains a copolymer including a monomer unit of a (meth)acrylic acid ester monomer.

11. The separator for an electricity storage device according to claim 1 or 3, which forms a symmetrical layer structure with respect to the porous substrate.

12. A method for producing a separator for an electricity storage device, comprising the steps of:

preparing a porous substrate, and
applying a slurry containing a thermoplastic polymer onto at least one surface of the porous substrate to form a thermoplastic polymer-containing layer,
a contact angle of the slurry with respect to the coated surface of the thermoplastic polymer being 20° or more and 80° or less, and
drying the slurry while applying a tension of 0.008 N/mm or more and 0.150 N/mm or less after applying the slurry containing the thermoplastic polymer onto at least one surface of the porous substrate.

13. An electricity storage device comprising a positive electrode, a negative electrode, the separator for an electricity storage device according to claim 1, and a non-aqueous electrolyte solution.

14. The electricity storage device according to claim 13, wherein when the adhesive force between the separator for an electricity storage device and the positive electrode is Ad1, and the adhesive force between the separator for an electricity storage device and the negative electrode is Ad2, $0.1 \leq Ad1/Ad2 \leq 15$.

# Fig. 1

S-4800 1.0kV 8.0mm x200 SE(M)                    200um

Fig. 2a

Fig. 2b

# Fig. 3

EXAMPLE OF LAYER SELECTION AREA
OF POROUS LAYER

} Exclude 0.2 μm height
from the surface

} Exclude 0.2 μm height
from the interface

: Selection area of porous layer

# Fig. 4

VISUAL FIELD AREA U

$$U = 4.27 \times 2.07 = 8.7768 \, (\mu m^2)$$

# Fig. 5

IMAGE EXAMPLE AFTER GUSIAN BLUR PROCESSING

4.24x2.07 µm (1280x626); 8-bit; 782K

# Fig. 6

HOW TO DETERMINE LUMINANCE HISTOGRAM AND THRESHOLD

<u>Minimum brightness</u>
<u>closest to</u>
<u>the Right mountain</u>

MaxCount:E

<u>=Threshold:F</u>

Range of 20%
or less of E

| value | count |
|---|---|
| 70 | 1428 |
| 71 | 1452 |
| 72 | 1357 |
| 73 | 1353 |
| 74 | 1342 |
| 75 | 1304 |
| 76 | 1276 |
| 77 | 1251 |
| 78 | 1245 |
| 79 | 1202 |
| 80 | 1147 |
| 81 | 1179 |
| 82 | 1186 |
| 83 | 1102 |

Histogram
0.99x0.79 µm (300x240); RGB; 281K

0    brightness    255

Count: 801280     Min: 0
Mean: 119.557     Max: 246
StdDev: 49.295    Mode: 103 (14651)

List   Copy   Log   Live

EP 4 571 990 A1

Fig. 7

IMAGE AFTER BINARIZATION PROCESSING

4.24x2.07 μm (1280x626); 8-bit; 782K

## INTERNATIONAL SEARCH REPORT

| International application No. |
| --- |
| **PCT/JP2023/029167** |

| | |
| --- | --- |
| **A.** | **CLASSIFICATION OF SUBJECT MATTER** |

*H01M 50/449*(2021.01)i; *H01G 9/00*(2006.01)i; *H01G 9/02*(2006.01)i; *H01G 9/035*(2006.01)i; *H01G 9/145*(2006.01)i; *H01G 11/52*(2013.01)i; *H01G 11/58*(2013.01)i; *H01G 11/84*(2013.01)i; *H01M 10/0566*(2010.01)i; *H01M 50/403*(2021.01)i; *H01M 50/414*(2021.01)i; *H01M 50/42*(2021.01)i; *H01M 50/434*(2021.01)i; *H01M 50/443*(2021.01)i; *H01M 50/451*(2021.01)i; *H01M 50/457*(2021.01)i; *H01M 50/46*(2021.01)i; *H01M 50/463*(2021.01)i; *H01M 50/489*(2021.01)i; *H01M 50/494*(2021.01)i

FI: H01M50/449; H01G9/00 290C; H01G9/02; H01G9/035; H01G9/145; H01G11/52; H01G11/58; H01G11/84; H01M10/0566; H01M50/403 D; H01M50/414; H01M50/42; H01M50/434; H01M50/443 B; H01M50/443 C; H01M50/443 E; H01M50/443 M; H01M50/451; H01M50/457; H01M50/46; H01M50/463 A; H01M50/489; H01M50/494

According to International Patent Classification (IPC) or to both national classification and IPC

| | |
| --- | --- |
| **B.** | **FIELDS SEARCHED** |

Minimum documentation searched (classification system followed by classification symbols)

H01M50/449; H01G9/00; H01G9/02; H01G9/035; H01G9/145; H01G11/52; H01G11/58; H01G11/84; H01M10/0566; H01M50/403; H01M50/414; H01M50/42; H01M50/434; H01M50/443; H01M50/451; H01M50/457; H01M50/46; H01M50/463; H01M50/489; H01M50/494

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2015-99777 A (SAMSUNG SDI CO., LTD.) 28 May 2015 (2015-05-28) | 1-14 |
| A | JP 2015-128059 A (ASAHI KASEI E MATERIALS CORP) 09 July 2015 (2015-07-09) | 1-14 |
| A | JP 2017-95698 A (NITTO DENKO CORP) 01 June 2017 (2017-06-01) | 1-14 |
| A | JP 2018-147578 A (ASAHI KASEI CORP) 20 September 2018 (2018-09-20) | 1-14 |
| A | JP 2017-27852 A (ASAHI KASEI CORP) 02 February 2017 (2017-02-02) | 1-14 |
| A | WO 2021/006357 A1 (ASAHI KASEI CORP) 14 January 2021 (2021-01-14) | 1-14 |

☐ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **11 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/029167**

| Patent document cited in search report | | | Publication date (day/month/year) | Patent family member(s) | | | Publication date (day/month/year) |
|---|---|---|---|---|---|---|---|
| JP | 2015-99777 | A | 28 May 2015 | US | 2015/0140403 | A1 | |
| | | | | EP | 2874203 | A1 | |
| | | | | KR | 10-2015-0057481 | A | |
| | | | | CN | 104659311 | A | |
| JP | 2015-128059 | A | 09 July 2015 | JP | 2016-33921 | A | |
| | | | | JP | 2016-201367 | A | |
| | | | | JP | 2016-207659 | A | |
| JP | 2017-95698 | A | 01 June 2017 | US | 2018/0316045 | A1 | |
| | | | | WO | 2017/082418 | A1 | |
| | | | | EP | 3375834 | A1 | |
| | | | | CN | 108350327 | A | |
| JP | 2018-147578 | A | 20 September 2018 | (Family: none) | | | |
| JP | 2017-27852 | A | 02 February 2017 | (Family: none) | | | |
| WO | 2021/006357 | A1 | 14 January 2021 | US | 2022/0285790 | A1 | |
| | | | | EP | 3998155 | A1 | |
| | | | | CN | 114041234 | A | |
| | | | | KR | 10-2022-0018549 | A | |
| | | | | JP | 2022-100309 | A | |

Form PCT/ISA/210 (patent family annex) (January 2015)

# REFERENCES CITED IN THE DESCRIPTION

**Patent documents cited in the description**

- WO 2014017651 A

**Non-patent literature cited in the description**

- Polymer Handbook. Wiley-Interscience Publication